# EUROPEAN PATENT APPLICATION

(11) **EP 1 715 595 A1**
(43) Date of publication of application: **25.10.2006**
(21) Application number: 05704347.3
(22) Date of filing: 26.01.2005
(51) Int. Cl.: H04B 1/707

(54) **INFORMATION TRANSMISSION SYSTEM, ELECTRONIC APPARATUS, AND WIRELESS COMMUNICATION TERMINAL**

(30) Priority: 26.01.2004 JP 2004017259; 29.01.2004 JP 2004022265; 03.02.2004 JP 2004026732; 26.08.2004 JP 2004246359
(71) Applicant: SEIKO EPSON CORPORATION, Shinjuku-ku, Tokyo 163-0811 (JP)
(72) Inventor: IKEDA, Masayuki c/o SEIKO EPSON CORPORATION, Nagano 3928502 (JP); IIDA, Izumi c/o SEIKO EPSON CORPORATION, Nagano 3928502 (JP); INOGUCHI, Makoto c/o SEIKO EPSON CORPORATION, Nagano 3928502 (JP)
(74) Representative: HOFFMANN EITLE
(86) International application number: PCT/JP2005/001449
(87) International publication number: WO 2005/071858

(57) **Abstract**

Power consumption increases in accordance with an increase in volume and speed of transmission data to cause deterioration in characteristics due to signal distortion, decline in reliability of a cable and a connector, and an increase in cost. The present invention eliminates various problems such as more strict limitations on component arrangement in packaging.

An information transmission system includes: radio communication means that transmits first category information; and wire communication means that transmits second category information. Transmission information of the first and the second category is transmitted in parallel by the radio communication means and the wire communication means.

## Description

### Technical Field

The present invention relates to an information transmission system, an electronic apparatus, and a radio communication terminal that incorporate an element requiring high-speed data transmission such as a display device or an imaging device.

### Background Art

In recent years, functions of cellular phones, notebook computers, digital cameras, and the like have made remarkable improvement. High resolution and high definition of display devices and imaging devices incorporated in those apparatuses are demanded. The apparatuses are becoming more complicated. In particular, in the cellular phones, a reduction in size and weight and low power consumption are demanded as a camera function is incorporated therein and a size of a display unit is increased and a function of the display unit is improved. A mainstream of a housing structure thereof is a folding type called a clam shell type or a flip type.

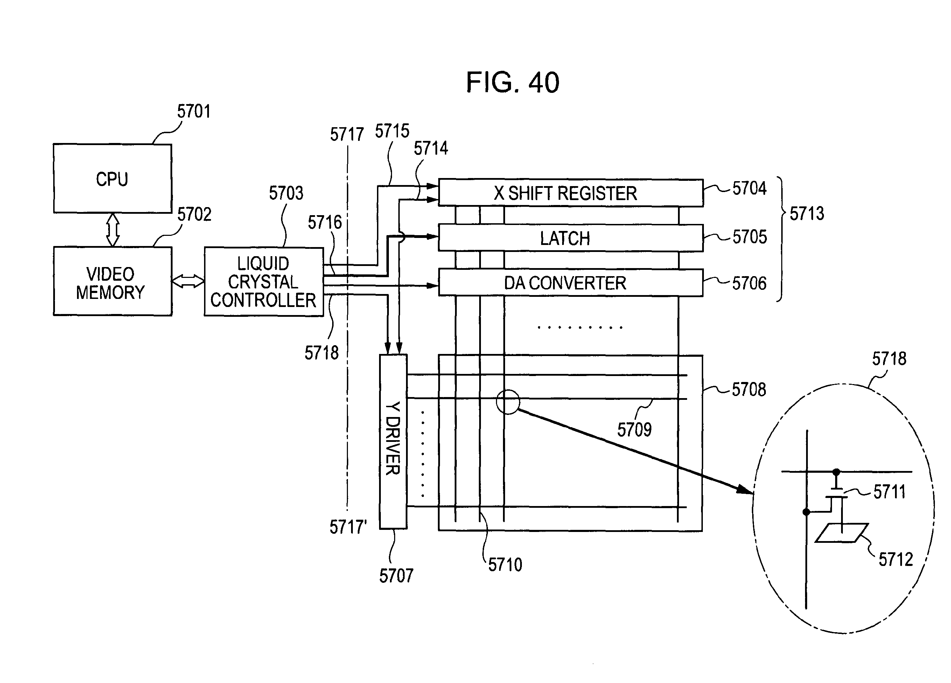

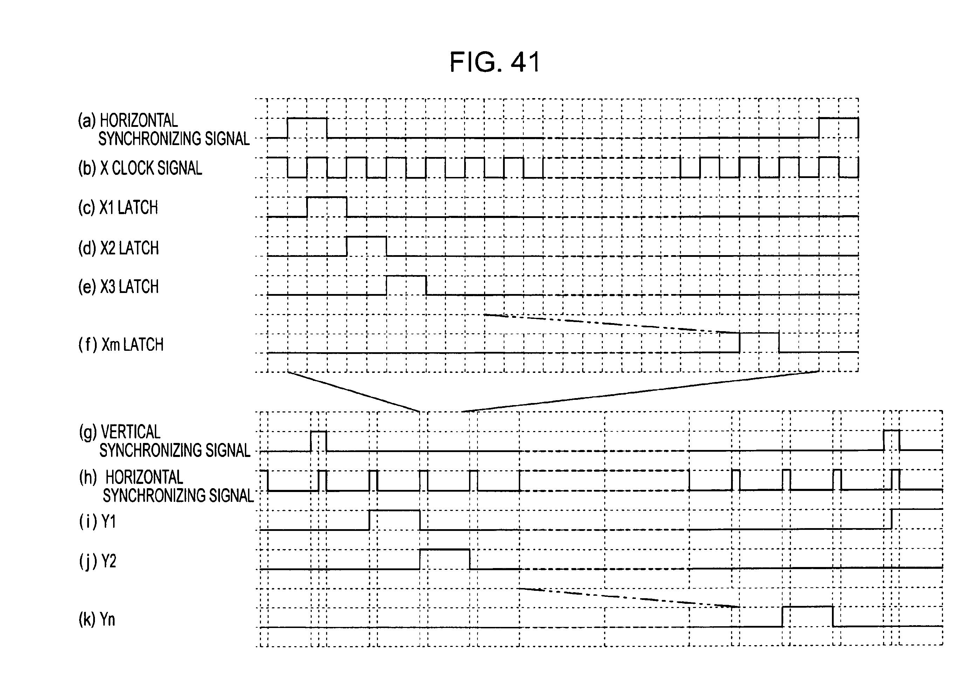

Fig. 40 is a block diagram showing a typical constitution of an electronic apparatus using an active matrix liquid crystal display as a display device. Fig. 41 is a time chart of the electronic apparatus.

As shown in Fig. 40, a CPU 5701 generates image data, which should be displayed, and writes the image data in a video memory 5702. The CPU 5701 generates image data, which should be displayed, according to expansion and arithmetic operation of a compressed image and moving image data in a JPEG format, an MPEG format, or the like. A liquid crystal controller 5703 generates various kinds of timing necessary for liquid crystal display, that is, an X clock signal 5715 for an X driver 5713, a horizontal synchronizing signal 5714, and a vertical synchronizing signal 5718. In addition, the liquid crystal controller 5703 reads out image data from the video memory 5702 according to an order in which the image data should be displayed and sends the image data to drivers (the X driver 5713 and a Y driver 5707) of a liquid crystal display 5708. When pixels of the liquid crystal display 5708 are constituted by n rows and m columns, the X driver 5713 is constituted by a shift register 5704 of m stages, a latch 5705 of m words, and m DA converters 5706.

When the liquid crystal controller 5703 reads out a top pixel of a display frame, the liquid crystal controller 5703 generates the vertical synchronizing signal 5718 and sends the vertical synchronizing signal 5718 to the Y driver 5707. At this point, simultaneously, the liquid crystal controller 5703 reads out data, which is displayed on a pixel in a first row and first column of the liquid crystal display 5708, from the video memory 5702 and sends the data to a data terminal of the latch 5705 as a display data signal 5716.

As shown in Fig. 41, the shift register 5704 reads the horizontal synchronizing signal 5714, which is generated by the liquid crystal controller 5703, in synchronization with the X clock signal 5715 and generates a signal X1 latch (Fig. 41(c)) for latching image data in the first column. The data, which is displayed on the pixel in the first row and the first column, is latched to the first column of the latch 5705 by this signal. Subsequently, the liquid crystal controller 5703 reads out data, which should be displayed next, from the video memory 5702 and outputs the data. The shift register 5704 of the X driver 5713 shifts the horizontal synchronizing signal 5714 by one, generates a signal X2 latch (Fig. 41(d)) for latching image data in a second column, and latches image data in the first row and second column.

The shift register 5704 sequentially shifts the horizontal synchronizing signal 5714 and sequentially latches data to be displayed in the first row. When the latch 5705 finishes storing data for one row, the next horizontal synchronizing signal 5714 (Figs. 41(a) and 41(h); note that a time scale of a horizontal axis is changed for (a) to (f) and (g) to (k) in Fig. 40. Therefore, a horizontal synchronizing signal (h), which is identical with a horizontal synchronizing signal (a), is also shown) is outputted, the DA converter 5706 subjects the data stored in the latch 5705 to DA conversion and outputs the data to a Xith (1≤i≤m) electrode of a column electrode 5710. Simultaneously, the Y driver 5707 outputs a selection signal to a row electrode Y1 in the first row.

Similarly, the Y driver 5707 sequentially shifts a selection signal outputted to a Yjth (1≤j≤n) electrode of a row electrode 7509 every time the horizontal synchronizing signal 5714 is outputted.

A diagram obtained by enlarging a one pixel portion arranged in matrix of the liquid crystal display 5708 is shown in a part surrounded by an alternate long and short dash line 5718 in Fig. 40. When the Yjth electrode of the row electrode 5709 is selected, an active switch element 5711 transmits the output of the DA converter 5706 outputted to the Xith electrode of the row electrode 5710 to a pixel electrode 5712. Note that it is also possible to set one DA converter 5706 on the liquid crystal controller side to transmit data 5716 as an analog signal. In this case, the latch 5705 functions as analog sample-and-hold circuit. Since it is possible to reduce the number of DA converters with this method, the method has been often used conventionally. However, since a voltage value applied to the pixel electrode 5712 finally only has to be changed to a predetermined value by the DA converters, a digital circuit for pulse width modulation can be used to make the analog sample-and-hold circuit unnecessary. Thus, as a density of LSIs increases, the method explained above is becoming a mainstream.

However, data is sent as a digital signal in this method, the number of data lines increases significantly, for example, twenty-four data lines in total (8 bits x three primary colors) are required.

Note that time after a display signal at a right end of a row of a screen is outputted from the liquid crystal controller 5703 until a display signal at a left end of the next row is outputted and time after output of image data in a bottom row of a screen is finished until image data in a first row of the next frame is outputted are called (horizontal and vertical) blanking periods or retrace periods. The blanking periods or the retrace periods cannot be set to 0 in a CRT but may be 0 in the liquid crystal display 5708. In an example in Fig. 41, a horizontal retrace period for one pixel and a vertical retrace period for one row are set.

In an electronic apparatus using an imaging device such as a digital camera, a direction in which a signal is transmitted is right opposite to that in the case in which the liquid crystal display 5708 is used and the same circuit constitution as the case is adopted.

In such an electronic apparatus incorporating a display device or an imaging device, an increase in size of display, an increase in resolution, and a reduction in size and weight are demanded. Therefore, the electronic apparatus in Fig. 40 are often packaged over plural packaging substrates. In that case, the packaging substrates are often divided on an alternate long and short dash line 5717-5717' in Fig. 40.

A connection between the CPU 5701 and the liquid crystal display 5708 is inevitably long. When an imaging device is mounted on the constitution in Fig. 40, a similar circuit constitution is adopted, although a direction of transmission of a signal is opposite to that at the time when the liquid crystal display 5708 is used. Thus, a connection between the CPU 5701 and the imaging device is long.

In accordance with the increase in resolution of the liquid crystal display 5708, the imaging device, and the like, signal frequencies in lines used therein are increased to make connection with the CPU 5701 difficult. In particular, in the clam shell structure, the CPU 5701 and the liquid crystal display 5708 or the imaging device are connected via a thin hinge section. Therefore, in accordance with the increase in resolution of the display device and the imaging device, when the packaging substrates are divided on the alternate long and short dash line 5717-5717' in Fig. 40, an amount of data exchanged between both the substrates also increases. Thus, a high-speed transfer technique is required. In order to solve this problem, as a system for high-speed data transfer, for example, it has been proposed to use Low Voltage Differential Signaling (LVDS) in connection of a display or an imaging device (a patent document 1 and a patent document 2). In a patent document 3 and a patent document 4, considering that a sufficient solution is not obtained with this system, new methods are proposed.

The semiconductor manufacturing technique has made a remarkable progress and, as a system-on-chip, an integration density increases more. There is a tendency that it is attempted to mount all semiconductor circuits, which can be included in one chip, in one chip. Therefore, there are an enormous number of pins for connection of a semiconductor chip and an external circuit. It is not unusual that the number of pins exceeds several hundred. An operation frequency of a semiconductor circuit also increases. A high-frequency characteristic is a problem in the conventional method of connecting the semiconductor circuit with the outside via wire bonding. It is becoming difficult to exchange signals with the outside correctly. To cope with such a problem, a non-patent document 1 reports about the research for making connection between chips wireless.
Patent Document 1: Patent No. 3086456 (column 44)
Patent Document 2: Patent No. 3330359 (column 46)
Patent Document 3: Patent No. 3349426
Patent Document 4: Patent No. 3349490
Non-patent Document 1: "Nikkei Micro-device" December 2003, page 161

### Disclosure of the Invention

However, since the increase in size of a display has made a remarkable progress in these days, sufficient performance is not obtained with these techniques. In order to obtain sufficient anti-noise characteristics (interference resistance and interference exertion), careful design and adjustment are required. In the LVDS, since a signal level is low, an analog signal is treated in a digital IC inevitably. Thus, there is a problem in that power consumption increases.

In order to transmit a signal accurately, matching impedance terminations are required. However, since the number of lines required by the impedance terminations is large and a transmission impedance is about 100 ohms at the most, there is also a problem in that electric power consumed for resistance of those terminals increases to an unacceptable level.

Moreover, when the packaging substrates are divided on the alternate long and short dash line 5717-5717' in Fig. 40, it is necessary to transmit a large quantity of data at high speed through a line drawn around by a long wiring. Therefore, radiation fields from the line increases to cause electromagnetic interference against other electronic apparatuses or the own apparatus. In the conventional signal transmission through a data line, an amplitude level at a receiving end is defined. Thus, even if a sufficient quality is secured at the receiving end, an amplitude level of a signal cannot be lowered. In other words, it is difficult to take measures against EMI and, as a result, a limitation on an apparatus design and an increase in cost are caused. On a transmission side, since a stray capacitance of a line is simultaneously driven in addition to a load at the receiving end, excess energy is required for signal transmission. In other words, this results in an increase in power consumption.

An increase in the number of wirings in accordance with an increase in speed of transfer data requires a physical space for wiring. Naturally, a significant limitation is imposed on a design of an apparatus.

In particular, when a wiring passes through a movable section such as a hinge section in the clam shell structure or the like, a characteristic impedance changes depending on a bending state of the movable section. Thus, impedance mismatching occurs depending on a state to cause signal deterioration because of reflection or the like in the bending section. Therefore, there is a problem in that speed of data to be transmitted is limited and a packaging method and arrangement of components are restricted.

In coping with the high resolution and the high speed of the display device and the imaging device, several tens signals are exchanged through the hinge section and a wiring on a substrate cannot be used. Thus, a flexible substrate is connected via a connector. Connection by the flexible substrate and the connector has a disadvantage that cost is high and connection reliability is low.

It is possible to solve these problems collectively if the conventional radio communication technique is introduced in an identical electronic apparatus and data transfer in a section, where wiring is difficult, is performed wirelessly using electromagnetic signals.

However, in introducing the conventional radio communication technique for data transfer in an electronic apparatus, there is a problem in that, compared with transfer through a wire, a mechanism for the introduction of the radio communication technique is extremely complicated and packaging involves difficulty.

Information transfer by the conventional radio communication technique has a problem in security because an electromagnetic signal used for communication leaks even in an identical electronic apparatus. In other words, there is a problem in that security of communication is threatened by wiretapping or the like.

Thus, it is a first object of the invention to make it possible to improve the conventional radio communication technique and apply the conventional radio communication technique to data transmission in an identical electronic apparatus, make a method of high-speed transmission of data, which has the various problems and limitations described above, wireless, eliminate the disadvantages and the limitations on the conventional information transmission system, and realize an electronic apparatus and a radio communication terminal having high reliability at low cost.

It is a second object of the invention to solve the problems of security in eliminating the various problems and limitations concerning the conventional information transmission in an identical electronic apparatus according to the application of the radio communication technique, eliminate the disadvantages and the limitations on the conventional information transmission system, and realize an electronic apparatus and a radio communication terminal having high reliability at low cost.

An information transmission system of the invention is characterized by including: radio communication means that transmits first category information; and wire communication means that transmits second category information, and in that radio communication for the first category information and wire communication for the second category information are performed in one communication link.

According to the constitution described above, it is possible to avoid complication of a system involved in making transmission wireless by transmitting a group of signals, high-speed transmission of which is difficult, by radio, avoiding various problems involved in an increase in speed of transmission data, and transmitting signals of synchronization information and the like necessary for radio transmission by wire.

Consequently, it is possible to propagate and communicate a transmission signal of high-speed data in the space without complicating the system and simplify wirings such as a flexible substrate and a connector because a wiring for the transmission signals of high-speed data is made unnecessary, and the problems of high cost and reliability due to the wirings are eliminated. It is also possible to avoid the problems of termination for impedance matching and power consumption increasing because of an increase in data transmission speed. It is possible to relax the drawing-around of a wire and the limitations on component arrangement and improve a design and convenience of use of the electronic apparatus. Moreover, since electromagnetic waves used for signal transmission are transmitted in a very short distance, that is, the inside of an identical system, communication in this distance only has to be secured and it is possible to decrease an intensity of radiation of electromagnetic waves to a limit. Thus, the EMI characteristic is improved essentially to make it easy to take measures against EMI. Note that one communication link refers to a period in which communication is performed without interruption. In one communication link, transmission and reception are performed in a pair at least once.

An electronic apparatus of the invention is characterized by including: a radio communication unit that communicates first category information by radio; and a wire communication unit that communicates second category information by wire, and in that radio communication for the first category information and wire communication for the second category information are performed in one communication link.

According to the constitution described above, it is possible to eliminate the various problems involved in information transmission in the electronic apparatus through the information transmission. This makes it easy to realize the electronic apparatus.

An electronic apparatus of the invention is characterized by including: a radio communication unit that communicates first category information by radio; and a wire communication unit that communicates second category information, which is used for control or processing of the first category information, by wire.

According to the constitution described above, it is possible to transmit a part of information, which is transmitted by radio communication, through wire communication and transmit the first category information through the radio communication while reducing loads imposed on the radio communication. Therefore, it is possible to relax the problems involved in the radio communication such as an increase in the number of wirings and a limitation on component arrangement while relaxing the problems involved in the radio communication such as deterioration of security and an increase in size of a circuit. It is possible to cope with a reduction in size and thickness of the electronic apparatus while coping with an increase in size of a screen and an increase in functions of the electronic apparatus.

An electronic apparatus according to the invention is characterized by including: an information originating unit that originates first category information; an encrypting unit that encrypts the first category information originated by the information originating unit; a radio transmission unit that transmits the first category information, which is encrypted by the encrypting unit, with an electromagnetic signal; a radio reception unit that receives the electromagnetic signal transmitted by the radio transmission unit; a decrypting unit that decrypts the signal received by the radio reception unit; a key generating unit that generates an encryption key as second category information; and a wire communication unit that delivers the encryption key generated by the key generating unit to the encryption unit and the decryption unit through wire communication.

According to the constitution described above, since information exchanged by radio in the electronic apparatus is transmitted in cryptography, even if the information is leaked to a third party, the third party cannot decrypt the information unless the third party has the encryption key. Thus, it is possible to improve security. It is possible to update the encryption key frequently. Moreover, since the encryption key is transmitted to a partner side through wire communication, the encryption key is never passed to a third party. In other words, a problem at the time of key distribution (KDP: Key Distribution Problem), which is a problem in using cryptography, never occurs.

An electronic apparatus according to the invention is characterized by including: an information originating unit that originates first category information; a random number generating unit that generates a random number as second category information; a wire communication unit that delivers the random number, which is generated by the random number generating unit, through wire communication; an adding unit that adds the random number to the first category information originated by the information originating unit; a radio transmission unit that transmits the information, which is added with the random number by the adding unit, with an electromagnetic signal; a radio reception unit that receives the electromagnetic signal transmitted by the radio transmission unit; and a subtracting unit that subtracts the random number from the information received by the radio communication unit and decrypts the information.

According to the constitution described above, since the information exchanged by radio in the electronic apparatus is added with the random number, even if the information is leaked, a third party cannot learn a content of the information. Thus, security is secured. It is possible to change the random number frequently. Moreover, the random number is transmitted to a reception side through wire communication. Thus, the random number to be added is never stolen by a third party.

An electronic apparatus according to the invention is characterized by including: an information originating unit that originates first category information; a spread code generating unit that generates a spread code as second category information; a wire communication unit that delivers the spread code, which is generated by the spread code generating unit, through wire communication; a modulating unit that subjects the first category information, which is originated by the information originating unit, to spread modulation with the spread code; a radio transmission unit that transmits the information, which is modulated by the modulating unit, with an electromagnetic wave; a radio reception unit that receives the electromagnetic signal; and a demodulating unit that inversely spreads the information, which is received by the radio reception unit, with the spread code.

According to the constitution described above, since information exchanged by radio in the electronic apparatus is subjected to spread modulation by the spread code, even if a signal is leaked, a third party cannot demodulate the information unless the third party has the spread code and cannot learn a content of the information. Thus, security is secured. It is possible to change the spread code frequency. Moreover, the spread code is transmitted to a reception side through wire communication. Thus, the spread code is never stolen by a third party. Since a spread gain is obtained, this radio communication path never affects the electronic apparatus or, on the other hand, the radio communication path is never affected by an electromagnetic signal or electromagnetic noise emitted by the electronic apparatus.

The electronic apparatus according to the invention is characterized in that the wire communication unit superimposes a signal on a power supply line and performs communication.

According to the constitution described above, since the wire communication unit performs communication with the signal superimposed on the power supply line, a special wiring for the communication is not necessary. Thus, it is possible to transmit a large quantity of data easily with a small number of wirings.

The electronic apparatus of the invention is characterized by including: an electromagnetic wave converting unit that converts the first category information into an electromagnetic signal; and an electromagnetic wave restoring unit that receives the electromagnetic signal and restores the electromagnetic signal to the first category information.

According to the constitution described above, it is possible to make signal transmission wireless using an electromagnetic wave (a radio wave) with a simple constitution. In particular, a transmission side and a reception side of a signal transmitted by radio use a common control signal transmitted by wire. Thus, it is possible to absorb fluctuation in characteristics and fluctuation in timing at transmission and reception ends and secure high-quality communication even if components having high accuracy are not used.

The electronic apparatus of the invention is characterized in that the electromagnetic wave converting unit and the electromagnetic wave restoring unit are driven by a carrier wave generated by an identical carrier wave oscillator.

According to the constitution described above, since both the transmission side and the reception side of a signal transmitted by radio are driven by a carrier wave generated by a common signal transmitted by wire, it is unnecessary to synchronize synchronous detection on the reception side. Therefore, it is possible to secure high-quality communication with a simple circuit constitution without using components having high accuracy at transmission and reception ends.

The electronic apparatus of the invention is characterized in that the electromagnetic wave converting unit performs spectrum spread modulation, the electromagnetic wave restoring unit performs spectrum inverse spread, and synchronization information of the electromagnetic wave converting unit and the electromagnetic wave restoring unit is transmitted by wire.

According to the constitution described above, it is possible to transmit plural signals by not serializing but multiplexing the signals according to the spectrum spread modulation. Thus, a real time characteristic is high. Since it is also possible to obtain a spread gain, it is possible to establish a robust system with less interference given to a system by an electromagnetic signal to be transmitted or less interference received from the system. Moreover, since the synchronization information is transmitted by wire at transmission and reception ends, a synchronizing circuit for acquisition from the received electromagnetic signal is made unnecessary at the reception end, a simple inverse spread circuit can be used, and it is easy to simplify a circuit.

The electronic apparatus of the invention is characterized in that the electromagnetic wave converting unit performs modulation into a UWB signal, the electromagnetic wave restoring unit performs demodulation from the UWB signal, and synchronization information of the electromagnetic wave converting unit and the electromagnetic wave restoring unit is transmitted by wire.

According to the constitution described above, even in a strong electromagnetic field environment of the electronic apparatus, a basic function of which is generation of an electromagnetic wave, such as a cellular phone that performs communication with a radio wave, it is possible to perform data transmission with high reliability at high speed according to a broadband characteristic and a low spectrum density characteristic peculiar to a UWB. If UWB communication is performed, since a regulation of a maximum radiation field accepted by the law is relaxed, it becomes easier to design the reception side. Moreover, since a modulator and a demodulator for the UWB use identical synchronization information transmitted by wire, a circuit for synchronously extracting information is unnecessary on the reception side. Thus, it is possible to simplify a circuit.

An electronic apparatus of the invention is characterized by including: a radio transmission unit that modulates first category information and transmits the first category information as an electromagnetic signal; a radio reception unit that receives and demodulates the electromagnetic signal; a wire transmission unit that superimposes second category information on a power supply line and transmits the second category information; and a wire reception unit that separates the signal superimposed on the power supply line, and in that the first category information and the second category information are transmitted into one communication link by the radio transmission unit and the wire transmission unit, and power is supplied to the radio transmission unit and the radio reception unit by the power supply line common to the radio transmission unit and the radio reception unit.

According to the constitution described above, a group of signals, high-speed transmission of which is difficult, are transmitted by radio, various problems involved in an increase in speed of transmission data are avoided, complication of a system involved in making transmission wireless is avoided by superimposing a signal of synchronization information or the like necessary for radio transmission on the power supply line and transmitting the signal by wire. Moreover, a wire path is commonly used with the power supply line. Thus, it is possible to reduce difficulties involved in wiring.

Consequently, it is possible to propagate and transmit transmission signals of high-speed data in the space without complicating the system and simplify wirings such as a flexible substrate and a connector because a wiring for the transmission signals of high-speed data is made unnecessary, and the problems of high cost and reliability due to the wirings are eliminated. It is also possible to avoid the problems of termination for impedance matching and power consumption increasing because of an increase in data transmission speed. It is possible to relax the drawing-around of a wire and the limitations on component arrangement and improve a design and convenience of use of the electronic apparatus. Moreover, since electromagnetic waves used for signal transmission are transmitted in a very short distance, that is, the inside of an identical system, communication in this distance only has to be secured and it is possible to decrease an intensity of radiated electromagnetic waves to a limit. Thus, the EMI characteristic is improved essentially to make it easy to take measures against EMI. Moreover, since the wire path is commonly used with the power supply line, it is also possible to reduce difficulties involved in wiring.

The electronic apparatus of the invention is characterized in that the radio transmission unit includes: a control unit that generates a reference signal; and a modulating unit that modulates the first category information into an electromagnetic signal in synchronization with the reference signal, second category information transmitted and received by the wire transmission unit and the wire reception unit is the reference signal, and the radio reception unit includes a demodulating unit that demodulates the first category information in synchronization with the reference signal received by the wire reception unit.

According to the constitution described above, since the radio transmission unit and the radio reception unit can operate in synchronization with the identical reference signal, a circuit for synchronization is made unnecessary on the reception side. Thus, it is possible to extremely simplify a constitution of hardware for transmitting and receiving the first category information.

The electronic apparatus of the invention is characterized in that the radio transmission unit includes: a control unit that oscillates a reference signal; a first carrier wave oscillating unit that oscillates a carrier wave synchronizing with the reference signal; and a modulating unit that modulates the carrier wave, which is oscillated by the carrier wave oscillating unit, with the first category information and converts the carrier wave into an electromagnetic signal, the second category information transmitted and received by the wire transmission unit and the wire reception unit is the reference signal, and the radio reception unit includes: a second carrier wave oscillating unit that oscillates a carrier wave synchronizing with the reference signal received by the wire reception unit; and a demodulating unit that demodulates the first category information using the carrier wave oscillated by the second carrier wave oscillating unit.

According to the constitution described above, since the radio transmission unit and the radio reception unit can operate according to carrier waves generated in synchronization with the identical reference signal, acquisition for reproduction of a carrier wave and a circuit for tracking are made unnecessary on the reception side. Thus, it is possible to extremely simplify a constitution of hardware for transmitting and receiving the first category information.

The electronic apparatus of the invention is characterized in that the radio transmission unit includes a control unit that oscillates a reference signal; a first carrier wave oscillating unit that oscillates a carrier wave synchronizing with the reference signal; and a modulating unit that modulates the carrier wave, which is oscillated by the carrier wave oscillating unit, with the first category information in synchronization with the reference signal and converts the carrier wave into an electromagnetic signal, the second category information transmitted and received by the wire transmission unit and the wire reception unit is the reference signal, and the radio reception unit includes: a second carrier wave oscillating unit that oscillates a carrier wave synchronizing with the reference signal received by the wire reception unit; and a demodulating unit that demodulates the first category information using the carrier wave oscillated by the second carrier wave oscillating unit in synchronization with the reference signal received by the wire reception unit.

According to the constitution described above, it is possible to synchronize the radio transmission unit and the radio reception unit with one reference signal superimposed on the power supply line. In addition, the electronic apparatus can operate according to a carrier wave, which is subjected to tracking, generated in synchronization with the reference signal. Thus, a circuit for synchronization and a circuit for carrier wave reproduction are made unnecessary on the reception side. It is possible to extremely simplify a constitution of hardware for transmitting and receiving the first category information.

The electronic apparatus of the invention is characterized in that the radio transmission unit modulates the first category information according to phase modulation and generates carrier wave information for modulation and demodulation from the reference signal transmitted by wire as the second category information, and a transmission packet transmitted by the radio transmission unit is synchronized with the reference signal transmitted by wire as the second category information.

According to the constitution described above, it is possible to realize the radio transmission unit and the radio reception unit, which transmit and receive the first category information, with a simple circuit constitution and make signal transmission wireless by an electromagnetic wave (a radio wave). In particular, a transmission side and a reception side of a signal transmitted by radio use a common control signal superimposed on the power supply line and transmitted. Thus, it is possible to absorb fluctuation in characteristics and fluctuation in timing at transmission and reception ends and secure high-quality communication even if components having high accuracy are not used.

The electronic apparatus of the invention is characterized in that the radio transmission unit modulates the first category information according to spectrum spread modulation and the radio reception unit subjects the first category information to spectrum inverse spread, demodulates the first category information, generates synchronization information of a spread code and carrier wave information for modulation and demodulation from the reference signal transmitted by wire as the second category information, and synchronizes the synchronization information and the carrier wave information.

According to the constitution described above, it is possible to transmit plural signals by not serializing but multiplexing the signals according to the spectrum spread modulation. Thus, a real time characteristic is high. Since it is also possible to obtain a spread gain, it is possible to establish a robust system with less interference given to a system by an electromagnetic signal to be transmitted or less interference received from the system. Moreover, since the synchronization information or carrier wave information is superimposed on the power supply line and transmitted on the transmission and reception ends, it is possible to reproduce synchronization timing and a carrier wave on the reception end using the signal. Thus, a synchronizing circuit for acquisition is made unnecessary on the reception side, a simple inverse spread circuit can be used, and it is easy to simplify a circuit. Since it is possible to reproduce a carrier wave with a simple circuit, it is possible to simplify a circuit. Moreover, since the second category information is superimposed on the power supply line, it is possible to minimize the number of wirings.

The electronic apparatus of the invention is characterized in that the radio transmission unit modulates the first category information according to UWB modulation, and synchronization information of a pulse template for demodulation is generated from the reference signal transmitted by wire as the second category information and synchronized.

According to the constitution described above, even in a strong electromagnetic field environment of the electronic apparatus, a basic function of which is generation of an electromagnetic wave, such as a cellular phone that performs communication with a radio wave, it is possible to perform data transmission with high reliability at high speed. If UWB communication is performed, since a regulation of a maximum radiation field accepted by the law is relaxed, it becomes easier to design the reception side. Moreover, since a modulator and a demodulator for the UWB use identical synchronization information transmitted by wire, a circuit for synchronously extracting information is unnecessary on the reception side. Thus, it is possible to simplify a circuit. Moreover, since the second category information is superimposed on the power supply line, it is possible to minimize the number of wirings.

The electronic apparatus of the invention is characterized in that the second category information includes synchronization information or carrier wave information concerning radio communication of the first category information.

According to the constitution described above, in performing radio transmission, it is possible to omit a procedure and a circuit for acquisition on the reception side and simplify a circuit for radio transmission. In addition, in performing radio transmission, it is always possible to subject carrier waves on the transmission side and the reception side to tracking, it is possible to extremely relax accuracy of a carrier wave oscillator and extremely relax accuracy of hardware for transmission and reception for transmitting and receiving the first category information. Thus, there is a significant advantage in terms of cost.

The electronic apparatus of the invention is characterized in that the second category information includes information indicating a reception state of the first category information and is transmitted from the reception side to the transmission side of the first category information.

According to the constitution described above, it is possible to feed back a reception state of information transmitted by radio from the reception side to the transmission side depending on the reception state and secure a reception quality easily. It is possible to control transmission power to minimum transmission power for receiving the first category information. This makes it easy to take measures against EMI. There is also an effect in securing security against a leak of information.

The electronic apparatus of the invention is characterized in that the first category information includes one of image data, text data, and sound data.

According to the constitution described above, it is possible to make it easy to realize various electronic apparatuses that handle multimedia information such as images, sounds, and texts.

The electronic apparatus of the invention is characterized by including: a storing unit that stores the first category information; a display that displays the first category information; a display control unit that reads out the first category information from the storing unit according to a driving order of the display and outputs the first category information; and a display driving unit that drives the display on the basis of the first category information read out by the display control unit.

According to the constitution described above, it is possible to propagate and communicate display information, which is displayed on a liquid crystal, in the space without complicating the system and simplify wirings such as a flexible substrate and a connector because a wiring for the transmission signals of high-speed data is made unnecessary, and the problems of high cost and reliability due to the wirings are eliminated. It is also possible to avoid the problems of termination for impedance matching and power consumption increasing because of an increase in data transmission speed. It is possible to relax the drawing-around of a wire and the limitations on component arrangement and improve a design and convenience of use of the electronic apparatus. Moreover, since electromagnetic waves used for signal transmission are transmitted in a very short distance, that is, the inside of an identical system, communication in this distance only has to be secured and it is possible to decrease an intensity of radiation of electromagnetic waves to a limit. Thus, the EMI characteristic is improved essentially to make it easy to take measures against EMI.

The electronic apparatus of the invention is characterized by including: an imaging device; and imaging control means that reads out an image signal photographed by the imaging device as the first category information and outputs the image signal.

According to the constitution described above, since exchange of signals between the imaging device and a host side, which uses image data obtained by the imaging device, is made wireless, a wiring between the imaging device and the host side is made unnecessary. Thus, it is possible to avoid various problems that have come to light in accordance with an increase in size of the imaging device. In other words, there are effects that it is possible to package the electronic apparatus easily even in a housing of a clam shell structure, wirings such as a flexible substrate and a connector are made unnecessary, problems of high cost and reliability due to the wirings are eliminated, and it is possible to cope with high transmission speed. In particular, in a camera, since an optical system and electronic components have to be packaged in an identical housing, there are many limitations on packaging of electronic components. However, according to the constitutions of the invention, it is possible to relax the limitations.

The electronic apparatus of the invention is characterized in that the electronic apparatus transmits information transmitted between an electronic circuit on an integrated circuit and the outside of the integrated circuit as the first category information by radio.

According to the constitution described above, since it is possible to make a part of input/output pins of a package of a semiconductor circuit wireless, it is possible to reduce the number of the input/output pins and reduce a size and cost of the package.

The electronic apparatus of the invention is characterized by including: a display unit; a speaker unit, and a data source unit that generates image data to be displayed on the display unit and acoustic data for driving the speaker unit, and in that the electronic apparatus transmits the image data and the acoustic data, which are transmitted between the display unit or the speaker unit and the data source unit, as the first category information by radio.

According to the constitution described above, it is possible to connect a speaker or a display of a multimedia apparatus, which handles video data and acoustic data, to a tuner recorder by radio using simple hardware. Thus, it is possible to connect the speaker or the display and the tuner recorder unit each other easily.

A radio communication terminal according to the invention is characterized by including: a first housing unit; a second housing unit coupled to the first housing unit; a coupling unit that couples the first housing unit and the second housing unit such that a positional relation between the first housing unit and the second housing unit can be changed; an antenna for external radio communication mounted on the first housing unit or the second housing unit; an external radio communication control unit that is mounted on the first housing unit and mainly manages control of external radio communication performed via the antenna for external radio communication; a display unit mounted on the second housing unit; a first antenna for internal radio communication mounted on the first housing unit; a second antenna for internal radio communication mounted on the second housing unit; a first internal radio communication control unit that is mounted on the first housing unit and manages control of internal radio communication performed via the first antenna for internal radio communication; a second internal radio communication control unit that is mounted on the second housing unit and manages control of internal radio communication performed via the second antenna for internal radio communication; and a wire communication unit that is mounted on the first housing unit or the second housing unit and exchanges a part of information, which is transmitted through the internal radio communication, by wire.

According to the constitution described above, it is possible to perform data transmission between housings of a radio communication terminal by radio while assisting radio communication with wire communication. Therefore, even when an amount of data exchanged between the housings increases in accordance with an increase in resolution of a display unit mounted on the radio communication terminal, it is possible to perform data communication between the housings smoothly while controlling an increase in the number of wirings between the housings. As a result, even when a clam shell structure is adopted in the radio communication terminal, it is possible to control complication of a structure of a coupling unit. It is possible to prevent complication of a packaging process. It is possible to realize a reduction in size and thickness and an increase in reliability of the radio communication terminal while controlling an increase in cost. Moreover, it is possible to realize an increase in size of a screen and an increase in functions of the radio communication terminal without spoiling portability of the radio communication terminal.

### Brief Description of the Drawings

Fig. 1 is a perspective view showing a state at the time when a clam shell type cellular phone, to which a radio communication control method of the invention is applied, is opened.
Fig. 2 is a perspective view showing a state at the time when the clam shell type cellular phone, to which the radio communication control method of the invention is applied, is closed.
Fig. 3 is a perspective view showing an external appearance of rotation type cellular phone to which the radio communication control method of the invention is applied.
Fig. 4 is a block diagram showing a main part of an embodiment of the invention.
Fig. 5 is a sectional view showing an embodiment of an electronic apparatus of the invention.
Fig. 6 is a block diagram showing an embodiment of an electronic apparatus using an information transmission system of the invention.
Fig. 7 is a block diagram showing another embodiment of the electronic apparatus using the information transmission system of the invention.
Fig. 8 is a block diagram for describing in detail a modulator and a demodulator in a fifth embodiment and a sixth embodiment of the electronic apparatus according to the invention.
Fig. 9 is a time chart for describing in detail a seventh embodiment and an eighth embodiment according to the invention.
Fig. 10 is a block diagram of a main part of another embodiment of the electronic apparatus according to the invention.
Fig. 11 is a block diagram showing a main part of still another embodiment of the electronic apparatus according to the invention.
Fig. 12 is a block diagram showing a main part of still another embodiment of the electronic apparatus according to the invention.
Fig. 13 is a block diagram showing a main part of still another embodiment of the electronic apparatus according to the invention.
Fig. 14 is a block diagram showing a main part of still another embodiment of the electronic apparatus according to the invention.
Fig. 15 is a block diagram showing a main part of still another embodiment of the electronic apparatus according to the invention.
Fig. 16 is a sectional view showing a still another embodiment of the electronic apparatus of the invention.
Fig. 17 is a block diagram showing still another embodiment of the electronic apparatus according to the invention.
Fig. 18 is a block diagram for describing in detail a modulator and a demodulator of a sixteenth embodiment of the electronic apparatus according to the invention.
Fig. 19 is a block diagram showing a main part of still another embodiment of the electronic apparatus according to the invention.
Fig. 20 is a block diagram showing a main part of still another embodiment of the electronic apparatus according to the invention.
Fig. 21 is a block diagram showing a main part of still another embodiment of the electronic apparatus according to the invention.
Fig. 22 is a block diagram of another embodiment of a superimposing circuit and a separating circuit of the electronic apparatus according to the invention.
Fig. 23 is a block diagram showing a main part of still another embodiment of the electronic apparatus according to the invention.
Fig. 24 is a block diagram showing a main part of still another embodiment of the electronic apparatus according to the invention.
Fig. 25 is a block diagram showing still another embodiment of the electronic apparatus of the invention.
Fig. 26 is a block diagram showing still another embodiment of the electronic apparatus of the invention.
Fig. 27 is a block diagram showing still another embodiment of the electronic apparatus of the invention.
Fig. 28 is a block diagram showing still another embodiment of the electronic apparatus according to the invention.
Fig. 29 is a block diagram showing still another embodiment of the electronic apparatus of the invention.
Fig. 30 is a block diagram showing still another embodiment of the electronic apparatus of the invention.
Fig. 31 is a block diagram showing still another embodiment of the electronic apparatus of the invention.
Fig. 32 is a diagram showing an embodiment of timing of wire communication and radio communication.
Fig. 33 is a diagram showing another embodiment of the timing of wire communication and radio communication.
Fig. 34 is a diagram showing still another embodiment of the timing of wire communication and radio communication.
Fig. 35 is a diagram showing still another embodiment of the timing of wire communication and radio communication.
Fig. 36 is a diagram showing still another embodiment of the timing of wire communication and radio communication.
Fig. 37 is a diagram showing still another embodiment of the timing of wire communication and radio communication.
Fig. 38 is a diagram showing still another embodiment of the timing of wire communication and radio communication.
Fig. 39 is a diagram showing still another embodiment of the timing of wire communication and radio communication.
Fig. 40 is a block diagram for explaining a conventional electronic apparatus having a liquid crystal display.
Fig. 41 is a time chart for explaining an operation of the conventional electronic apparatus having a liquid crystal display.

### Best Mode for carrying out the Invention

Embodiments of the invention will be hereinafter explained using the drawings.

### (First embodiment)

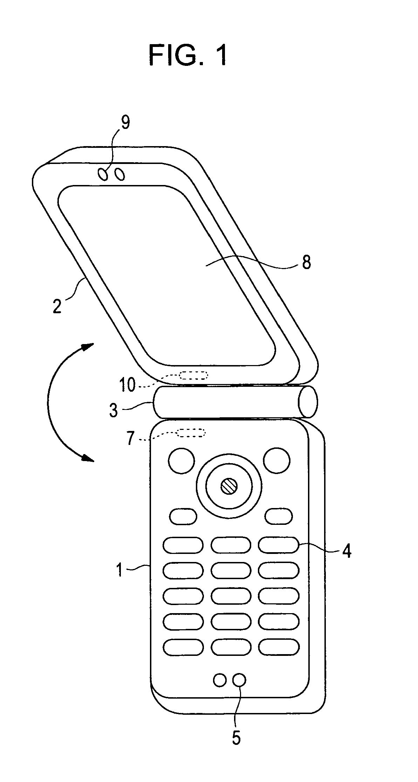

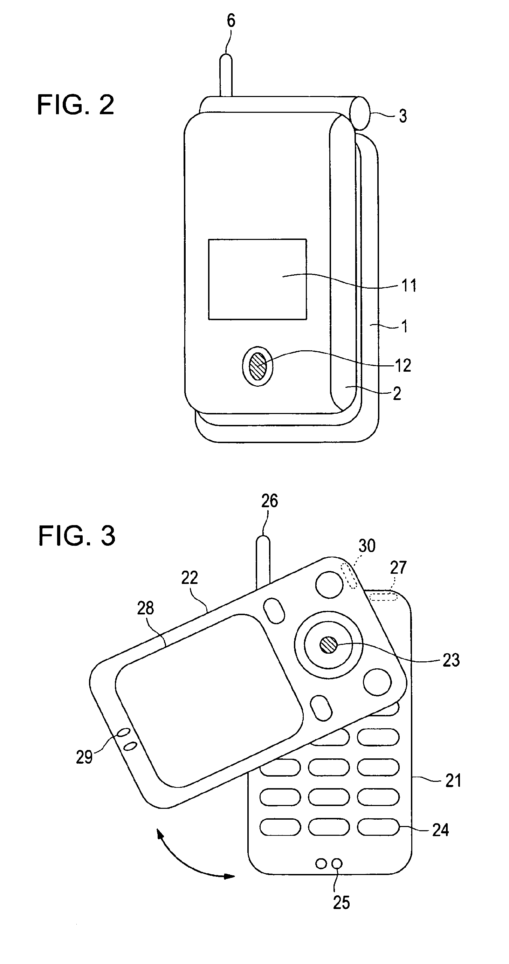

Fig. 1 is a perspective view showing a state at the time when a clam shell type cellular phone, to which a radio communication control method of the invention is applied, is opened. Fig. 2 is a perspective view showing a state at the time when the clam shell type cellular phone, to which the radio communication control method of the invention is applied, is closed.

In Figs. 1 and 2, operation buttons 4 are arranged on a surface of a first housing unit 1 and a microphone 5 is provided at a lower end of the first housing unit 1. An antenna for external radio communication 6 is attached at an upper end of the first housing unit 1. A display 8 is provided on a surface of a second housing unit 2 and a speaker 9 is provided at an upper end of the second housing unit 2. A display 11 and an imaging device 12 are provided on a rear surface of the second housing 2. Note that, it is possible to use, for example, a liquid crystal display panel, an organic EL panel, a plasma display panel, or the like as the displays 8 and 11. It is possible to use a CCD, a CMOS sensor, or the like as the imaging device 12. Antennas for internal radio communication 7 and 10, which perform internal radio communication between the first housing unit 1 and the second housing unit 2, are provided in the first housing unit 1 and the second housing unit 2.

The first housing unit 1 and the second housing unit 2 are coupled via a hinge 3. It is possible to fold the second housing unit 2 onto the first housing unit 1 by rotating the second housing unit 2 with the hinge 3 as a fulcrum. It is possible to protect the operation buttons 4 with the second housing unit 2 and prevent the operation buttons 4 from being operated by mistake when the cellular phone is carried by closing the second housing unit 2 onto the first housing unit 1. It is possible to operate the operation buttons 4 while looking at the display 8, make a call while using the speaker 9 and the microphone 5, and perform imaging while operating the operation buttons 4.

It is possible to arrange the display 8 over substantially an entire surface of the second housing unit 2 and increase a size of the display 8 without spoiling portability of the cellular phone by using a clam shell structure. This makes it possible to improve visibility.

It is possible to perform data transmission between the first housing unit 1 and the second housing unit 2 through internal radio communication using the antennas for internal radio communication 7 and 10 by providing the antennas for internal radio communication 7 and 10 in the first housing unit 1 and the second housing unit 2, respectively. For example, it is possible to send image data and sound data, which are captured into the first housing unit 1 via the antenna for external radio communication 6, to the second housing unit 2 through the internal radio communication using the antennas for internal radio communication 7 and 10 and cause the display 8 to display an image and cause the speaker 9 to output a sound. It is possible to send imaging data, which is imaged by the imaging device 12, from the second housing unit 2 to the first housing unit 1 through the internal radio communication using the antennas for internal radio communication 7 and 10 and send the imaging data to the outside via the antenna for external radio communication 6.

This makes it unnecessary to perform data transmission between the first housing unit 1 and the second housing unit 2 by wire and insert a flexible wiring substrate provided with a large number of pins through the hinge 3. Therefore, it is possible to control complication of a structure of the hinge 3 and prevent complication of a packaging process. It is possible to realize a reduction in size and thickness and improvement of reliability of the cellular phone while controlling an increase in cost. Moreover, it is possible to realize an increase in display size and an increase in functions of the cellular phone without spoiling portability of the cellular phone.

Note that, although the antenna for external radio communication 6 is mounted on the first housing unit 1, the antenna for external radio communication 6 may be mounted on the second housing unit 2. In this case, since the antenna for external radio communication 6 is not blocked by the second housing unit 2 when the cellular phone is used, it is possible to expect communication with higher efficiency. In this case, power is fed from a communication control unit of the cellular phone incorporated in the first housing unit 1 to the antenna for external radio communication 6 by a coaxial cable.

When internal radio communication is performed between the first housing unit 1 and the second housing unit 2, second category information used for control or processing of first category information, which is sent through the internal radio communication, may be exchanged by wire between the first housing unit 1 and the second housing unit 2. Consequently, it is possible to avoid complication of a system involved in making transmission wireless by transmitting a group of signals, high-speed transmission of which is difficult, by radio, avoiding various problems involved in an increase in speed of transmission data, and transmitting signals of synchronization information and the like necessary for radio transmission by wire.

### (Second embodiment)

Fig. 3 is a perspective view showing an external appearance of rotation type cellular phone to which the radio communication control method of the invention is applied.

In Fig. 3, operation buttons 24 are arranged on a surface of a first housing unit 21 and a microphone 25 is provided at a lower end of the first housing unit 21. An antenna for external radio communication 26 is attached to an upper end of the first housing unit 21. A display 28 is provided on a surface of a second housing unit 22 and a speaker 29 is provided at an upper end of the second housing unit 22. Antennas for internal radio communication 27 and 30, which perform internal radio communication between the first housing unit 21 and the second housing unit 22, are provided in the first housing unit 21 and the second housing unit 22.

The first housing unit 21 and the second housing unit 22 are coupled via a hinge 23. It is possible to arrange the second housing unit 22 over the first housing unit 21 or shift the second housing unit 22 from the first housing unit 21 by rotating the second housing unit 22 horizontally with the hinge 23 as a fulcrum. It is possible to protect the operation buttons 24 with the second housing unit 22 and prevent the operation buttons 24 from being operated by mistake while the cellular phone is carried by arranging the second housing unit 22 over the first housing unit 21. It is possible to operate the operation buttons 24 while looking at the display 28 and make a call while using the speaker 29 and the microphone 25 by shifting the second housing unit 22 from the first housing unit 21.

It is possible to perform data transmission between the first housing unit 21 and the second housing unit 22 through internal radio communication using the antennas for internal radio communication 27 and 30 by providing the antennas for internal radio communication 27 and 30 in the first housing unit 21 and the second housing unit 22, respectively. For example, it is possible to send image data and sound data, which are captured into the first housing unit 21 via the antenna for external radio communication 26, to the second housing unit 22 through the internal radio communication using the antennas for internal radio communication 27 and 30 and cause the display 28 to display an image and cause the speaker 29 to output a sound.

This makes it unnecessary to insert a flexible wiring substrate provided with a large number of pins through the hinge 23. Therefore, it is possible to control complication of a structure of the hinge 23 and prevent complication of a packaging process. Consequently, it is possible to realize a reduction in size and thickness and improvement of reliability of the cellular phone while controlling an increase in cost. Moreover, it is possible to realize an increase in display size and an increase in functions of the cellular phone without spoiling portability of the cellular phone.

When internal radio communication is performed between the first housing unit 21 and the second housing unit 22, second category information used for control or processing of first category information, which is sent through the internal radio communication, may be exchanged by wire between the first housing unit 21 and the second housing unit 22. Consequently, it is possible to avoid complication of a system involved in making transmission wireless by transmitting a group of signals, high-speed transmission of which is difficult, by radio, avoiding various problems involved in an increase in speed of transmission data, and transmitting signals of synchronization information and the like necessary for radio transmission by wire.

Note that, in the embodiments described above, the cellular phones are explained as examples. However, it is also possible to apply the invention to a video camera, a PDA (Personal Digital Assistance), a notebook personal computer, and the like.

### (Third embodiment)

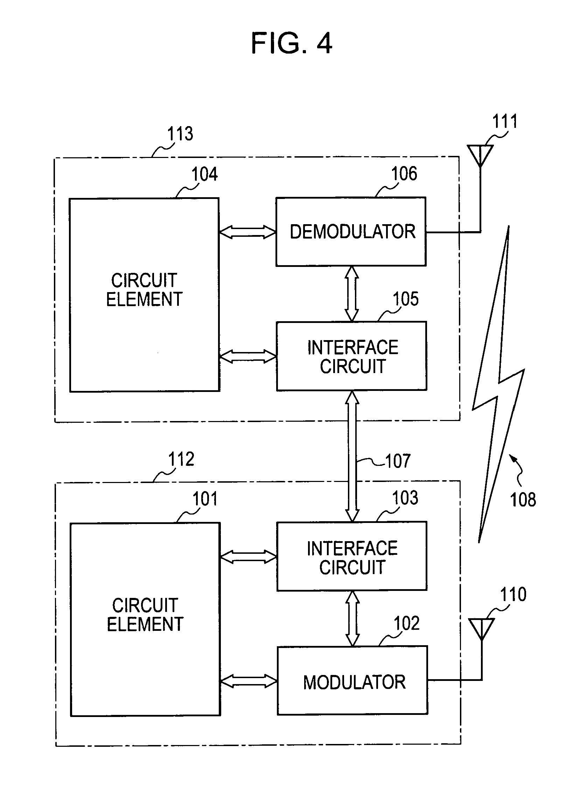

Fig. 4 is a conceptual diagram showing a main part of an embodiment of an information transmission system according to the invention.

In Fig. 4, a transmission unit block 112 and a reception unit block 113 are provided and it is assumed that data is transmitted from the transmission unit block 112 to the reception unit block 113. A circuit element 101 having transmission information is provided in the transmission unit block 112 and a circuit element 104 having transmission information is provided in the reception unit block 113. Interface circuits 103 and 105, which communicate with each other via a wire path 107, are provided in the transmission unit block 112 and the reception unit block 113, respectively. In addition, a transmission antenna 110 and the reception antenna 111, which communicate with each other via a radio propagation path 108, are provided in the transmission unit block 112 and the reception unit block 113, respectively.

The transmission information outputted by the circuit element 101 is categorized into first category information and second category information. The first category information is modulated by a modulator 102 and transmitted from the transmission antenna 110 as an electromagnetic wave. The second category information is communicated by the wire path 107 through the interface circuit 103.

An electromagnetic signal carrying the first category information outputted from the transmission antenna 110 and propagated in the space (the radio propagation path 108) is received by the reception antenna 111, demodulated by a demodulator 106, and outputted to the circuit element 104. The second category information transmitted through the wire path 107 is communicated to the circuit element 104 via the interface circuit 105. The second category information may be transmitted from the reception unit block 113 to the transmission unit block 112. In that case, the second category information is transmitted from the interface circuit 105 to the interface circuit 103.

As the first category information, parallel data required to be multiplexed such as high-speed data and a bus line, wire transmission of which is difficult, is selected. These pieces of information belonging to a first category are transmitted by radio. An electromagnetic field irradiated from the transmission antenna 110 is set not to exceed an upper limit defined by the law. A radiation level accepted for a radio station not requiring a license is far lower than a regulation of EMI. However, since a communication distance is very short, it is possible to secure a communication path of a sufficient quality by setting a link budget appropriately.

In this way, a large amount of information requiring high-speed transmission is propagated in the space by radio rather than being communicated via a data line. Thus, it is unnecessary to use the data line and it is possible to eliminate the conventional problem of structures of a connector and a hinge involved in the data line.

In the conventional transmission through a data line, there is a disadvantage that charging in and discharging from a stray capacitance increase as speed of the transmission is increased, power consumption increases, and unnecessary radiation power radiated from a data line path increases to make it difficult to take measures against interference with apparatuses around a radio communication apparatus. In the transmission through a data line, since a logic level is defined, it is essentially impossible to reduce power consumption. There is only a symptomatic treatment such as strengthening of a shield to reduce unnecessary radiation.

On the other hand, according to such a method of this embodiment, a sufficient communication quality only has to be secured in a very short distance, that is, the inside of an identical system. Thus, it is possible to decrease radiation power from the transmission antenna 110 to a degree of this value and the increase in power consumption is improved essentially. This makes it easy to take measures against EMI. The radio communication apparatus is released from the limitations such as the increase in power consumption, the component arrangement, and the drawing-around of a line involved in termination for impedance matching of a communication line.

In the method of radio communication used for the invention, a communication distance is limited in an identical housing or an identical system. Thus, it is possible to take a method simpler than a technique used for the conventional radio communication apparatus. What embodies the method is the second category information transmitted by wire. As the second category information, information not requiring transfer of high-speed and large quantity information such as synchronization information for radio transmission and reception, oscillator information, and feedback information for feeding back a reception state of data is possible. In particular, if synchronization information of a communication packet is transmitted by wire, a circuit for extracting the synchronization information on the reception side is made unnecessary. Thus, it is possible to extremely simplify a circuit on the reception side.

By sending synchronization information of a correlator necessary for spectrum spread and UWB communication, it is also possible to extremely simplify a structure of the correlator. Moreover, if oscillator information can be transmitted, it is possible to share a clock signal serving as a reference between transmission and reception. Thus, accuracy of an oscillation frequency required of an oscillator is extremely relaxed to make it easy to realize an electronic apparatus. In the case of an electronic apparatus having a short distance communication interface such as a cellular phone, Bluetooth, or a UWB, when an electromagnetic wave for sending the first category information may interfere with original communication of the electronic apparatus, an operation state of the electronic apparatus is exchanged as the second category information between transmission and reception of the first category information so as not to interfere with a radio wave used by the electronic apparatus. This makes it possible to change a frequency and transmission power of the electromagnetic wave for transmitting the first category information and eliminate interference with the original communication. In other words, in the cellular phone or the like, a frequency of a transmission channel thereof is selected as the second category information. In the Bluetooth and the UWB, a hopping pattern or the like thereof is selected as the second category information.

The second category information may be sent from the reception side to the transmission side of the first category information. In this way, it is possible to feed back a reception state of the first category information, send a resend request, an increase or decrease request for electromagnetic energy to be radiated, a pre-emphasis parameter for improving distortion of a transmission path, and the like from the reception side to the transmission side, and improve a quality of communication at small hardware cost. In particular, when the increase or decrease request for electromagnetic energy to be radiated is fed back, it is possible to set the electromagnetic energy to a lower limit electromagnetic energy, with which a communication quality can be secured on the reception side, and reduce unnecessary radiation. This is a value lower than unnecessary radiation field energy of the conventional high-speed data transmission by wire, for which a signal level at the reception end is defined and which is driven together with a stray capacitance by large energy in order to secure the defined value. This makes it extremely easy to take measures against EMI. Since there is no data line including a stray capacitance to be driven, it is also possible to reduce power consumption because information is transmitted by radio.

### (Fourth embodiment)

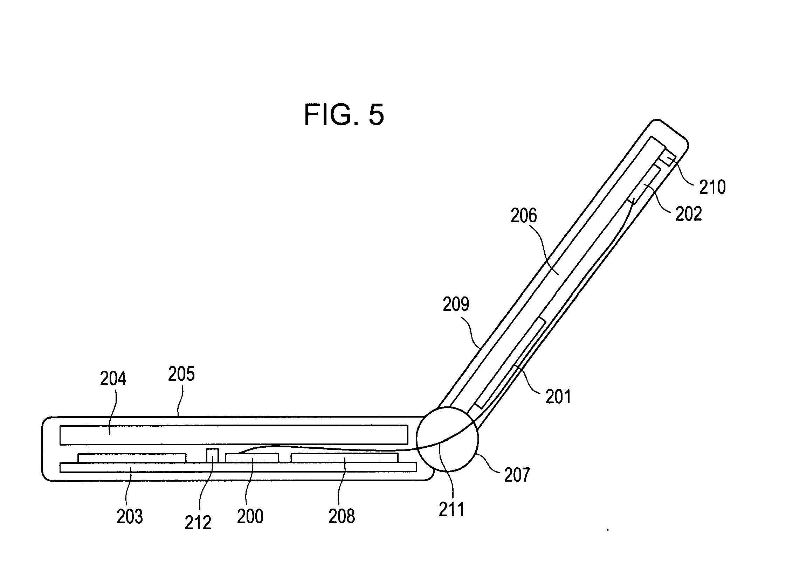

Fig. 5 is a diagram showing an embodiment of an electronic apparatus according to the invention.

In Fig. 5, the electronic apparatus is divided into a body unit 205 and a display unit 209, which are integrated via a hinge 207. Various input and output devices such as a keyboard and a display device are connected to the electronic apparatus. A body unit substrate 203 carrying out function control for an electronic apparatus body, a keyboard 204 serving as an input device, and a liquid crystal controller 208, which generates display data according to control of an electronic circuit on the body substrate 203, are provided in the body unit 205. A liquid crystal display 206 serving as a display device is provided in the display unit 209. A transmission antenna 212 and a reception antenna 210 for performing radio communication each other are provided in the body unit 205 and the display unit 209, respectively. The body unit 205 and the display unit 209 are connected to each other by a line 211 for performing wire communication each other.

Display data generated by the liquid crystal controller 208 is sent to a modulator 200 as first category information and modulated. The display data is converted into an electromagnetic wave (a radio wave) by the transmission antenna 212 and propagated in the space. An electromagnetic signal transmitted from the transmission antenna 212 is received by the reception antenna 210, demodulated into the display data by a demodulator 202, sent to a liquid crystal drier 201, and displayed on the liquid crystal display 206.

A synchronizing signal for the modulator 200 and the demodulator 202 is transmitted to the demodulator 202 as second category information through the line 211. Since a data rate of this signal is not so high and the number of necessary data lines is small, it is easy to lay wiring through the hinge. Since a degree of freedom of wiring and component arrangement increases, it is also possible to arrange the modulator 200 and the transmission antenna 212 serving as transmission units for a signal and the demodulator 202 and the reception antenna 210 serving as reception units of the signal in positions distant from the hinge 207.

As speed of data intended to be transmitted increases, it becomes difficult to transmit the data in a transmission line. However, transmission by an electromagnetic wave in the space becomes easier. In this way, if a signal is sent through a wire line and the modulator 200 and the demodulator 202 are synchronized, synchronization detection for synchronization is made unnecessary on the demodulator 202 side. Thus, it is possible to simplify a circuit. As the semiconductor device manufacturing technique is improved in recent years, it is possible to simplify the modulator 200 and the demodulator 202, which are capable of performing radio transmission of a high-frequency wave, in this way and incorporate the modulator 200 and the demodulator 202 in the electronic apparatus at low cost. This is highly practical.

### (Fifth embodiment)

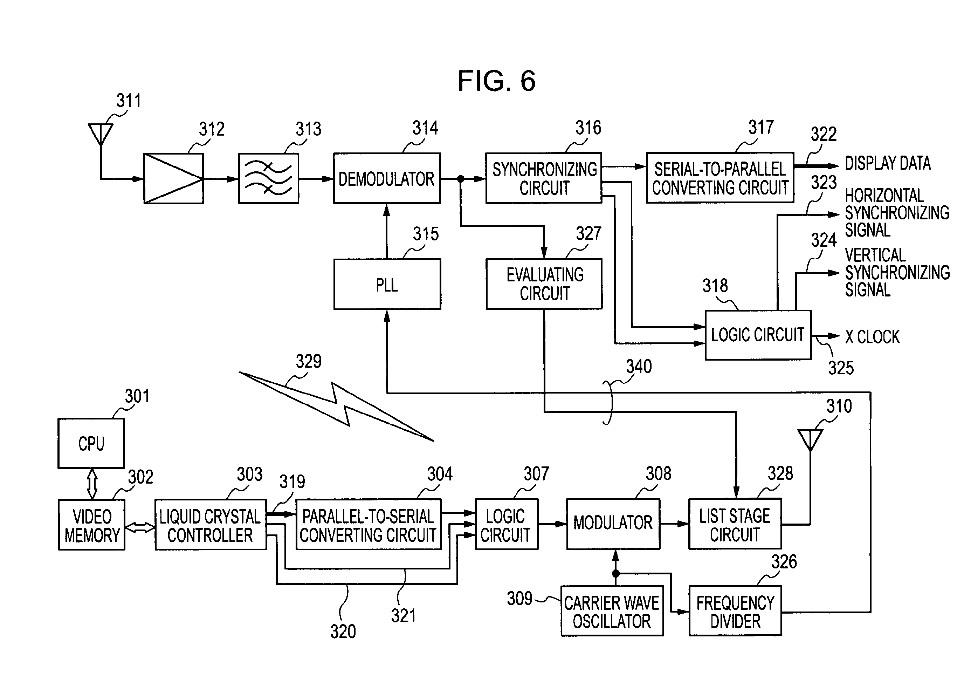

Fig. 6 is a block diagram showing a more detailed constitution of the information transmission system according to the invention and an embodiment of an electronic apparatus using the information transmission system.

In Fig. 6, a CPU 301 generates display data, which should be displayed, according to an arithmetic operation or the like and records the display data in a video memory 302. A liquid crystal controller 303 reads out data 319, which is displayed on the display, from the video memory 302 according to a predetermined order and outputs the data 319 together with a vertical synchronizing signal 321 and a horizontal synchronizing signal 320. Since the data 319 to be displayed is usually read out from the video memory 302 as data in parallel for each word by a unit of pixel, the data 319 is subjected to parallel-serial conversion by a parallel-serial converting circuit 304 and transmitted to a logic circuit 307. The logic circuit 307 receives a signal outputted from the parallel-serial converting circuit 304 and the horizontal synchronizing signal 320 and the vertical synchronizing signal 321 outputted from the liquid crystal controller 303 to generate a packet. In addition, the logic circuit 307 gives a preamble for synchronization necessary for communication such as timing for synchronization detection to the packet. The packet is modulated by the modulator 308 at a carrier frequency generated by a carrier wave oscillator 309 and transmitted to the transmission antenna 310 through a last stage circuit 328. Simultaneously, an output of the carrier wave oscillator 309 is divided by a frequency divider 326, converted into a low frequency, and communicated to the reception side as one piece of the second category information through a wire line 340.

The reception antenna 311 receives an electromagnetic signal transmitted from the transmission antenna 310. The signal received by the reception antenna 311 is amplified by a preamplifier 312. A component of an unnecessary band of the signal is removed by a band-pass filter 313. The signal is inputted to a demodulator 314. The demodulator 314 multiplies a frequency of an output of the frequency divider 326, which is sent through the wire line 340 as one piece of the second category information, with a PLL 315, restores a carrier wave frequency and supplies the carrier wave frequency to the demodulator 314, and performs demodulation of the electromagnetic signal. A synchronizing circuit 316 detects a preamble in a received signal packet and detects synchronization timing necessary for demodulation and a synchronizing signal for driving a liquid crystal. A logic circuit 318 generates a horizontal synchronizing signal 323, a vertical synchronizing signal 324, and a transfer clock 325 for an X driver from the demodulated packet to be timed to coincide with display data 322 in the packet. The logic circuit 318 outputs the horizontal synchronizing signal 323, the vertical synchronizing signal 324, and the transfer clock 325 to a driver of a liquid crystal display as signals corresponding to a display data signal 5716, a horizontal synchronizing signal 5714, a vertical synchronizing signal 5718, and an X clock signal 5715 in Fig. 40, respectively, and performs display.

As an oscillation frequency of the carrier wave oscillator 309, a frequency not interfering with an original object of an electronic apparatus using a radio wave such as a radio receiver or a cellular phone and not being interfered by the object is selected. If a frequency equal to or higher than 2 GHz is selected, an occupied band is about 200 MHz even if 100 Mbps data is transmitted. Thus, it is usually possible to use the electronic apparatus without any problem in most cases.

In general, in radio communication, carrier wave frequencies treated by the modulator 308 on the transmission side and the demodulator 314 on the reception side need to coincide with each other. High accuracy is required for a frequency of the carrier wave oscillator between transmission and reception. An error between the carrier wave frequencies directly appears as deterioration in communication quality. However, according to the constitution of the invention described above, since the modulator 308 and the demodulator 314 use a signal of the identical carrier wave oscillator 309 as a reference, an error does not occur. Since accuracy of the carrier wave oscillator 309 is not a problem, there is an effect of a reduction in cost. The frequency divider 326 and the PLL 315 are not indispensable. An output of the carrier wave oscillator 309 may be directly sent to the demodulator 314. However, it is difficult to transmit the output through a wire path because a carrier wave frequency is rather high in general. It is more practical to divide the output and transmit the output at a reduced frequency, and multiply the output with the PLL 315 to restore a carrier wave identical with the output of the carrier wave oscillator 309.

An evaluating circuit 327 evaluates a reception state from the output of the demodulator 314 according to, for example, a reception error ratio or the like by CRC and feeds back a result of the evaluation to the last stage circuit 328 as the second category information through the wire line 340. The last stage circuit 328 controls electric power supplied to the transmission antenna 310 so as to be lower limit transmission power with which a sufficient communication quality can be secured on the reception side of an electromagnetic signal. This makes it possible to keep a communication quality with radiation power far smaller than unnecessary radiation power generated from the conventional wire transmission path where a reception signal level has to be kept at a predetermined value. Thus, fundamental measures against EMI are realized.

It is also possible to attach pre-emphasis or pre-distortion to an electromagnetic field to be generated such that a propagation path characteristic of a radiation field is compensated by this feedback information. This makes it possible to obtain a predetermined communication quality with predetermined radiation field power. Since the transmission power and the propagation path characteristic change significantly according to component arrangement or the like, it is necessary to adjust parameters in a try and error manner by trial manufacturing or the like at an initial stage of apparatus design. However, according to the constitution described above, since such parameter adjustment and setting are performed automatically, there is an effect of a significant reduction in development man-hour. The method of this embodiment of controlling the transmission side and keeping a communication quality is a concept greatly different from the conventional radio communication technique in which an AGC (Automatic Gain Control) circuit is provided on the reception side to control receiver sensitivity (gain). There is an effect that a system constitution is simplified and unnecessary radiation can be controlled to a minimum level.

By adopting the constitution described above, it is possible to realize wireless transmission of high-speed and large-quantity display data sent to a display and eliminate various problems caused by wire transmission such as an increase in power consumption, limitations on wiring positions, problems of EMI, and deterioration in reliability that have become obvious in accordance with an increase in size of the display.

### (Sixth embodiment)

In the fifth embodiment, a horizontal synchronizing signal and a vertical synchronizing signal of the display are packetized and transmitted as the first category information via an electromagnetic wave path 329. However, an output of the liquid crystal controller 303 may be directly transmitted to the logic circuit 318 as the second category information through a wire path.

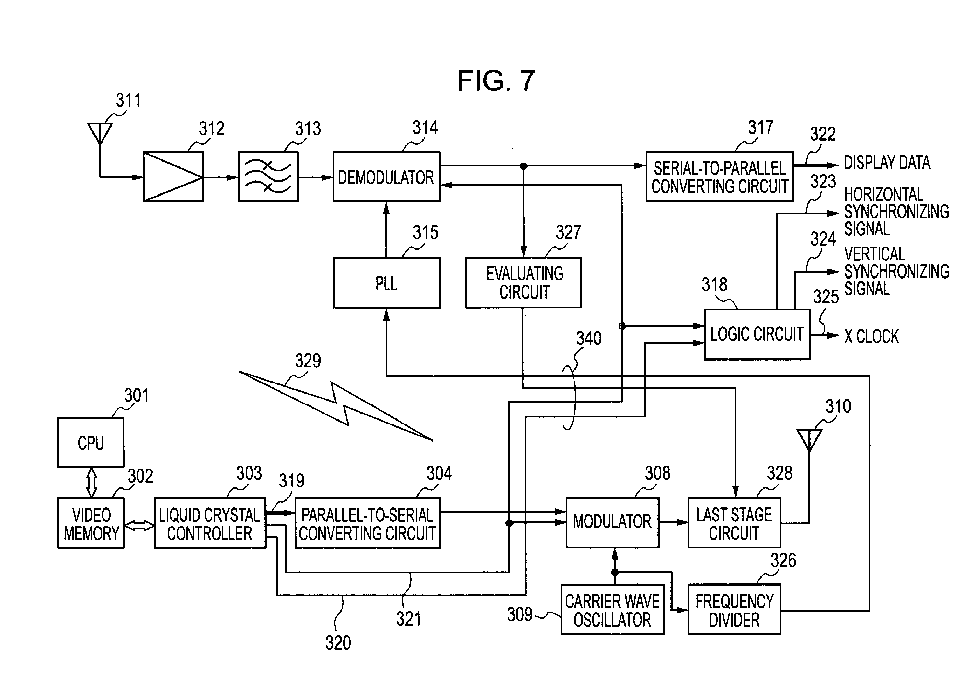

Fig. 7 is a block diagram showing the information transmission system according to the invention and a more simplified main part of the electronic apparatus using the information transmission system. An embodiment in which the logic circuit 307 and the synchronizing circuit 316 are simplified on the basis of the concept described above is shown in the figure. Names and functions of respective blocks denoted by numbers same as those in Fig. 7 are the same as those in Fig. 6.

In Fig. 7, the horizontal synchronizing signal 320 and the vertical synchronizing signal 321 outputted from the liquid crystal controller 303 are sent to the reception side by wire as second category information. The horizontal synchronizing signal 320 is directly supplied to the logic circuit 318 on the reception side without passing through the logic circuit 307 on the transmission side in Fig. 6. The vertical synchronizing signal 321 is directly supplied to the demodulator 314 and the logic circuit 318 on the reception side without passing through the logic circuit 307 on the transmission side in Fig. 6.

Consequently, if a transmission packet is transmitted in synchronization with these synchronizing signals, detection of packet synchronization or the like for learning start of a packet is made unnecessary and the synchronizing circuit 316 and the logic circuit 307 are made unnecessary or extremely simplified.

### (Seventh embodiment)

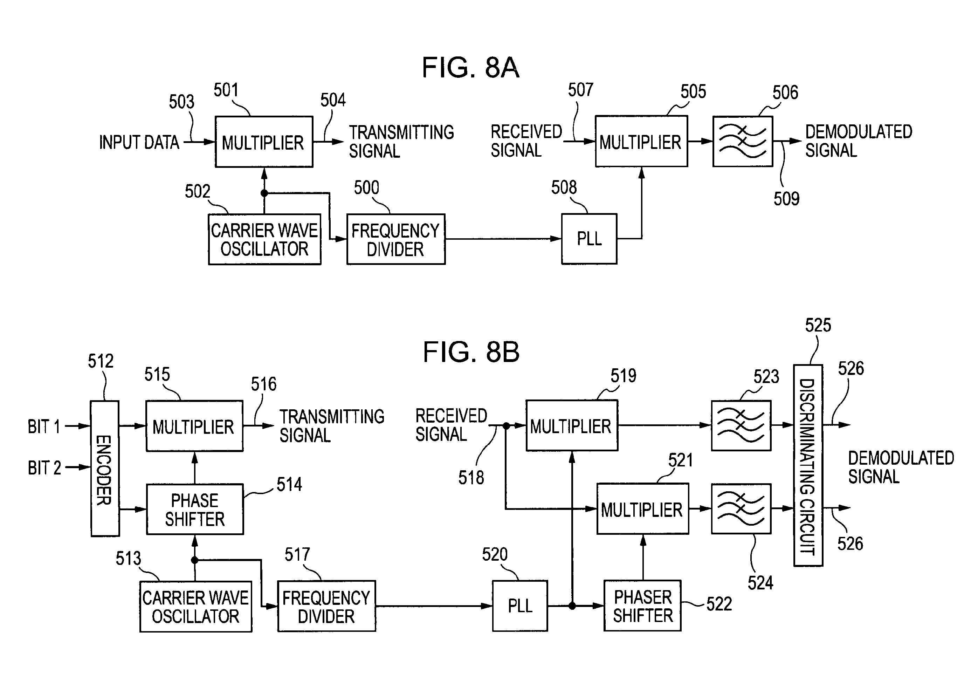

Fig. 8 (a) is a block diagram of a main part of an embodiment of the electronic apparatus according to the invention. Fig. 8(a) is a diagram for describing more in detail the modulator 308 and the demodulator 314 in the fifth and the sixth embodiments.

In Fig. 8(a), a carrier wave oscillator 502 is a rectangular pulse oscillator equivalent to the carrier wave oscillator 309 in the fifth embodiment. A multiplier 501 performs multiplication of the carrier wave oscillator 502 and input data 503, outputs a result of the multiplication as a transmission signal 504, and sends the transmission signal 504 to a transmission antenna. The multiplier 501 only has to be an exclusive OR circuit because both the input data 503 and the output of the carrier wave oscillator 502 are digital signals. When an analog value of a value 1 is associated at the time of logical 0 and an analog value of a value -1 is associated at the time of logical 1, an input and an output of the exclusive OR circuit act exactly as a multiplier. Since a coverage of communication is extremely close, harmonic interference given to other apparatuses or the like is controlled to be low originally. Thus, a filter or the like is unnecessary between an antenna and a modulator output.

The demodulator 314 operates as described below. After a reception signal received by the reception antenna 311 in Fig. 6 is amplified and an unnecessary band is removed from the reception signal, the reception signal is inputted to a multiplier 505 as a reception signal 507. After the reception signal 507 is multiplexed with a carrier wave clock signal reproduced by a PLL 508, a high-frequency component is removed from the reception signal 507 by a low-pass filter 506 and the reception signal 507 is demodulated as a DEMODULATED SIGNAL 509. The low-pass filter 506 removes a high-frequency component (a narrow pulse component caused by a slight phase difference between the reception signal 507 and a reproduction clock waveform of the PLL 508) of an output of the multiplier 505 and outputs the output as the modulation signal 509. The PLL 508 reproduces a carrier wave frequency before frequency division with an output of the carrier wave oscillator 502, which is transmitted as second category information by wire and divided by a frequency divider 500 to have a frequency thereof reduced, as a reference.

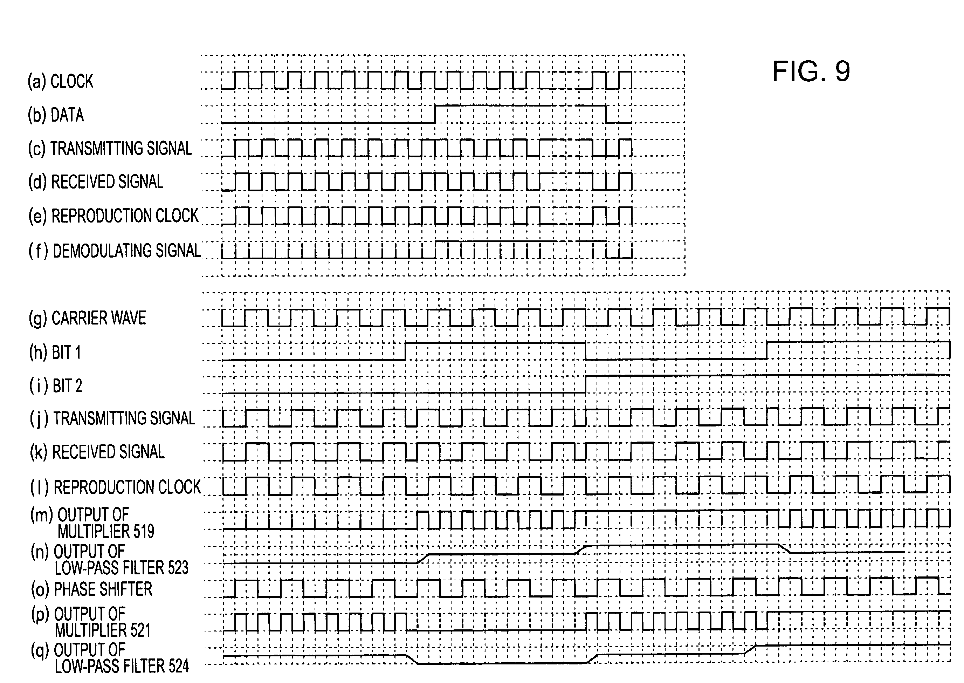

Figs. 9(a) to (c) show time charts of the modulator 308 explained above. Fig. 9(a) shows a carrier wave clock signal generated by the carrier wave oscillator 502, Fig. 9(b) shows the transmission data 503, and FIG. 9(c) shows the transmission signal 504 to be outputted. When the time charts in the figures are considered as digital circuits, the modulator 308 is an exclusive OR. When the time charts are considered as analog values taking values of ±1, the modulator 308 is a multiplier.

Figs. 9(d) to (f) show times charts of a demodulator according to the seventh embodiment. Fig. 9(d) shows a reception signal, Fig. 9(e) shows a pulse train generated from the PLL 508, and Fig. 9(f) is an output of the multiplier 505. The low-pass filter 506 removes a high-frequency component caused by a slight phase difference between the reception signal 507 and an output of the PLL 508 from this signal to restore the DEMODULATED SIGNAL 509.

As it is evident from the figure, when frequencies of a carrier wave clock (Fig. 9(a)) and a reproduction clock (Fig. 9(e)) are different or phases of the clocks shift, demodulation does not operate well. In the conventional radio communication, oscillators with high accuracy are provided on the transmission side and the reception side separately to minimize an error. According to this constitution of this embodiment, since the reproduction clock on the reception side uses the carrier wave oscillator 502 on the transmission side as a reference, it is possible to always secure a reproduction clock of the same frequency. Therefore, an error due to stability of an oscillation frequency and frequency accuracy is not caused. It is possible to establish a circuit with extremely high stability even with an inexpensive oscillator.

Since a coverage of the radio signal transmission used in the invention is a very short distance, it is possible to secure a communication quality with a sufficiently high SN ratio. Thus, it is possible to amplify a signal to a degree that may be regarded as a digital value. In this case, an amplified signal level increases to a logical value level. However, a load driven by the logical value is not a long distance involving a large stray capacitance such as a distance from a CPU to a display but is extremely short and low like the inside of an identical semiconductor chip. Thus, the load does not lead to an increase in power consumption. Even if the reception signal 507 is at an analog level without being amplified to the logical value level, since an output of the PLL 508 is rectangular (taking a value of ±1), it is possible to realize multiplication with a simple switch circuit. In other words, it is possible to realize the multiplication by preparing two amplifiers having equal absolute values of an amplification degree and opposite polarities, selecting an inverting amplifier output of the reception signal 507 at the time of a logical level 1 of the output of the PLL 508, and selecting a non-inverting amplifier output of the reception signal 507 at the time of a logical level 0 of the output of the PLL 508. A circuit with such a constitution may be used as the multiplier 505.

According to the constitution described above, it is possible to realize the modulator 308 with an exclusive OR circuit and realize the demodulator 314 with one exclusive OR circuit or an amplifier, which has positive and negative amplification degrees, and a switch circuit, and a low-pass filter extremely easily.

### (Eighth embodiment)

Fig. 8(b) is a block diagram of a main part of an embodiment of the electronic apparatus according to the invention. Fig. 8(b) is a diagram for describing more in detail another example of the modulator 308 and the demodulator 314 in the fifth and the sixth embodiments.

The simplified BPSK modulation is explained as an example in the seventh embodiment. However, in the eighth embodiment, an example based on QPSK is explained in order to describe a case in which more general phase modulation is used. A carrier wave oscillator 513 is a rectangular pulse oscillator equivalent to the carrier wave oscillator 309 in the fifth and the sixth embodiments. In the QPSK, two bits (i.e., a data bit 1 and a data bit 2) are allocated to each symbol and encoded to transmit a transmission signal. In other words, a phase shift amount is encoded and modulated, for example, as shown in Table 1 to transmit the transmission signal. An encoder 512 controls a phase shifter 514 and a multiplier 515 such that phase shift shown in Table 1 is obtained according to bit patterns of the data bit 1 and the data bit 2.

**Table 1**

| | | | | |
|---|---|---|---|---|
| Bit 1 | 0 | 1 | 0 | 1 |
| Bit 2 | 0 | 0 | 1 | 1 |
| Phase shift amount | 0 | +90° | +180° | +270° |

Figs. 9(g) to (j) are time charts showing operations of respective units of the modulator shown in Fig. 8 (b) . A bit 1 (Fig. 9(h)) and a bit 2 (Fig. 9(i)) of transmission data are encoded by the encoder 512. The encoder 512 performs control to decide whether a carrier wave (Fig. 9(g)) oscillated by the carrier wave oscillator 513 is subjected to phase shift of 90° by the phase shifter 514 and whether the carrier wave is inverted (phase shift of 180°) by the multiplier 515 and finally outputs a transmission signal 515 (Fig. 9(j)) subjected to QPSK modulation.

A frequency divider 517 is equivalent to the frequency divider 326 in the fifth and the sixth embodiments. A PLL 520 is equivalent to the PLL 315 in the fifth and the sixth embodiments and generates a reproduction clock (Fig. 9(1)). The reproduction clock outputted by the PLL 520 is multiplied with a reception signal 518 (Fig. 9(k)) by a first multiplier 519 and transmitted to a first low-pass filter 523. A high-frequency component of the reproduction clock is removed. Then, the reproduction clock is transmitted to a discriminating circuit 525. Simultaneously, the reception signal 518 is multiplied with a pulse train (Fig. 9(o)), which is obtained by subjecting a reproduction clock pulse train generated by the PLL 520 to phase shift of 90° by a phase shifter 522, by a second multiplier 521. A high-frequency component is removed from the reception signal 518 by a second low-pass filter 524. The reception signal 518 is transmitted to the discriminating circuit 525. The discriminating circuit 525 extracts outputs (Figs. 9(n) and (q)) of the first and the second low-pass filters 523 and 524 to demodulate the reception signal 518.

According to the constitution described above, it is possible to realize speedup of data transmission without increasing an occupied band of the transmission signal 516. Since both a modulator and a demodulator can be realized by simple digital circuits, it is possible to incorporate the modulator and the demodulator in a semiconductor chip. Thus, an increase in cost and power consumption can be neglected. Since a reproduction clock required on the reception side is generated with the carrier wave oscillator 513 identical with that on the transmission side as a reference, an error due to accuracy of a clock frequency does not occur between transmission and reception. It is possible to perform stable data transmission even with an inexpensive oscillator. Even if a frequency of the carrier wave oscillator 513 is changed unilaterally on the transmission side, since the reception side always follows the change, it is possible to select a frequency not interfering with a communication channel unilaterally on the transmission side according to the communication channel. (This also applies to all the fifth, the sixth, and the seventh embodiments). In other words, it is possible to make it extremely easy to take measures against an interference with communication that is an original object of an electronic apparatus such as a communication apparatus.

### (Ninth embodiment)

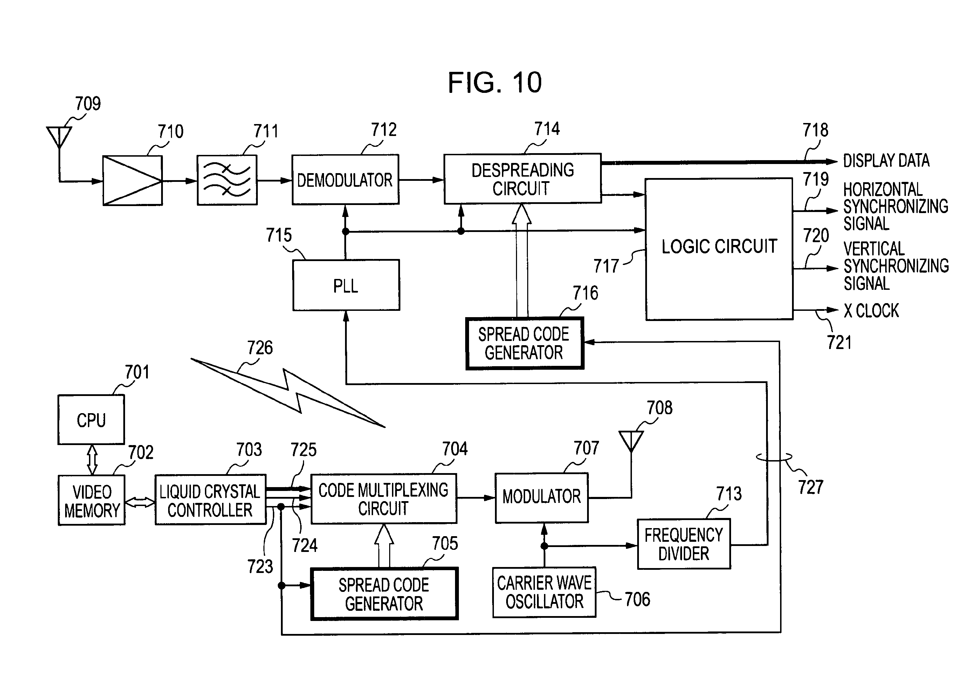

Fig. 10 is a block diagram of a main part of another embodiment of the information transmission system and the electronic apparatus according to the invention.

In Fig. 10, functions of a CPU 701, a video memory 702, and a liquid crystal controller 703 are the same as those explained in the fifth and the sixth embodiments. Display data 725, a horizontal synchronizing signal 723, and a vertical synchronizing signal 724 generated by the liquid crystal controller 703 are multiplexed by a spread code generated by a spread code generator 705 and a code multiplexing circuit 704. In this embodiment, since parallel data is code-multiplexed as described below, the parallel-serial conversion by the parallel-serial converting circuit 304 in the fifth or the sixth embodiment is unnecessary. Therefore, inverse conversion thereof, that is, a serial-parallel converting circuit 317 is also unnecessary.

A set of codes orthogonal to each other is often used as the spread code. Since the display data 725 is read out collectively for each pixel from the video memory 702, the display data 725 is outputted as parallel digital data. Respective bits of this data signal and respective codes generated by the spread code generator 705 are multiplied (or an exclusive OR thereof is calculated) and subjected to analog addition to be code-multiplexed. The multiplexed signal is modulated by a modulator 707 using a carrier wave, which is generated by a carrier wave oscillator 706, and transmitted as first category information with an electromagnetic signal from a transmission antenna 708 through a radio propagation path 726.

The transmitted electromagnetic signal is received by a reception antenna 709 and amplified by a preamplifier 710. After unnecessary signals in bands other than a predetermined band are removed by a band-pass filter 711, the electromagnetic signal is demodulated by a demodulator 712. A PLL 715 divides a carrier wave frequency generated by the carrier wave oscillator 706 with a frequency divider 713 and multiplies the carrier wave frequency with a signal sent as the second category information as a reference to restore the carrier wave frequency. A correlation of the signal demodulated by the demodulator 712 with a spread code for multiplexing, which is generated by a spread code generator 716, is calculated by an inverse spread circuit 714, whereby multiplexed data is separated from the signal. A logic circuit 717 generates a display data signal 718 for driving a liquid crystal driver, a horizontal synchronizing signal 719, a vertical synchronizing signal 720, and a clock signal 721 for an X driver on the basis of detected display data and various kinds of timing and sends the signals to a liquid crystal display to perform display.

Since the demodulator 712 uses a carrier wave that is generated by the PLL 715 with an identical frequency, which is oscillated by the carrier wave oscillator 706 of the modulator 707, as a reference, an error due to accuracy of a carrier wave frequency is not caused. It is possible to generate timing for synchronization detection and timing for inverse spread of the demodulator 712 on the basis of the horizontal synchronizing signal 723 or the like transmitted by wire as the second category information. Consequently, since a circuit for acquisition on the reception side is made unnecessary, it is possible to simplify a circuit. In particular, in the case of code multiplexing, it is possible to use a correlator as a circuit for inverse spread rather than a matched filter.

As it is well known, the matched filter has a complicated circuit in inverse spread. However, in this embodiment, a response time is short and synchronization is unnecessary. On the other hand, when the correlator is used for inverse spread, the inverse spread cannot be performed unless the correlator is synchronized. Usually, the correlator is slid chip by chip to perform calculation in a trial and error manner. Thus, it takes time for the calculation and the inverse spread cannot be performed immediately. However, according to the constitution according to this embodiment, since synchronization information of the correlator is sent by wire as the second category information, it is unnecessary to perform acquisition and sliding and it is possible to perform the inverse spread with an extremely simple circuit.

According to the constitution described above, it is possible to multiplex a signal and transmit and receive the signal without performing parallel-serial conversion of data. This has an effect equivalent to drawing-out of many bus lines in parallel. In particular, multiplexing by an orthogonal code has less limitation and does not require a physical space like bus lines. It is also possible to provide plural transmitting units and plural reception units, respectively, to perform communication in several different locations where transmission and reception of signals are necessary. It is also possible to obtain a spread gain with spreading. In particular, in an apparatus generating a radio wave such as a cellular phone, there is also an effect for improvement of interference resistance and interference exertion with a radio wave that is an original object of the apparatus. Since synchronization information and information on a carrier wave frequency are sent by wire as the second category information, it is easy to match carrier wave frequencies between transmission and reception. Thus, accuracy of the carrier wave oscillator 706 is not required. Acquisition for inverse spread is also made unnecessary. It is possible to significantly simplify the inverse spread circuit 714, which is highly realizable.

### (Tenth embodiment)

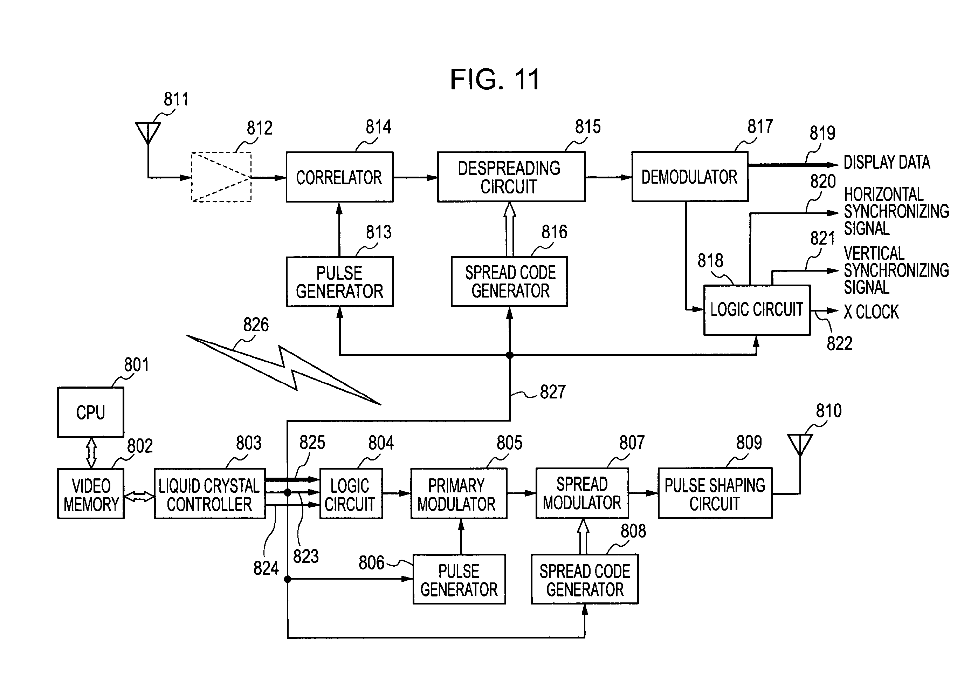

Fig. 11 is a block diagram of a main part of an embodiment of the data transmission and the electronic apparatus according to the invention.

In Fig. 11, functions of a CPU 801, a video memory 802, and a liquid crystal controller 803 are the same as those explained in the fifth and the sixth embodiments. Display data 825, a horizontal synchronizing signal 823, and a vertical synchronizing signal 824 generated by the liquid crystal controller 803 are subjected to rearrangement of data such as parallel-serial conversion, grant of a preamble, and establishment of a packet by a logic circuit 804 and converted into a serial signal. A primary modulator 805 modulates a pulse train generated by a pulse generator 806 to this signal. In primary modulation, it is possible to use pulse position modulation, biphase pulse modulation, and the like for a pulse train. A signal subjected to the primary modulation is subjected to spread modulation by a spread modulator 807 with a spread code generated by a spread code generator 808.

The pulse train subjected to spread modulation is subjected to waveform shaping for pulses of extremely short time to be shaped into wide band pulses with a low spectrum density by a pulse shaping circuit 809. Then, the pulse train is radiated as an electromagnetic wave by a transmission antenna 810. An electromagnetic field to be radiated is not an electromagnetic field with a modulated sine wave but is a very narrow pulse train. Communication using short pulses in a wide band is called Impulse Radio or a UWB communication system.

The radiated electromagnetic wave is received by a reception antenna 811 through a radio propagation path 826 and amplified by a preamplifier 812 as required. Then, correlation with a pulse template generated by a pulse generator 813 is calculated by a correlator 814. An output of the correlator 814 is subjected to inverse spread by an inverse spread circuit 815 with a spread code generated by a spread code generator 816 and, then, demodulated by a demodulator 817 and converted into the signal before the primary modulation (the input of the primary modulator 805). A logic circuit 818 generates a display data signal 819 for driving a liquid crystal driver, a horizontal synchronizing signal 820, a vertical synchronizing signal 821, and an X clock signal 822 for an X driver on the basis of display data detected by the demodulator 817 and a horizontal synchronizing signal 823 sent from the transmission side as second category information through a wire path 827 and sends the signals to a liquid crystal display to perform display. When there is such timing information to be a reference on the reception side, constitutions of the correlator 814 and the logic circuit 818 are simplified by a great degree compared with the case in which there is not timing information to be a reference.

The essence of the UWB communication resides in use of a short pulse with an extremely low spectrum density. When a UWB is used, a legal upper limit of radiation energy is accepted to about an unnecessary radiation level regulated by EMI and is by far laxer (about 20 dB) than an upper limit of a radio station not requiring a license. Therefore, even in an electronic apparatus generating a strong radio wave, which is an original object, in the inside thereof such as a cellular phone, it is easy to set a link budget with which a sufficient communication quality can be secured. Since a pulse width of a pulse to be used can be narrowed and a peak value thereof can be set high, the preamplifier 812 does not have to be provided.

In the case of an electronic apparatus having the UWB as an interface for short distance communication, when it is attempted to apply this embodiment to data transmission in the electronic apparatus, it is likely that the apparatuses interfere with each other to cause significant interference. However, it is possible to avoid this problem by, for example, synchronizing a window on a time axis or performing frequency hopping to synchronize a hopping sequence thereof. As synchronization information in that case, this embodiment only has to be applied as the second category information.

According to the constitution described above, modulation operation is performed only on the time axis and it is possible to realize most of components only with a digital circuit handling a pulse. Thus, it is easy to package circuit elements as an IC. A spread gain in a time direction is obtained by adopting a short pulse. Interference resistance and interference exertion with a radio wave radiated as an original function of the electronic apparatus are improved. Moreover, it is possible to realize multi-channelizing as a communication transmission path.

### (Eleventh embodiment)

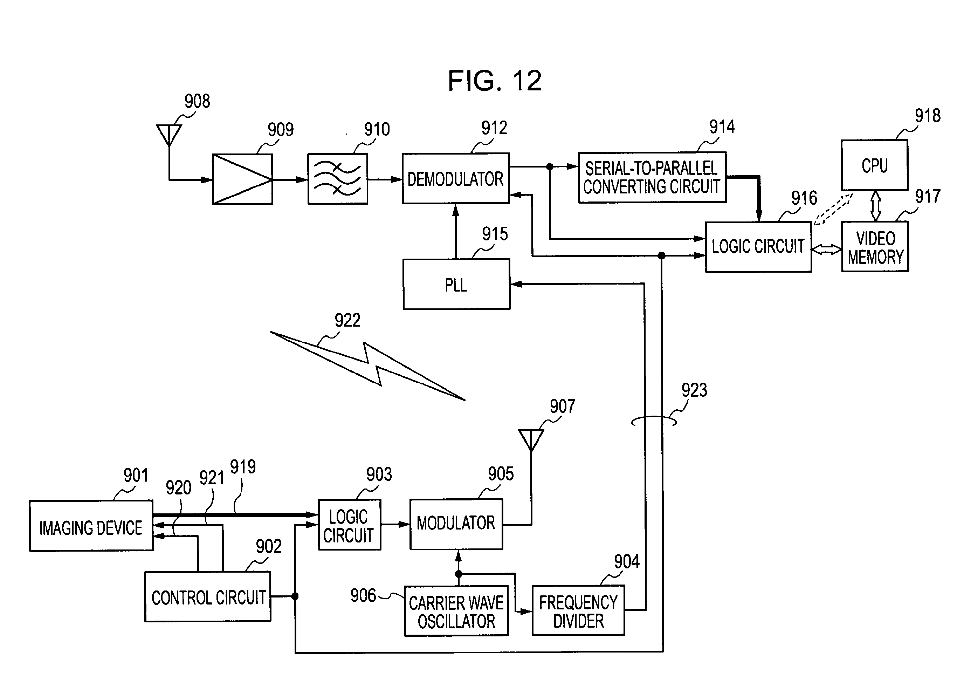

Fig. 12 is a block diagram of a main part of another embodiment of the electronic apparatus according to the invention. Fig. 12 shows an example in which the information transmission system according to the invention is applied to an electronic apparatus that uses an imaging device.

In Fig. 12, an imaging device 901 is started by a horizontal synchronizing signal 920 and a vertical synchronizing signal 921 generated from a control circuit 902 and outputs image data 919 imaged by the imaging device 901. A logic circuit 903 receives these signals and establishes a packet for radio transmission. The packet modulates a carrier wave generated by a carrier wave oscillator 906 with a modulator 905 and is radiated from a transmission antenna 907 as an electromagnetic wave.

An electromagnetic signal transmitted from the transmission antenna 907 is propagated through a radio propagation path (a space) 922, received by a reception antenna 908, and amplified by a preamplifier 909. An unnecessary out-band signal is removed from the electromagnetic signal by a band-pass filter 910. The electromagnetic signal is inputted to a demodulator 912. A PLL 915 divides a carrier wave outputted from the carrier wave oscillator 906 with a frequency divider 904, multiplies an output of the frequency divider 904, which is sent as second category information thorough a wire path 923, by a carrier wave frequency to generate a carrier wave, and inputs the carrier wave in the demodulator 912. The demodulator 912 uses synchronization timing necessary for demodulation in a signal from the control circuit 902, which is transmitted through a wire path 923 as the second category information, to perform demodulation of a reception signal. A serial-parallel converting circuit 914 extracts an image data part from a demodulated reception packet and performs serial-parallel conversion for each pixel to generate image data.

A logic circuit 916 generates a memory address for writing modulated pixel data in a video memory 917 according to the pixel data and writes image data in the address of the video memory 917 directly or via a CPU 918. The CPU 918 accesses the video memory 917 and uses the image data for various applications.

The CPU 918 usually performs control such as start of the imaging device 901. As a method of transmitting information on this start to the control circuit 902 of the imaging device 901, it is advisable to transmit the information by wire as the second category information as it has a low bit rate. However, it is also possible to transmit the information by radio. In that case, transmitting/receiving means are provided on both the CPU 918 side and the imaging device 901 side to perform bidirectional communication. In particular, in a cellular phone of a clam shell structure, the imaging device 901 and a display device are often placed close to each other on the opposite side of the CPU 918. Image data imaged by the imaging device 901 is sent to the CPU 918 side and processed and, then, returned to the display device side. In such a case, it is possible to realize the radio transmission by adopting a constitution in which the CPU and the imaging device and the display device in the fifth or the sixth embodiment are placed back to back each other.

By adopting the constitution described above, that is, making data transmission from the imaging device 901 wireless, it is possible to eliminate various problems caused by wire transmission such as an increase in power consumption, limitations on wiring positions, problems of EMI, and deterioration in reliability that have become obvious in accordance with an increase in size of the imaging device 901. On the reception side, since synchronization timing necessary for demodulation is sent by wire, it is unnecessary to perform acquisition and it is possible to simplify a circuit significantly. Since a carrier wave generated by an identical oscillation source is used as a reference between transmission and reception, frequency accuracy required of the carrier wave oscillator 906 is extremely relaxed. There is a significant effect on a reduction in cost and realization of the electronic apparatus.

### (Twelfth embodiment)

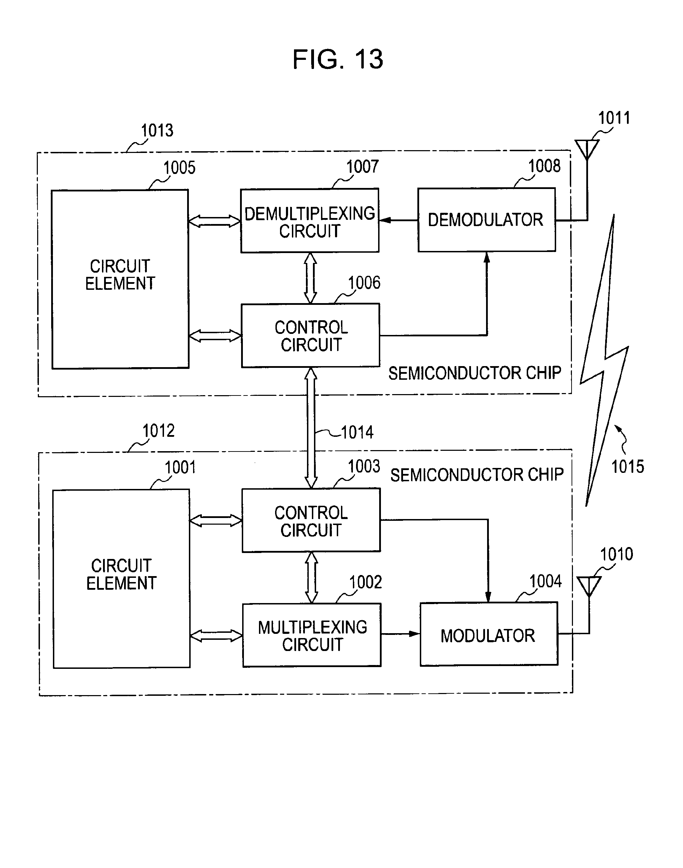

Fig. 13 is a diagram illustrating another embodiment of the electronic apparatus using the information transmission method according to the invention. Fig. 13 shows an example in which the invention is used to data transfer between semiconductor chips.

In Fig. 13, a semiconductor chip 1012 includes a circuit element 1001 that has (generates) plural data, which should be transmitted, in the semiconductor chip 1012. A semiconductor chip 1013 includes a circuit element 1005 that receives the data in the semiconductor chip 1012. The semiconductor chips 1012 and 1013 are provided with control circuits 1003 and 1006, which communicate with each other via a wire path 1014, respectively, and also provided with a transmission antenna 1010 and a reception antenna 1011, which communicate with each other via a radio propagation path 1015, respectively. It is assumed that data is transmitted from the semiconductor chip 1012 to the semiconductor chip 1013.

The control circuit 1003 starts such that the circuit element 1001 outputs the data that should be transmitted. A multiplexing circuit 1002 receives the transmission data from the circuit element 1001 and multiplexes the transmission data. As the multiplexing, the parallel-serial conversion described in the fifth or the sixth embodiment or the code multiplexing described in the ninth embodiment is used. A modulator 1004 receives an output of the multiplexing circuit 1002 and modulates the output. The modulator 1004 transmits the output as an electromagnetic signal with the transmission antenna 1010. The control circuit 1003 simultaneously generates timing signals for multiplexing, synchronization of modulation, and the like and a carrier wave. The control circuit 1003 also generates a signal to be a reference of a carrier wave using the method explained in the fifth to the eleventh embodiments. These signals are transmitted to the control circuit 1006 on the reception side through the wire path 1014.

A signal propagated in a space (a radio propagation path) 1015 and received by the reception antenna 1011 restores a signal demodulated by a demodulator 1008 and multiplexed by a demultiplex circuit 1007. The signal is sent to the circuit element 1005 that receives a signal. The control circuit 1006 receives timing signals such as a multiplex signal and a synchronization signal for modulation and a reference signal of a carrier wave from the transmission side control circuit 1003, performs synchronization for demodulation and demultiplexing, and restores a carrier wave to be used in the demodulator 1008. By receiving these signals, it is possible to simplify circuits for demultiplexing and demodulation significantly and a request for accuracy of an oscillation frequency is relaxed significantly.

The transmission antennas 1010 and 1011 may be built on the semiconductor chips 1012 and 1013. Alternatively, it is also possible that signals are extracted to the outside of the chips via bonding pads and antennas are attached externally.

It is possible to reduce the number of pins of semiconductor chips significantly by adopting such a constitution. It is also possible to reduce electric power significantly compared with the conventional method of driving antennas together with a stray capacitance in order to extract a signal of a logic level via a bonding pad.

### (Thirteenth embodiment)

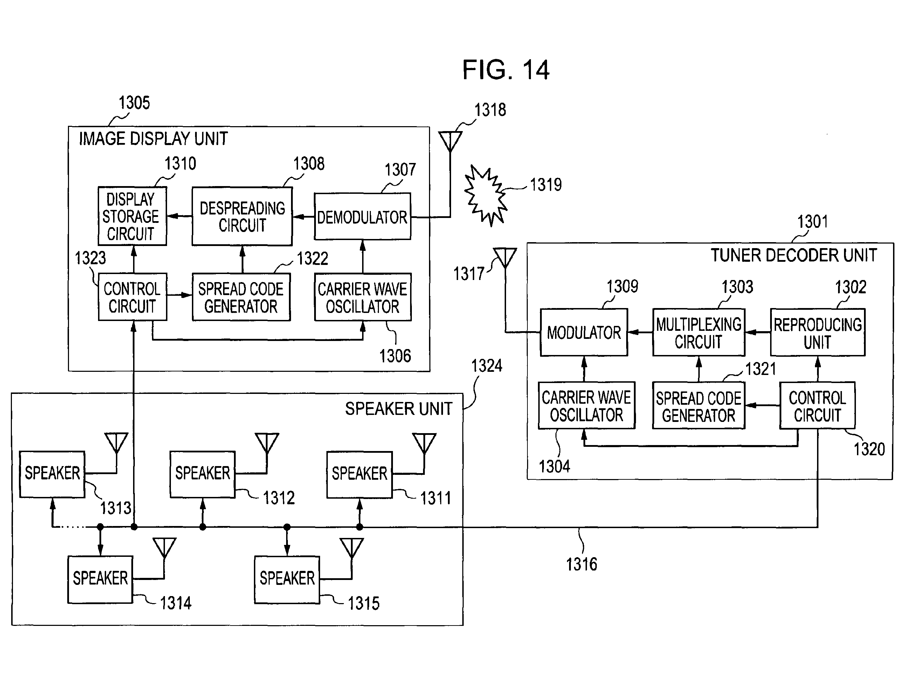

Fig. 14 is a diagram illustrating still another embodiment of the electronic apparatus using the information transmission system according to the invention. Fig. 14 shows an example in which the invention is applied to a home theater.

In Fig. 14, the home theater is constituted by an image display unit 1305, a tuner decoder unit 1301, and a speaker unit 1324. The image display unit 1305 incorporates an image display device and receives and displays an image signal. The speaker unit 1324 usually includes plural speakers 1311, 1312, 1313, 1314, and 1315 and a driving section that receives a sound signal for each of the speakers 1311, 1312, 1313, 1314, and 1315, performs control for an acoustic effect and amplification, and drives the speakers 1311, 1312, 1313, 1314, and 1315. A method described below is adopted for connection among the speakers and the driving section.

A reproduction unit 1302 of the tuner decoder unit 1301 extracts data of images and sounds from an image and sound source such as a TV tuner or a DVD recorder according to an instruction of a control circuit 1320. Data outputted by the reproduction unit 1302 is multiplexed for each image and sound channel by a multiplexing circuit 1303. The multiplexing is performed by multiplexing the data with a spread code outputted by a spread code generator 1321 for each channel in synchronization with a reference signal outputted by the control circuit 1320 and subjecting results of the multiplication to analog addition. The multiplexed data is modulated by a modulator 1309 and transmitted from a transmission antenna 1317 as first category information. A carrier wave oscillator 1304 multiplies a frequency on the basis of a reference signal outputted by the control circuit 1320 to generate a carrier wave. The reference signal outputted by the control circuit 1320 is transmitted to the image display unit 1305 and the speaker unit 1324 as second category information through a wire path 1316. Image data, text data, or sound data is propagated through a radio propagation path 1319 as the first category information, received by a reception antenna 1318, demodulated by a demodulator 1307, and subjected to inverse spread by an inverse spread circuit 1308 to be demultiplexed. Only an image signal is extracted from the data and stored in a display unit storage circuit 1310. The image data stored in the display storage circuit 1310 is sequentially read out and displayed on a screen of the image display device incorporated in the image display unit 1305.

Information sent to the speaker unit 1324 is also copied by the same constitution as the inside of the image display unit 1305. This is not further described because an explanation of the copying is redundant.

The carrier wave for demodulation is multiplexed on the basis of the reference signal, which is transmitted by wire as the second category information by a control circuit 1323, and oscillated by a carrier wave oscillator 1306. A spread code generator 1322 used for inverse spread generates a spread code in synchronization with the reference signal sent as the second category information by the control circuit. By adopting such a constitution, since a carrier wave is always subjected to tracking in both transmission and reception, a carrier wave with high frequency accuracy required of a carrier wave oscillator is not required. Since a code of inverse spread is also synchronized, it is possible to extremely simplify a circuit for inverse spread.

Conventionally, star-shaped wirings are required for the tuner decoder unit 1301, the speaker unit 1324, and the image display unit 1305 and a complicated protocol is adopted for parallel-serial conversion and high-speed transmission. However, by adopting the constitution described above, the wirings and the protocol are extremely simplified. Compared with the case in which all signals are transmitted by radio, since a circuit and a protocol are extremely simplified, there is a significant practical effect.

### (Fourteenth embodiment)

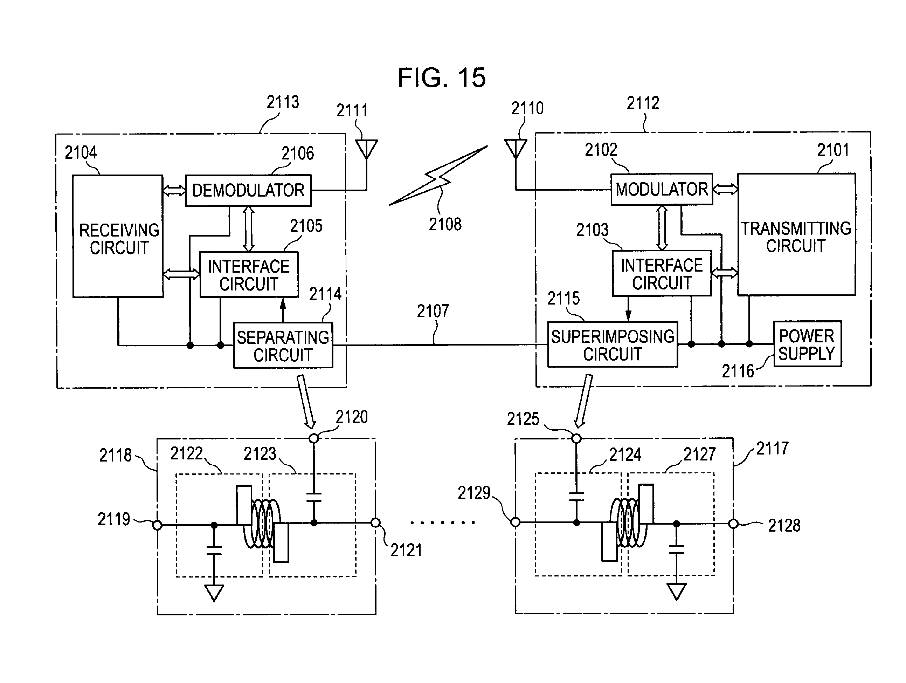

Fig. 15 is a conceptual diagram showing a main part of still another embodiment of the information transmission system according to the invention.

In Fig. 15, it is assumed that data is transmitted from a transmission unit block 2112 to a reception unit block 2113. A transmission circuit 2101 having information, which should be transmitted, is provided in the transmission unit block 2112 and a reception circuit 2104, which receives the transmission information, is provided in the reception unit block 2113.

Transmission information outputted by the transmission bock 2112 is categorized into first category information and second category information. The first category information is modulated by a modulator 2102 and transmitted as an electromagnetic wave from a transmission antenna 2110. The second category information is superimposed on a power supply line 2107 through an interface circuit 2103 and transmitted with power supply by wire. An electromagnetic signal carrying the first category information, which is outputted from the transmission antenna 2110 and propagated in a space (a radio propagation path 2108), is received by a reception antenna 2111, demodulated by a demodulator 2106, and outputted to the circuit 2104. The second category information, which is superimposed on the power supply line and transmitted by wire, is transmitted to the circuit 2104 via an interface circuit 2105. The second category information may be transmitted from the reception block 2113 to the transmission unit block 2112. In that case, the second category information is transmitted from the interface circuit 2105 to the interface circuit 2103.

As the second category information, information not requiring high-speed large-quantity data transfer such as synchronization information for radio transmission and reception, oscillator information, feedback information for feeding back a reception state of data, and encryption information for intensifying security is possible. It is possible to include information outputted by the interface circuit 2103 or the interface circuit 2105 itself in this second category information. The interface circuit 2103 also collects the second category information outputted by the transmission circuit 2101 and finally delivers the second category information together with the second category information generated by the interface circuit 2103 as the second category information.

In particular, if it is possible to acquire synchronization information of a communication packet without depending on the radio propagation path 2108, a circuit for extracting synchronization information on the reception side is made unnecessary and it is possible to extremely simplify a circuit on the reception side. By sending synchronization information for a correlator necessary for spectrum spread and UWB communication, it is also possible to extremely simplify a structure of the correlator. Moreover, if it is possible to transmit oscillator information, it is possible to share a clock signal serving as a reference between transmission and reception. Thus, accuracy of an oscillation frequency required of an oscillator is extremely relaxed to make it easy to realize an electronic apparatus. In the case of an electronic apparatus having a short distance communication interface such as a cellular phone, Bluetooth, or a UWB, when an electromagnetic wave for sending the first category information may interfere with original communication of the electronic apparatus, an operation state of the electronic apparatus is exchanged as the second category information between transmission and reception of the first category information so as not to interfere with a radio wave used by the electronic apparatus. This makes it possible to change a frequency of the electromagnetic wave for transmitting the first category information and eliminate interference with the original communication. In other words, in the cellular phone or the like, it is possible to select a frequency of a transmission channel thereof as the second category information. In the Bluetooth and the UWB, it is possible to select a hopping pattern or the like thereof as the second category information. It is possible to generate these signals from the interface circuit 2103 or the interface circuit 2105.

These pieces of second category information are superimposed on the power supply line 2107 together with power supply and transmitted and received between the transmission block 2112 and the reception bock 2113. A power supply 2116 supplies power to all circuits in the transmission block 2112. The second category information outputted by the interface circuit 2103 is superimposed on the power supply line 2107 by a superimposing circuit 2115. Details of the inside of the superimposing circuit 2115 are shown in a part surrounded by an alternate long and short dash line 2117. A terminal 2128 is connected to the power supply 2116 and a terminal 2129 is connected to the power supply line 2107. The second category information outputted from the interface circuit 2103 is superimposed on the power supply line 2107 from a terminal 2125 through a high-pass filter 2124. A signal of the second category information superimposed by a low-pass filter 2127 does not leak to a terminal 2128 side. Therefore, all the circuits in the transmission block 2112 operate correctly. The second category information superimposed on the power supply line 2107 is separated by a separating circuit 2114 and communicated to the interface circuit 2105.

Details of the inside of the separating circuit 2114 are shown in a part surrounded by an alternate long and short dash line 2118. A terminal 2121 is connected to the power supply line 2107. A signal of the second category information inputted to the terminal 2121 is separated by a high-pass filter 2123 and transmitted from a terminal 2120 to the interface circuit 2105. In order to prevent a leak of the second category information, only energy supplied from the power supply 2112 is transmitted from a terminal 2119 to a low-pass filter 2122, and the low-pass filter 2122 supplies power to all circuits in the reception block correctly through the terminal 2119. When the second category information is sent from the reception block 2113 side to the transmission block 2112 side, functions of the superimposing circuit 2112 and the separating circuit 2114 are reversed. However, the circuits may be identical circuits as shown in Fig. 15.

By adopting such a constitution, it is possible to superimpose the second category information for extremely simplifying the modulator 2102 and the demodulator 2106 of transmission and reception on the power supply line 2107 and transmit the second category information. Thus, it is possible to exchange signals in the electronic apparatus with a minimum number of wirings and realize a highly reliable electronic apparatus with a simple method.

### (Fifteenth embodiment)

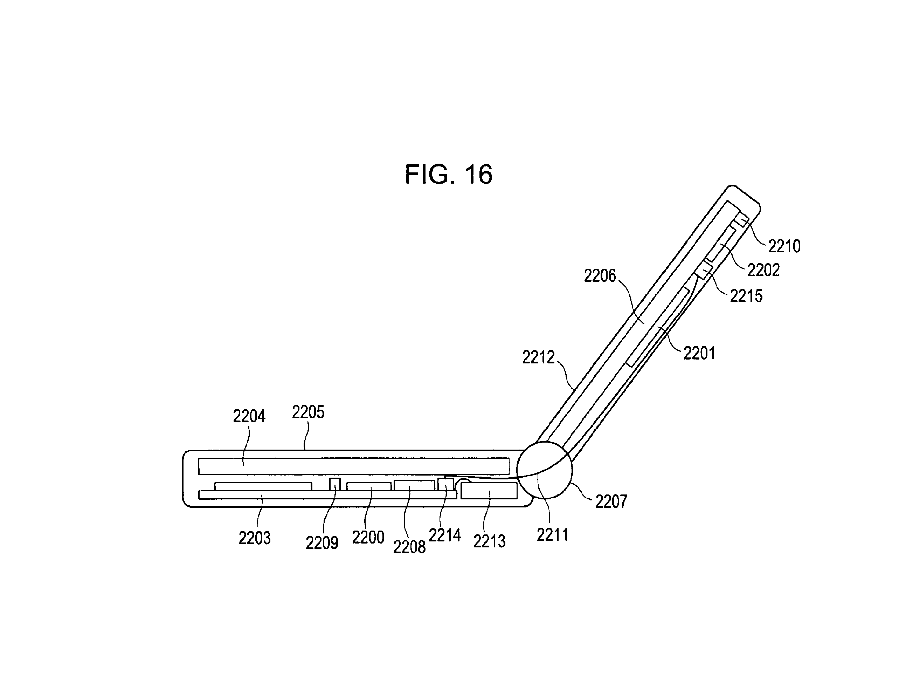

Fig. 16 is a diagram showing still another embodiment of the electronic apparatus according to the invention.

In Fig. 16, the electronic apparatus is divided into a body unit 2205 and a display unit 2212, which are integrated via a hinge 2207. A power supply 2213 is provided in the body unit 2205. In the body unit 2205, a power supply voltage is supplied to respective electronic circuits in the body unit through a wiring on a substrate. Second category information is superimposed on the power supply voltage by a superimposing circuit 2214 and sent to the display unit 2212 through an electric wire 2211. A separating circuit 2215 separates the power supply voltage and the second category information superimposed each other. The power supply voltage is delivered to respective circuits of the display unit 2212 through a wiring on a substrate of the display unit 2212.

Display data generated by a liquid crystal controller 2208 is sent to a modulator 2200 as first category information and modulated, converted into an electromagnetic wave (a radio wave), and propagated in a space from a transmission antenna 2209. An electromagnetic signal transmitted from the transmission antenna 2209 is received by a reception antenna 2210, demodulated into display data by a demodulator 2202, sent to a liquid crystal driver 2201, and displayed on a liquid crystal display 2206.

A synchronization signal for the modulator 2200 and the demodulator 2202 is superimposed on the power supply line 2211 as the second category information by the superimposing circuit 2214 and sent to the separating circuit 2215 through the power supply line 2211. The separating circuit 2215 separates the second category information from the power supply and transmits the second category information to the demodulator 2202. Since data rate of this signal is not so high and the number of necessary data lines is small, it is easy to superimpose the signal on the power supply line 2211 and lay wiring through the hinge 2207. Consequently, a degree of freedom of wiring and component arrangement increases. It is also possible to arrange the modulator 2200 and the transmission antenna 2209 serving as transmission units for a signal and the demodulator 2202 and the reception antenna 2210 serving as reception units of the signal in positions distant from the hinge 2207 as shown in Fig. 16.

As speed of data intended to be transmitted increases, it becomes difficult to transmit the data in a transmission line. However, transmission by an electromagnetic wave in the space becomes easier. In this way, if a control signal for synchronization or the like is sent through a wire line and the modulator and the demodulator are synchronized, synchronization detection for synchronization is made unnecessary on the demodulator side. Thus, it is possible to simplify a circuit. Moreover, since the wire line is commonly used with the power supply line 2211, it is possible to reduce the number of wirings of the wire line. As the semiconductor device manufacturing technique is improved in recent years, it is possible to simplify the modulator and the demodulator for radio transmission of a high-frequency wave in this way and incorporate the modulator and the demodulator in the electronic apparatus at low cost. This is highly practical.

### (Sixteenth embodiment)

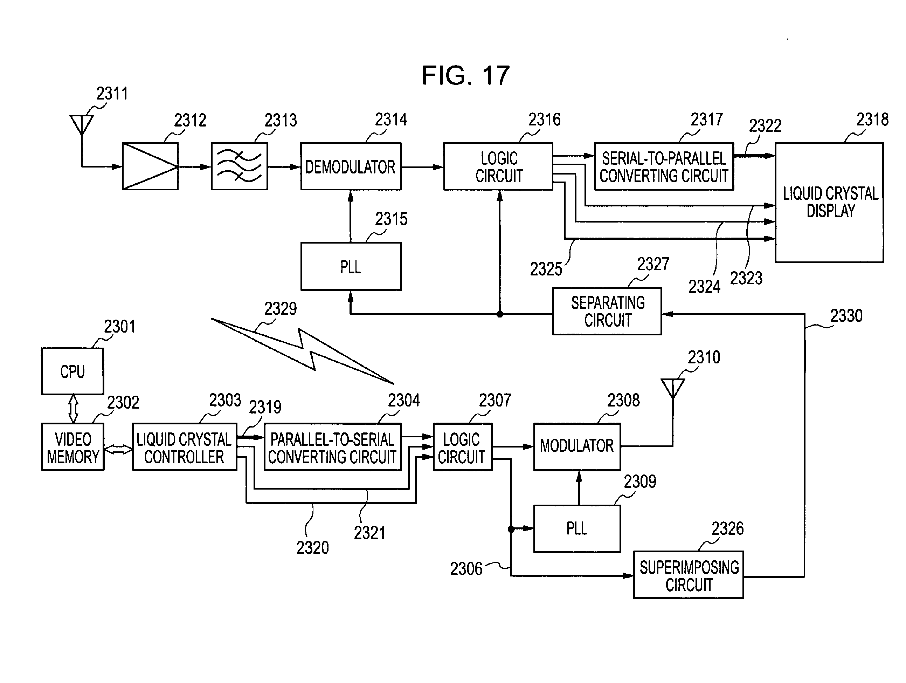

Fig. 17 is a block diagram showing a more detailed constitution of the information transmission system according to the invention and another embodiment of the electronic apparatus using the information transmission system.

In Fig. 17, a CPU 2301 generates display data, which should be displayed, according to arithmetic operation or the like and records the display data in a video memory 2302. A liquid crystal controller 2303 reads out data 2319, which is displayed on a display, from the video memory 2302 according to a predetermined order and outputs the data 2319 together with a vertical synchronizing signal 2321 and a horizontal synchronizing signal 2320. Since the data 2319 to be displayed is usually read out from the video memory as data in parallel for each word by a unit of pixel, the data 2319 is subjected to parallel-serial conversion by a parallel-serial converting circuit 2304 and transmitted to a logic circuit 2307. The logic circuit 2307 receives a signal outputted from the parallel-serial converting circuit 2304 and the horizontal synchronizing signal 2320 and the vertical synchronizing signal 2321 to generate a packet. The logic circuit 2307 sends the packet to a modulator 2308 as first category information and outputs a reference signal 2306 representing a top of the packet to a PLL 2309 and a superimposing circuit 2326 as second category information. The first category information multiplies the reference signal 2306 with the PLL 2309 to generate a carrier wave synchronizing with the reference signal. This carrier wave is modulated by the modulator 2308 and transmitted from a transmission antenna 2310. Simultaneously, the reference signal 2306 is superimposed on a power supply line 2330 as the second category information by the superimposing circuit 2326 and transmitted to a separating circuit 2327 on the reception side.

A reception antenna 2311 receives an electromagnetic signal transmitted from the transmission antenna 2310. The signal received by the reception antenna 2311 is amplified by a preamplifier 2312. A component of an unnecessary band of the signal is removed by a band-pass filter 2313. The signal is inputted to a demodulator 2314. The separating circuit 2327 separates the reference signal superimposed on the power supply line 2330 and sent as the second category information. A PLL 2315 multiplies the reference signal on the basis of an output of the separating circuit 2327, restores the carrier wave, supplies the carrier wave to the demodulator 2314, and performs demodulation of the electromagnetic signal. A logic circuit 2316 detects a top of the packet from the reference signal separated by the separating circuit 2327, generates display data 2322 in the packet, a horizontal synchronizing signal 2323, a vertical synchronizing signal 2324, and a transfer clock 2325 for an X driver from the packet, outputs the display data 2322, the horizontal synchronizing signal 2323, the vertical synchronizing signal 2324, and the transfer clock 2325 to a driver of a liquid crystal display 2318, and performs display.

As an oscillation frequency of the PLLs 2309 and 2315, a frequency not interfering with an original object of an electronic apparatus using a radio wave such as a radio receiver or a cellular phone and not being interfered by the object is selected. If a frequency equal to or higher than 2 GHz is selected, an occupied band is about 200 MHz even if 100 Mbps data is transmitted. Thus, it is usually possible to use the electronic apparatus without any problem in most cases.

In general, in radio communication, carrier wave frequencies treated by the modulator 2308 on the transmission side and the demodulator 2314 on the reception side need to coincide with each other. High accuracy is required for a frequency of the carrier wave oscillator between transmission and reception. An error between the carrier wave frequencies directly appears as deterioration in communication quality. However, according to the constitution of the invention described above, the modulator 2308 and the demodulator 2314 use the identical reference signal 2306 and multiply the reference signal 2306 with the PLLs 2309 and 2315 to generate a carrier wave. Thus, oscillation frequencies of the modulator 2308 and the demodulator 2314 coincide with each other and do not cause an error. Therefore, accuracy of the carrier wave oscillator does not cause a problem and there is an effect of a reduction in cost. Instead of the reference signal 2306, an output of the PLL 2309 may be directly superimposed on the power supply line 2330 by the superimposing circuit 2326 and sent. In this case, it is possible to directly input a carrier wave, which is separated by the separating circuit 2327, to the demodulator 2314 without using the PLL 2315. Thus, the PLL 2315 is unnecessary. However, in general, since a carrier wave frequency is high, it is difficult to transmit the carrier wave through a wire path. As in the constitution described above, it is more realizable to use a reference signal with a low frequency and multiply the reference signal with the PLLs 2309 and 2315 having the same characteristics in both transmission and reception to generate a carrier wave.

The reference signal 2306 is a signal representing a top of a packet for sending the first category information. Since this reference signal is superimposed on the power supply line 2330 and sent as the second category information, it is possible to detect a top of the packet easily on the reception side. This makes a circuit for extracting data from a packet extremely simple and makes it unnecessary to give a preamble representing a top of the packet. Thus, it is possible to extremely simplify a structure of the packet and improve an effective rate of communication.

By adopting the constitution described above, it is possible to realize wireless transmission of high-speed and large-quantity display data sent to a liquid crystal display 2318 and eliminate various problems caused by wire transmission such as an increase in power consumption, limitations on wiring positions, problems of EMI, and deterioration in reliability that have become obvious in accordance with an increase in size of the liquid crystal display 2318.

Since the second category information is superimposed on the power supply line 2330, a special wiring for the second category information is not required. There is a significant effect of packaging in realizing an electronic apparatus.

### (Seventeenth embodiment)

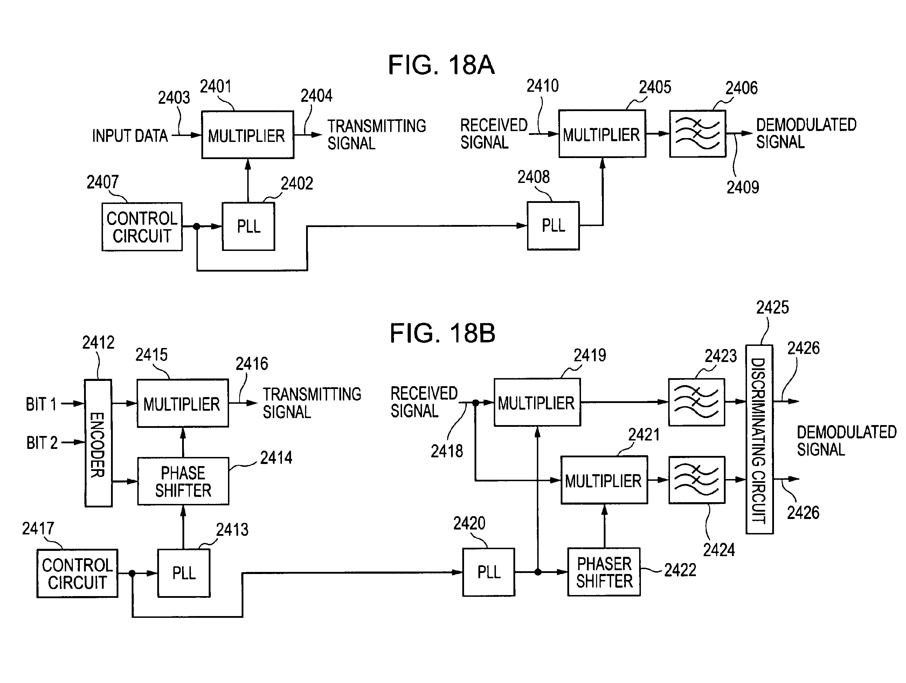

Fig. 18 (a) is a block diagram of a main part of still another embodiment of the electronic apparatus according to the invention. Fig. 18(a) is a diagram for describing more in detail the modulator 2308 and the demodulator 2314 in the sixteenth embodiment. A PLL 2402 is equivalent to the PLL 2309 in the sixteenth embodiment. The PLL 2402 is an oscillator that multiplies a reference signal outputted by a control circuit 2407 and generates a rectangular pulse carrier wave synchronizing with the reference signal. A multiplier 2401 performs multiplication of the PLL 2402 and input data 2403, outputs a result of the multiplication as a transmission signal 2404, and sends the transmission signal 2404 to a transmission antenna. The multiplier 2401 only has to be an exclusive OR circuit because both the input data 2403 and an output of the PLL 2402 are digital signals. When an analog value of a value 1 is associated at the time of logical 0 and an analog value of a value -1 is associated at the time of logical 1, an input and an output of the exclusive OR circuit act exactly as a multiplier. Since a coverage of communication is extremely close, harmonic interference given to other apparatuses or the like is controlled to be low originally. Thus, a filter or the like is unnecessary between an antenna and a modulator output.

A demodulating unit operates as described below. A reception signal received by the reception antenna 2311 in Fig. 17 is amplified. After an unnecessary band is removed from the reception signal, the reception signal is inputted to a multiplier 2405 as the reception signal 2407 and multiplied with a carrier wave clock signal reproduced by a PLL 2408. Then, a high-frequency component is removed by a low-pass filter 2406 and a DEMODULATED SIGNAL 2409 is demodulated. The low-pass filter 2406 removes a high-frequency component (a narrow pulse component caused by a slight phase difference between the reception signal 2407 and a reproduction clock waveform of the PLL 2408) of an output of the multiplier 2405 and outputs the output as the demodulated signal 2409. The PLL 2408 multiplies a reference signal outputted by the control circuit 2407 that is superimposed on the power supply line and transmitted as the second category information and reproduces a carrier wave pulse that has the same frequency as the PLL 2402 and a phase of which synchronizes with a phase of the PLL 2402. Note that, although a superimposing circuit and a separating circuit are not shown in Fig. 18(a), it is needless to mention that the superimposing circuit and the separating circuit are actually inserted between the control circuit 2407 and the PLL 2408.

Figs. 9(a) to (c) show time charts of the modulator explained above. Fig. 9(a) shows a carrier wave clock signal generated by the transmission side PLL, that is, the PLL 2402, Fig. 9(b) shows the transmission data 2403, and FIG. 9(c) shows the transmission signal 2404 to be outputted. When the time charts in the figures are considered as digital circuits, the modulator is an exclusive OR. When the time charts are considered as analog values taking values of ±1, the modulator is a multiplier.

Figs. 9(d) to (f) show times charts of a demodulating circuit. Fig. 9(d) shows the reception signal 2407, Fig. 9(e) shows a pulse train generated from the PLL on the reception side, that is, the PLL 2408, and Fig. 9 (f) is an output of the multiplier 2405. The low-pass filter 2406 removes a high-frequency component caused by a slight phase difference between the reception signal 2407 and an output of the PLL 2408 from this signal to restore the DEMODULATED SIGNAL 2409.

As it is evident from the figure, when frequencies of a carrier wave clock on the transmission side (Fig. 9(a)) and a reproduction carrier wave clock on the reception side (Fig. 9(e)) are different or phases of the clocks shift, demodulation does not operate well. In the conventional radio communication, oscillators with high accuracy are provided on the transmission side and the reception side separately for performing tracking to minimize an error. According to this constitution of this embodiment, generation of carrier waves on the transmission side and the reception side is performed by the PLLs 2402 and 2408 having the same characteristic with a reference signal outputted by the control circuit 2407 on the transmission side as a reference. Thus, it is possible to always secure the same frequency. Therefore, an error due to stability of an oscillation frequency and frequency accuracy is not caused. It is possible to establish a circuit with extremely high stability even with an inexpensive circuit.

Since a coverage of the radio signal transmission used in the invention is a very short distance, it is possible to secure a communication quality with a sufficiently high SN ratio. Thus, it is possible to amplify a signal to a degree that may be regarded as a digital value. In this case, an amplified signal level increases to a logical value level. However, a load driven by the logical value is not a long distance involving a large stray capacitance such as a distance from a CPU to a display but is extremely short and low like the inside of an identical semiconductor chip. Thus, the load does not lead to an increase in power consumption. Even if the reception signal is at an analog level without being amplified to the logical value level, since an output of the PLL 2408 is rectangular (taking a value of ±1), it is possible to realize multiplication with a simple switch circuit. In other words, it is possible to realize the multiplication by preparing two amplifiers having equal absolute values of an amplification degree and opposite polarities, selecting an inverting amplifier output of the reception signal 407 at the time of a logical level 1 of the output of the PLL 2408, and selecting a non-inverting amplifier output at the time of a logical level 0 of the output of the PLL 2408. A circuit with such a constitution may be used as the multiplier 2405.

According to the constitution described above, it is possible to realize the modulator with an exclusive OR circuit and realize the demodulator with one exclusive OR circuit or an amplifier, which has positive and negative amplification degrees, and a switch circuit, and a low-pass filter extremely easily.

### (Eighteenth embodiment)

Fig. 18 (b) is a block diagram of a main part of another embodiment of the electronic apparatus according to the invention. Fig. 18(b) is a diagram for describing more in detail another example of the modulator 2308 and the demodulator 2314 in the sixteenth embodiment. The simplified BPSK modulation is explained as an example in the seventeenth embodiment. However, in the eighteenth embodiment, an example based on QPSK is explained in order to describe a case in which more general phase modulation is used.

A PLL 2413 is equivalent to the PLL 2309 in the sixteenth embodiment and is a rectangular pulse oscillator that multiplies a reference signal outputted by a control circuit 2417 and generates a carrier wave synchronizing with the reference signal.

Figs. 9(g) to (j) are time charts showing operations of respective units of the modulator shown in Fig. 18(b). A bit 1 (Fig. 9(h)) and a bit 2 (Fig. 9(i)) of transmission data are encoded by an encoder 2412. The encoder 2412 performs control to decide whether a carrier wave (Fig. 9(g)) oscillated by the transmission side PLL, that is, the PLL 2413 is subjected to phase shift of 90° by a phase shifter 2414 and whether the carrier wave is inverted (phase shift of 180°) by a multiplier 2415 and finally outputs a transmission signal 2415 (Fig. 9(j)) subjected to QPSK modulation.

The control circuit 2417 is equivalent to the logic circuit 2307 in the sixteenth embodiment. A reference signal outputted by the control circuit 2417 is superimposed on a power supply voltage as second category information and also transmitted to the reception side. Note that, although a superimposing circuit and a separating circuit are not shown in Fig. 18(b), it is needless to mention that the superimposing circuit and the separating circuit are actually inserted between the control circuit 2407 and the PLL 2408. A PLL 2420 is equivalent to the PLL 2315 in the sixteenth embodiment, multiplies a reference signal superimposed on the power supply line 2330 in Fig. 17 and sent, and generates a reproduction clock, that is, a carrier wave (Fig. 9(1)) on the reception side. The reproduction clock outputted by the PLL 2420 is multiplied with a reception signal 2418 (Fig. 9(k)) by a first multiplier 2419 and transmitted to a first low-pass filter 2423. A high-frequency component is removed from the reproduction clock. The reproduction clock is transmitted to a discriminating circuit 2425. Simultaneously, the reception signal 2418 is multiplied with a pulse train (Fig. 9(o)), which is obtained by subjecting a reproduction clock pulse train generated by the PLL 2420 to phase shift of 90° by a phase shifter 2422, by a second multiplier 2421. A high-frequency component is removed by a second low-pass filter 2424. The reception signal 2418 is transmitted to the discriminating circuit 2425. The discriminating circuit 2425 extracts transmission data from outputs (Figs. 9(n) and (q)) of the first and the second low-pass filters 2423 and 2424 and demodulates a reception signal.

According to the constitution described above, it is possible to realize speedup of data transmission without increasing an occupied band of a transmission signal. Since both a modulator and a demodulator can be realized by simple digital circuits, it is possible to incorporate the modulator and the demodulator in a semiconductor chip. Thus, an increase in cost and power consumption can be neglected. As a carrier wave clock required in transmission and reception, a reference signal generated from the control circuit 2417 identical in transmission and reception is multiplied by the PLLs 2413 and 2420 having an identical characteristic to obtain an identical frequency with the same phase. Thus, an error due to accuracy of a clock frequency does not occur between transmission and reception. It is possible to perform stable data transmission even with an inexpensive oscillator. Even if the control circuit 2417 changes a frequency of a reference signal unilaterally, since the transmission side and the reception side always follow the change, for example, in an electronic apparatus like a radio communication apparatus, it is possible to select a frequency not interfering with a communication channel according to the communication channel and change the frequency on the transmission side unilaterally. (This also applies to both the sixteenth and the seventeenth embodiments). When this characteristic is used properly, it is also possible to make it extremely easy to take measures against an interference with communication that is an original object of an electronic apparatus such as a communication apparatus.

### (Nineteenth embodiment)

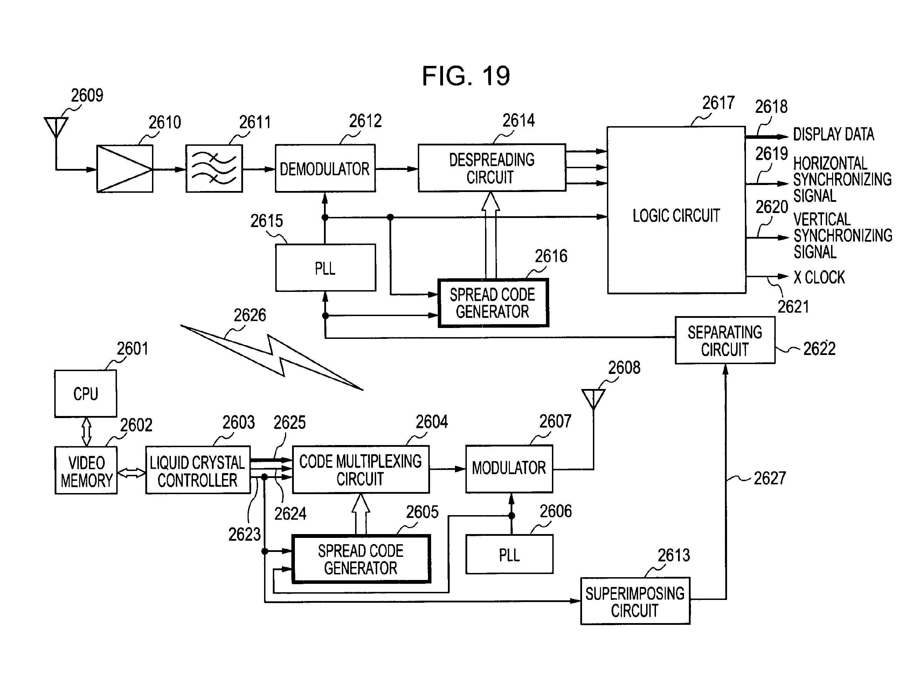

Fig. 19 is a block diagram of a main part of still another embodiment of the information transmission system and the electronic apparatus according to the invention.

In Fig. 19, functions of a CPU 2610, a video memory 2602, and a liquid crystal controller 2603 are the same as those explained in the sixteenth embodiment. Display data 2625, a horizontal synchronizing signal 2623, and a vertical synchronizing signal 2624, which are generated by the liquid crystal controller 2603, are multiplexed with a spread code, which is generated by a spread code generator 2605, by a code multiplexing circuit 2604. In this embodiment, since parallel data is code-multiplexed as described below, the parallel-serial conversion by the parallel-serial converting circuit 2304 in the sixteenth embodiment is unnecessary. Therefore, inverse conversion thereof, that is, a serial-parallel converting circuit 2317 is also unnecessary. A set of codes orthogonal to each other is often used as the spread code. A top of a code synchronizes with the horizontal synchronizing signal 2623 outputted by the liquid crystal controller 2603 to generate the spread code. Since the spread code generator 2605 uses a signal obtained by multiplying the horizontal synchronizing signal 2623 with a PLL 2606, a carrier wave and the spread code synchronize with each other completely.

Since the display data 2625 is read out collectively for each pixel from the video memory 2602, the display data 2625 is outputted as parallel digital data. Respective bits of this data signal and the horizontal synchronizing signal 2623 and the vertical synchronizing signal 2624 are multiplied (or an exclusive OR thereof is calculated) and subjected to analog addition to be code-multiplexed. The multiplexed signal is modulated by a modulator 2607 using a carrier wave, which is generated by the PLL 2606, and transmitted as first category information with an electromagnetic signal from a transmission antenna 2608 through a radio propagation path 2626 (a space). Since the carrier wave is generated by multiplying the horizontal synchronizing signal 2623 with the PLL 2606, the carrier wave completely synchronizes with the horizontal synchronizing signal 2623. As described above, the horizontal synchronizing signal 2623 also synchronizes with the spread code generator 2605. The horizontal synchronizing signal 2623 is superimposed on a power supply line 2627 as the second category information by a superimposing circuit 2613 and sent to a separating circuit 2622 on the reception side.

The transmitted electromagnetic signal is received by a reception antenna 2609 and amplified by a preamplifier 2610. After unnecessary signals in bands other than a predetermined band are removed by a band-pass filter 2611, the electromagnetic signal is demodulated by a demodulator 2612. A PLL 2615 divides the horizontal synchronizing signal 2623, which is superimposed on the power supply line 2627 and sent as the second category information, with the separating circuit 2622 and multiplies the carrier wave frequency with this horizontal synchronizing signal 2623 as a reference to generate a carrier wave. The signal demodulated by the demodulator 2612 is sent to an inverse spread circuit 2614. A correlation of the signal with a spread code for multiplexing, which is generated by a spread code generator 2616, is calculated by the inverse spread circuit 2614, whereby multiplexed data is separated from the signal. A logic circuit 2617 performs waveform shaping and timing adjustment for a display data signal 2618 for driving a liquid crystal driver, a horizontal synchronizing signal 2619, a vertical synchronizing signal 2620, and a clock signal 2621 for an X driver on the basis of detected display data and various kinds of timing and sends the signals to a liquid crystal display as driving signals for the liquid crystal display to perform display.

Carrier waves of the modulator 2612 and the demodulator 2607 synchronize with the horizontal synchronizing signal 2623 to be an identical reference signal and are oscillated by the PLLs 2606 and 2615 having the same characteristic. Thus, frequencies and phases of the modulator 2612 and the demodulator 2607 coincide with each other and do not cause an error due to accuracy of a carrier wave frequency. A top of the spread code also coincides with the horizontal synchronizing signal on both the transmission side and the reception side. Thus, it is unnecessary to detect timing for inverse spread. Consequently, a circuit for acquisition on the reception side is made unnecessary and it is possible to realize simplification of a circuit. In particular, in the case of code multiplexing, it is possible to use a correlator as a circuit for inverse spread rather than a matched filter. Since synchronization information of the correlator is sent by wire as the second category information, it is unnecessary to perform acquisition and sliding. It is possible to perform inverse spread with an extremely simple circuit.

Since the horizontal synchronizing signal 2623 and the vertical synchronizing signal 2624 are code-multiplexed and transmitted with the display data 2625, it is possible to detect synchronization signal for display of the signals immediately on the reception side according to inverse spread. Since the horizontal synchronizing signal 2623 is also superimposed on the power supply line 2627 and sent as the second category information, this signal may be used as the horizontal synchronizing signal 2619 without code-multiplexing the signal. In order to obtain a spread gain, it is also possible that a spread code with a sufficiently wide frequency band is selected and spread modulation is further performed after the modulator 2607.

### (Twentieth embodiment)

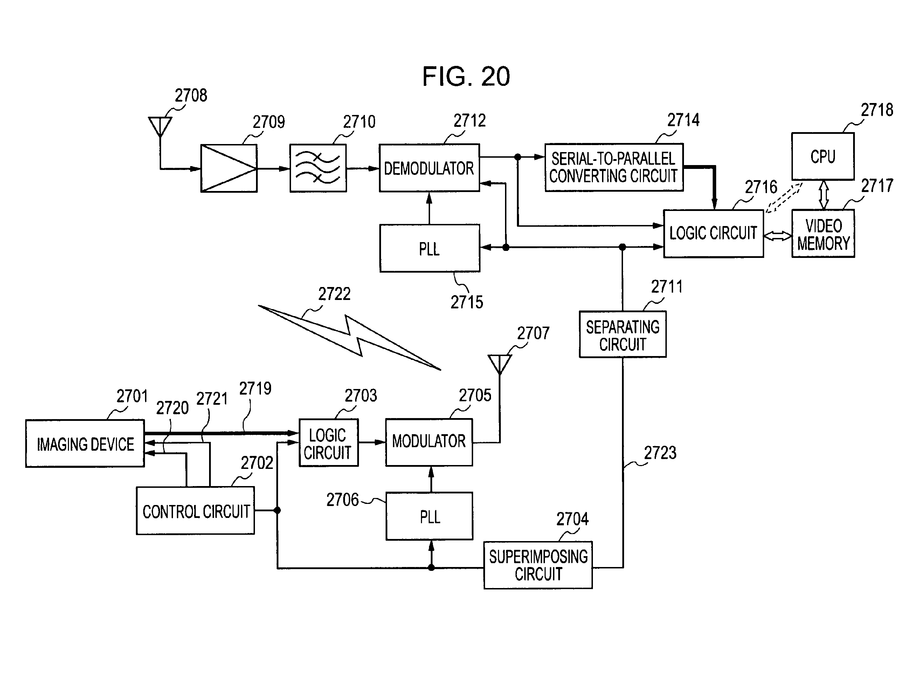

Fig. 20 is a block diagram of a main part of still another embodiment of the electronic apparatus according to the invention. Fig. 20 shows an example in which the information transmission system according to the invention is applied to an electronic apparatus using an imaging device.

In Fig. 20, an imaging device 2701 is started by a horizontal synchronizing signal 2720 and a vertical synchronizing signal 2721 generated from a control circuit 2702 and outputs image data 2719 imaged by the imaging device 2701. A logic circuit 2703 receives these signals and establishes a packet for radio transmission. The packet is modulated by a modulator 2705 and radiated from a transmission antenna 2707 as an electromagnetic wave. A carrier wave used for the modulator 2705 is oscillated by multiplying a reference signal, which is outputted by the control circuit 2702, with a PLL 2706. As the reference signal, for example, a signal indicating a top of a packet established by the logic circuit 2703, the horizontal synchronizing signal 2720 for starting an imaging device, or the like is used by the control circuit 2702. This reference signal is superimposed on a power supply line 2723 as second category signal by a multiplexing circuit 2704 and sent to a separating circuit 2711 on the reception side.

An electromagnetic signal transmitted from the transmission antenna 2707 is propagated through a radio propagation path (a space) 2722, received by a reception antenna 2708, and amplified by a preamplifier 2709. An unnecessary out-band signal is removed from the electromagnetic signal by a band-pass filter 2710. The electromagnetic signal is inputted to a demodulator 2712. A PLL 2715 multiplies the electromagnetic signal with a reference signal, which is extracted from the power supply line 2723 as the second category information by the separating circuit 2711, as a reference to generate a carrier wave. The demodulator 2712 uses synchronization timing necessary for demodulation in a reference signal from the control circuit 2702, which is transmitted through a wire path 2723 as the second category information, to perform demodulation of a reception signal. A serial-parallel converting circuit 2714 extracts an image data part from a demodulated reception packet and performs serial-parallel conversion for each pixel to generate pixel data. Since these circuits can use the reference signal from the control circuit 2702 as the second category information, it is unnecessary to perform signal detection for synchronization and it is possible to extremely simplify a circuit constitution. Since a carrier wave frequency always synchronizes with the transmission side and subjected to tracking, accuracy required of the carrier wave frequency is extremely relaxed.

A logic circuit 2716 generates a memory address for writing modulated pixel data in a video memory 2717 and writes image data in the address of the video memory 2717 directly or via a CPU 2718. The CPU 2718 accesses the video memory 2717 and uses the image data for various applications. The CPU 2718 usually performs control such as start of the imaging device 2701. In order to transmit information on this start, it is possible to superimpose the information on the power supply line 2723 as the second category information and transmit the information by wire. However, it is also possible to transmit the information by radio.

In the case of the radio transmission, radio transmitting/receiving means are provided on both the CPU 2718 side and the imaging device 2701 side to perform bidirectional communication. In particular, in a cellular phone of a clam shell structure, the imaging device 2701 and a display device are often placed close to each other on the opposite side of the CPU 2718. Image data imaged by the imaging device 2701 is sent to the CPU 2718 side and processed and, then, returned to the display device side. One piece of the second category information only has to be provided on a side where the control circuit 2702 is placed. It is possible to synchronize the CPU 2718 and the imaging device 2701 by sharing a reference signal of the control circuit 2702. On the reception side, since synchronization timing necessary for demodulation is superimposed on the power supply line 2723 and sent, it is unnecessary to perform acquisition and it is possible to reduce the number of wirings and significantly simplify a circuit.

### (Twenty-first embodiment)

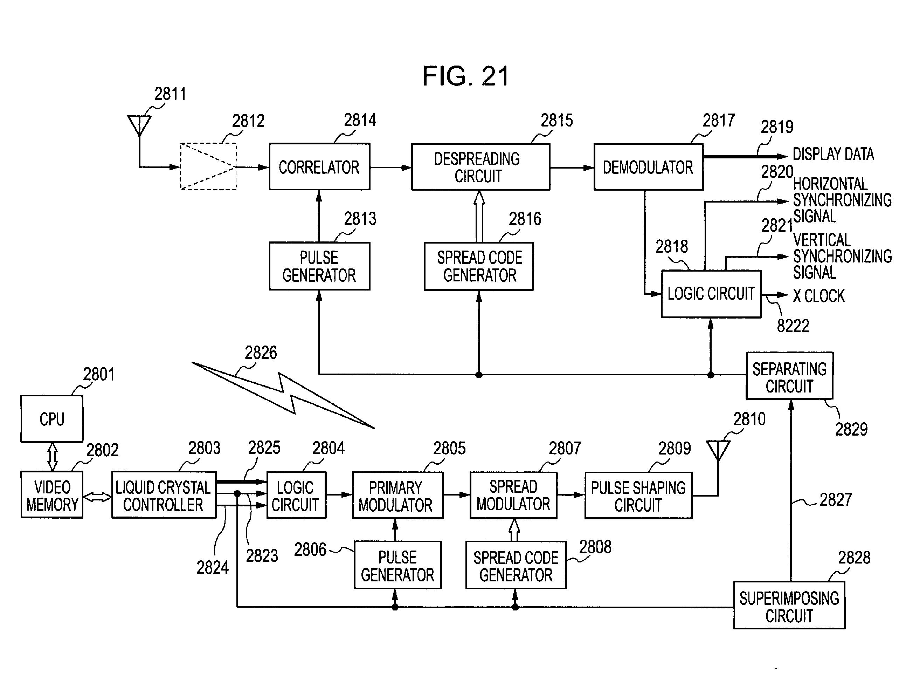

Fig. 21 is a block diagram of a main part of an embodiment of the data transmission and the electronic apparatus according to the invention.

In Fig. 21, functions of a CPU 2801, a video memory 2802, and a liquid crystal controller 2803 are the same as those explained in the sixteenth and the nineteenth embodiments. Display data 2825, a horizontal synchronizing signal 2823, and a vertical synchronizing signal 2824 generated by the liquid crystal controller 2803 are subjected to rearrangement of data such as parallel-serial conversion, grant of a preamble, and establishment of a packet by a logic circuit 2804 and converted into a serial signal. A primary modulator 2805 modulates a pulse train generated by a pulse generator 2806 to this signal. In primary modulation, it is possible to use pulse position modulation, biphase pulse modulation, and the like for a pulse train. A signal subjected to the primary modulation is subjected to spread modulation by a spread modulator 2807 with a spread code generated by a spread code generator 2808.

The pulse train subjected to spread modulation is subjected to waveform shaping for pulses of extremely short time to be shaped into wide band pulses with a low spectrum density by a pulse shaping circuit 2809. Then, the pulse train is radiated as an electromagnetic wave by a transmission antenna 2810. An electromagnetic field to be radiated is not an electromagnetic field with a modulated sine wave but is a very narrow pulse train.

On the other hand, the horizontal synchronizing signal 2823 also determines a reference for pulse generation for pulse modulation such as pulse position modulation. This signal is superimposed on a power supply line 2827 as a reference signal for the second category information by a superimposing circuit 2828 and transmitted to a separating circuit 2829.

The radiated electromagnetic wave is received by a reception antenna 2811 through a radio propagation path 2826 and amplified by a preamplifier 2812 as required. Then, correlation with a pulse template generated by a pulse generator 2813 is calculated by a correlator 2814. An output of the correlator 2814 is subjected to inverse spread by an inverse spread circuit 2815 with a spread code generated by a spread code generator 2816 and, then, demodulated by a demodulator 2817 and converted into the signal before the primary modulation (the input of the primary modulator 2805). A logic circuit 2818 generates a display data signal 2819 for driving a liquid crystal driver, a horizontal synchronizing signal 2820, a vertical synchronizing signal 2821, and an X clock signal 2822 for an X driver on the basis of display data detected by the demodulator 2817 and a horizontal synchronizing signal 2823 superimposed on the power supply line 2827 and sent as the second category information from the transmission side and sends the signals to a liquid crystal display to perform display.

According to the constitution described above, modulation operation is performed only on the time axis and it is possible to realize most of components only with a digital circuit handling a pulse. Thus, it is easy to package circuit elements as an IC. A spread gain in a time direction is obtained by adopting a short pulse. Interference resistance and interference exertion with a radio wave radiated as an original function of the electronic apparatus are improved. Moreover, it is possible to realize multi-channelizing as a communication transmission path. On the reception side, since synchronization timing necessary for demodulation is superimposed on the power supply line 2827 and sent, it is unnecessary to perform acquisition and it is possible to reduce the number of wirings and significantly simplify a circuit.

### (Twenty-second embodiment)

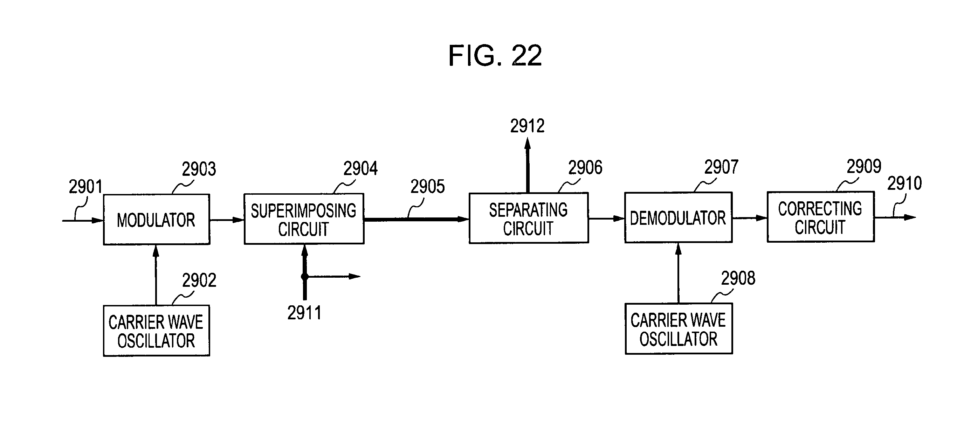

Fig. 22 is a diagram illustrating still another embodiment of the electronic apparatus according to the invention. This embodiment illustrates another method of superimposing second category information on a power supply line in the fourteenth to the twenty-first embodiments. As the second category information, basically, it is impossible to superimpose a signal with a high frequency like a carrier wave on a power supply line. An object of the invention is that, since such a signal with a high frequency cannot be transmitted successfully, the signal is transmitted by radio. Conversely, when a frequency of the second category information is too low, the second category information cannot be superimposed on the power supply line successfully. Even if the second category information is superimposed successfully, the second category information is not separated successfully on the reception side or a voltage level of the power supply line fluctuates, which affects an apparatus operation significantly. When a frequency of the second category information is too low in this way, the second category information is modulated and transmitted as shown in Fig. 22.

The second category information inputted to an input terminal 2901 is modulated by a modulator 2903 and sent to a superimposing circuit 2904. Like the superimposing circuit 2115 shown in Fig. 15, it is possible to constitute the superimposing circuit 2904 with a high-pass filter and a low-pass filter easily. A carrier wave inputted to the modulator 2903 is oscillated by a carrier wave oscillator 2902. As an oscillation frequency of the carrier wave oscillator 2902, a frequency, which can be superimposed on a power supply line 2905 and does not affect the electronic apparatus, is selected. The carrier wave oscillator 2902 may be, for example, means for dividing a carrier wave for transmitting first category information with an electromagnetic wave.

The second category information is superimposed on a power supply voltage, which is supplied from a power supply terminal 2911, by the superimposing circuit 2904. The power supply voltage is sent to a reception end through the power supply line 2905. A separating circuit 2906 separates the second category information and outputs the second category information to a demodulator 2907. The separating circuit 2906 supplies the power supply voltage from a terminal 2912 to respective sections in a receiving unit. The demodulator 2907 demodulates the second category information. The demodulated second category information usually involves time delay because of the demodulation. However, a correcting circuit 2909 corrects the time delay. A carrier wave oscillator 2908 performs generation of a carrier wave for demodulation. However, if delay detection or the like is used, the carrier wave is not always necessary for the demodulation. In order to simplify a circuit, it is advisable to select a demodulation system with which the carrier wave oscillator 908 does not have to be provided.

It is possible to incorporate such a circuit on any semiconductor chip because of the progress of the semiconductor technique. It is possible to realize the circuit with almost no increase in cost.

### (Twenty-third embodiment)

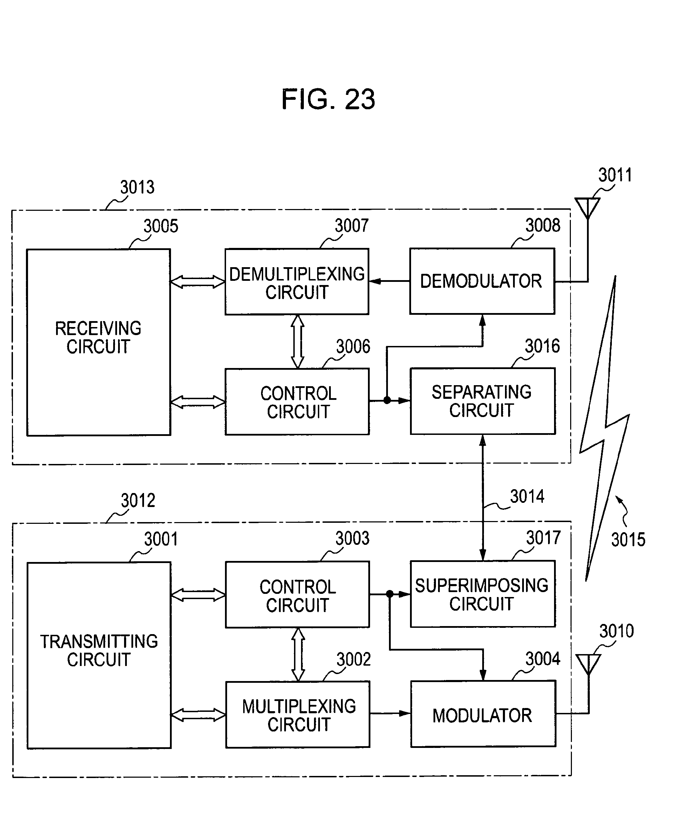

Fig. 23 is a diagram illustrating still another embodiment of the electronic apparatus using the information transmission system according to the invention. Fig. 23 shows an example in which a power supply line is used for data transmission between semiconductor chips.

In Fig. 23, a semiconductor chip 3012 includes a transmission circuit 3001 that has (generates) plural data, which should be transmitted, in the semiconductor chip 3012. A semiconductor chip 3013 includes a reception circuit 3005 that receives the data in the semiconductor chip 3012. It is assumed that data is transmitted from the semiconductor chip 3012 to the semiconductor chip 3013.

A control circuit 3003 starts such that the transmission circuit 3001 outputs the data that should be transmitted. A multiplexing circuit 3002 receives the transmission data from the transmission circuit 3001 and multiplexes the transmission data. As the multiplexing, the parallel-serial conversion described in the sixteenth embodiment or the code multiplexing described in the nineteenth embodiment is used. A modulator 3004 receives an output of the multiplexing circuit 3002 and modulates the output. The modulator 3004 transmits the output as an electromagnetic signal with a transmission antenna 3010. The control circuit 3003 simultaneously generates timing signals for multiplexing, synchronization of modulation, and the like and a carrier wave. The control circuit 3003 also generates a signal to be a reference of a carrier wave using the method explained in the sixteenth to the twenty-first embodiments. These signals are transmitted as second category information from a superimposing circuit 3017 to a separating circuit 3016 on the reception side through a power supply line 3014.

The separating circuit 3016 extracts the second category information from the power supply line 3014 and communicates the second category information to the control circuit 3006. A signal propagated in a space (a radio propagation path) 3015 and received by a reception antenna 3011 is demodulated by a demodulator 3008. A multiplexed signal is demultiplexed by a demultiplexer 3007 and sent to the reception circuit 3005 that receives a signal. The control circuit 3006 receives timing signals such as a multiplex signal and a synchronization signal for modulation and a reference signal of a carrier wave from the control circuit 3003 through the superimposing circuit 3017, the power supply line 3014, and the separating circuit 3016, performs synchronization for demodulation and demultiplexing, and restores a carrier wave to be used in the demodulator 3008.

By synchronizing the transmission side and the reception side of a signal using an identical reference signal in such a method, it is possible to simplify circuits for multiplexing, demultiplexing, and modulation and demodulation significantly and a request for accuracy of an oscillation frequency is relaxed significantly. This makes it possible to realize all the circuits as circuits on the semiconductor chips 3012 and 3013. When the superimposing circuit and the separating circuit in the twenty-second embodiment are used, it is possible to transmit and receive data through the power supply line 3014 in a wide frequency range.

### (Twenty-fourth embodiment)

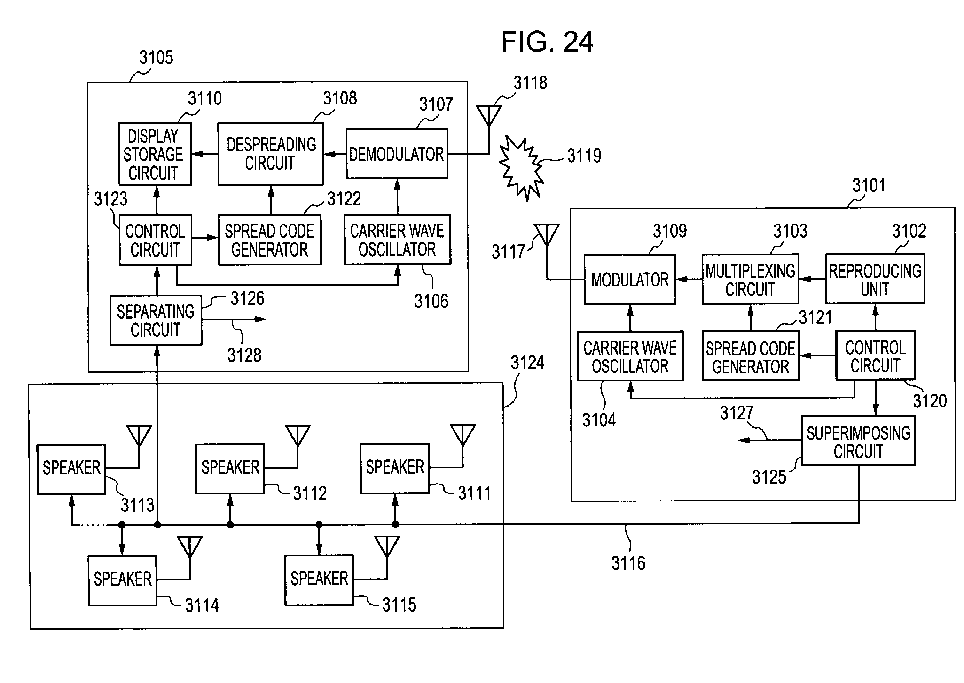

Fig. 24 is a diagram illustrating still another embodiment of the electronic apparatus using the information transmission system according to the invention. Fig. 24 shows an example in which data transmission using a power supply line is applied to a home theater. The home theater is constituted by an image display unit 3105, a tuner decoder unit 3101, and a speaker unit 3124. The image display unit 3105 incorporates an image display device and receives and displays an image signal. The speaker unit 3124 usually includes plural speakers 3111, 3112, 3113, 3114, and 3115 and a driving section that receives a sound signal for each of the speakers, performs control for an acoustic effect and amplification, and drives the speakers.

A method described below is adopted for connection among the speakers and the driving section. A reproduction unit 3102 of the tuner decoder unit 3101 extracts data of images and sounds from an image and sound source such as a TV tuner or a DVD recorder according to an instruction of a control circuit 3120. Data outputted by the reproduction unit 3102 is multiplexed for each image and sound channel by a multiplexing circuit 3103. The multiplexing is performed by multiplying the data with a spread code outputted by a spread code generator 3121 for each channel in synchronization with a reference signal outputted by the control circuit 3120 and subjecting results of the multiplication to analog addition. The multiplexed data is modulated by a modulator 3109 and transmitted from a transmission antenna 3117 as first category information. A carrier wave oscillator 3104 multiplies a frequency on the basis of a reference signal outputted by the control circuit 3120 to generate a carrier wave. The reference signal outputted by the control circuit 3120 is superimposed on a power supply line 3116 as second category information by a superimposing circuit 3125 and transmitted to the image display unit 3105 and the speaker unit 3124.

Unlike the fourteenth to the twenty-third embodiments, this power supply line is an AC power supply. However, it is possible to constitute the superimposing circuit 3125 and a separating circuit 3126 with a low-pass filter and a high-pass filter shown in Fig. 15. A terminal 3127 supplies power to respective sections of the tuner decoder unit 3101 by a power supply line. Image data, text data, or sound data is propagated through a radio propagation path 3119 as the first category information, received by a reception antenna 3118, demodulated by a demodulator 3107, and subjected to inverse spread by an inverse spread circuit 3108 to be demultiplexed. Only an image signal is extracted from the data and extracted image data is stored in a display unit storage circuit 3110. The image data stored in the display storage circuit 3110 is sequentially read out and displayed on a screen of the image display device incorporated in the image display unit 3105. Information sent to the speaker unit 3124 is also copied by the same constitution as the inside of the image display unit 3105.

A reference signal superimposed on the power supply line 3116 and transmitted as the second category information is separated by the separating circuit 3126. A control circuit 3123 generates various signals for defining operations in an image display unit 3128 on the basis of the second category information. The carrier wave for demodulation is multiplexed on the basis of a control signal, which is generated by the control circuit 3123, and oscillated by a carrier wave oscillator 3106. A spread code generator 3122 used for inverse spread is controlled by the control circuit 3123 and generates a spread code in synchronization with the reference signal sent as the second category information. By adopting such a constitution, since a carrier wave is always subjected to tracking in both transmission and reception, a carrier wave with high frequency accuracy required of the carrier wave oscillator 3106 is not required. Since a code of inverse spread is also synchronized, it is possible to extremely simplify the inverse spread circuit 3108.

By superimposing the second category information on the power supply line 3116, the image display unit 3105, the tuner decoder unit 3101, and the speaker unit 3124 are connected only by the power supply line 3116. This makes it possible to establish a home theater and simplifies a constitution of the home theater.

### (Twenty-fifth embodiment)

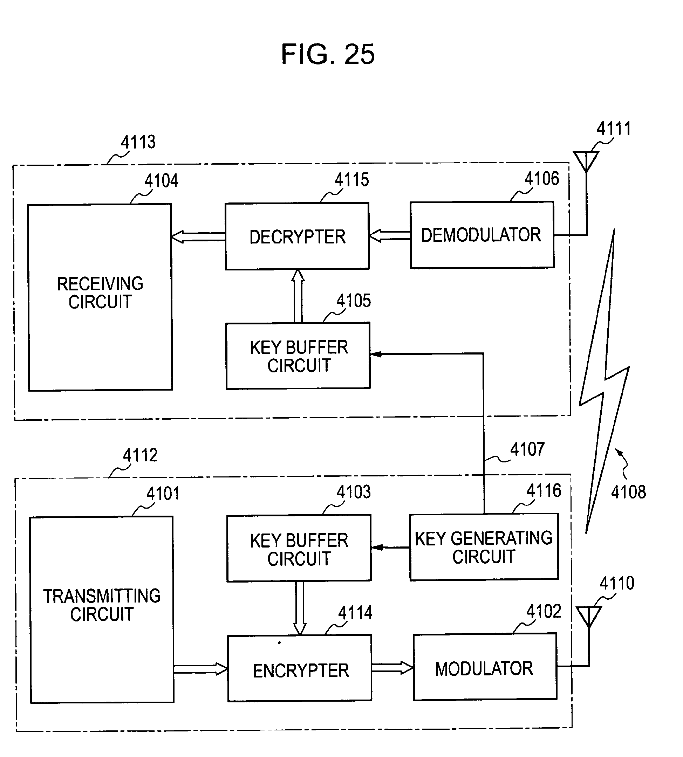

Fig. 25 is a conceptual diagram showing a main part of still another embodiment of the electronic apparatus according to the invention.

In Fig. 25, it is assumed that data is transmitted from a transmission unit block 4112 to a reception unit block 4113. Transmission information is transmitted from a transmission circuit 4101, which has the transmission information, to a reception circuit 4104, which receives the information. The transmission information outputted by the transmission circuit 4101 is encrypted by an encrypter 4114 using an encryption key held by a key buffer circuit 4103, modulated by a modulator 4102, and transmitted as an electromagnetic signal (a radio wave) from a transmission antenna 4110.

A key generating circuit 4116 generates the encryption key. The generated encryption key is sent to the key buffer circuit 4103 and held by the key buffer circuit 4103. In addition, the encryption key is transmitted through a wire path 4107 and stored in a key buffer circuit 4105 in the reception unit block 4113. The electromagnetic signal outputted from the transmission antenna 4110 and propagated in a space (a radio propagation path 4108) is received by a reception antenna 4111, demodulated by a demodulator 4106, and decrypted by a decrypter 4115. Then, the electromagnetic signal is outputted to the reception circuit 4104.

The key buffer circuit 4103 and the key buffer circuit 4105 continue to hold the encryption key, which has been held by the key buffer circuits, while the key generating circuit 4116 is sending the encryption key. After the key generating circuit 4116 finishes transferring the encryption key, the key generating circuit 4116 and the key buffer circuits 4103 and 4105 update the encryption key in synchronization with each other. Since the key generating circuit 4116 updates a key frequently, security is further improved.

The key generating circuit 4116 may be provided in the reception unit block 4113 and send the encryption key to the key buffer circuit 4103 in the transmission unit block 4112 through the wire path 4107.

Cryptography used in the encrypter 4114 and the decrypter 4115 does not have to use a complicated algorithm as in public key cryptography. This is because, since the encryption key is transmitted in a very short distance like the inside of an identical apparatus and with wire communication and there is no concern about theft or manipulation of the encryption key in distributing the encryption key, it is possible to directly use common key cryptography without taking a complicated procedure for distribution of the encryption key.

According to this embodiment, it is possible to remove a wiring requiring high-speed data transmission and solve various problems involved in an increase in speed of an operation of the electronic apparatus collectively without spoiling security by encrypting data in the electronic apparatus and transmitting the data by radio.

### (Twenty-sixth embodiment)

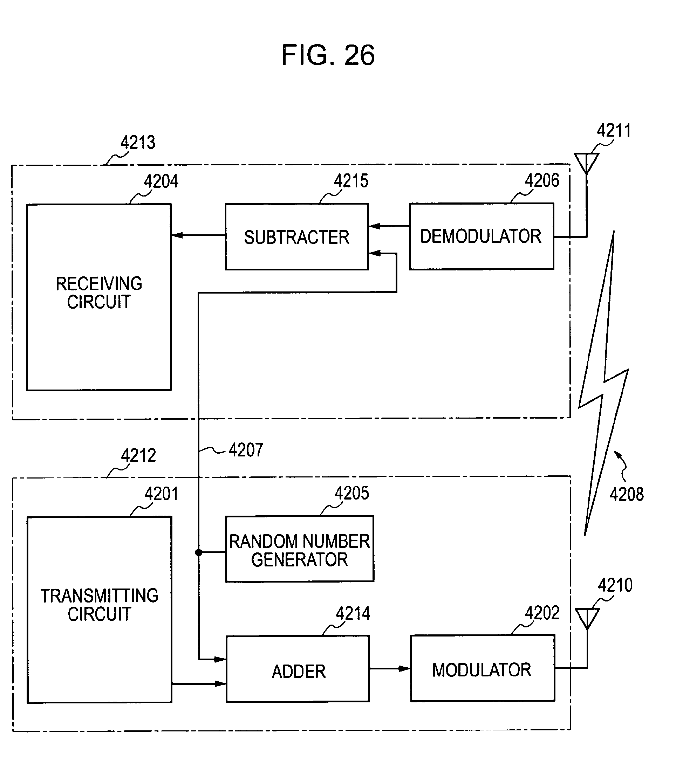

Fig. 26 is a conceptual diagram showing a main part of another embodiment of the electronic apparatus according to the invention.

In Fig. 26, it is assumed that data is transmitted from a transmission unit block 4212 to a reception unit block 4213. Transmission information is transmitted from a transmission circuit 4201, which has the transmission information, to a reception circuit 4204, which receives the information. The transmission information outputted by the transmission circuit 4201 is added with a random number, which is generated by a random number generator 4205, by an adder 4214, modulated by a modulator 4202, and transmitted from a transmission antenna 4210 as an electromagnetic signal (a radio wave). The random number generated by the random number generator 4205 is also delivered to a subtracter 4215 provided in the reception unit block 4213 through a wire path 4207 simultaneously. The electromagnetic signal outputted from the transmission antenna 4210 and propagated in a space (a radio propagation path 4208) is received by a reception antenna 4211 and demodulated by a demodulator 4206. Then, after being subtracted and decrypted by the random number, which is delivered from the random number generator 4205, by the subtracter 4215, the electromagnetic signal is outputted to the reception circuit 4204.

Since it is possible to realize addition on a Galois field (GF (2)) with a simple exclusive OR circuit, constitutions of the adder 4214 and the subtracter 4215 are simple. When the transmission circuit 4201 outputs serial data, it is possible to realize addition simply by calculating an exclusive OR with a 1 bit random number. In the Galois field GF (2), since addition and subtraction are identical (equivalent) arithmetic operations, it is possible to realize a subtracter necessary for decryption with an exclusive OR circuit. Thus, a constitution of the subtracter is simple. When data outputted by the transmission circuit 4201 is not serial data but is parallel data, calculation is simplified if an exclusive OR is calculated with a random number for each bit and digit carrying is neglected. If random number generation by the random number generator 4205 is performed frequently to continue to always update a random number, security of a system is further improved.

The random number generator 4205 may be provided in the reception unit block 4213 and send a random number to the adder 4214 in the transmission unit block 4212 through the wire path 4207.

According to the embodiment described above, it is possible to remove a wiring requiring high-speed data transmission and solve various problems involved in an increase in speed of an operation of the electronic apparatus collectively without spoiling security by randomizing data in the electronic apparatus and transmitting the data by radio.

### (Twenty-seventh embodiment)

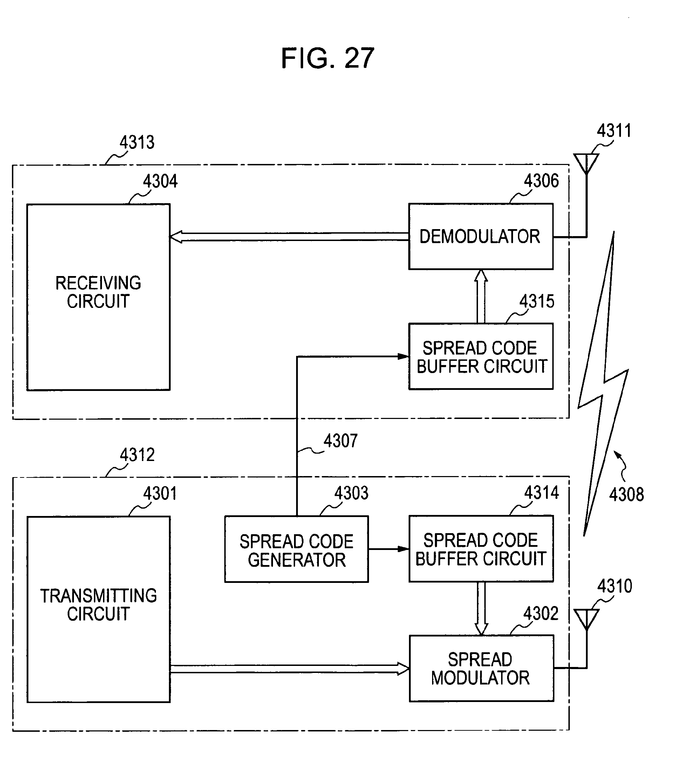

Fig. 27 is a conceptual diagram showing a main part of still another embodiment of the electronic apparatus according to the invention.

In Fig. 27, it is assumed that data is transmitted from a transmission unit block 4312 to a reception unit block 4313. Transmission information is transmitted from a transmission circuit 4301, which has the transmission information, to a reception circuit 4304, which receives the information. The transmission information outputted by the transmission circuit 4301 is subjected to spread modulation by a spread modulator 4302 and transmitted from a transmission antenna 4310 as an electromagnetic signal (a radio wave). A spread code used for the spread modulation is generated by a spread code generator 4303.

The spread code generated by the spread code generator 4303 is sent to a spread code buffer circuit 4314 and stored therein. Simultaneously, the spread code generated by the spread code generator 4303 is also sent to a spread code buffer circuit 4315 in the reception unit block 4313 through a wire path 4307 and stored therein. The spread modulator 4302 subjects transmission information to spread modulation with the spread code stored in the spread code buffer circuit 4314. The electromagnetic signal outputted from the transmission antenna 4310 and propagated in a space (a radio propagation path 4308) is received by a reception antenna 4311, subjected to inverse spread by a demodulator 4306, and outputted to the reception circuit 4304. As a spread code used for the inverse spread, a code same as the code subjected to spread modulation at the time of transmission is used at the same timing. The two spread code buffer circuits 4314 and 4315 are controlled to operate in synchronization with each other for that purpose.

The spread code generator 4303 may be provided in the reception unit block 4313 and sent to the spread code buffer circuit 4314 in the transmission unit block 4312 through the wire path 4307.

It is possible to generate a spread code with the spread code generator 4303 freely at any time. A changed spread code always synchronizes between transmission and reception and tracking is kept according to functions of the two spread code buffer circuits 4314 and 4315, it is possible to change the spread code freely at any time as required. It is also possible to use an extremely long spread code.

Even if a third party attempts to receive and decrypt a leaked electromagnetic signal, the third party cannot decrypt the signal unless the third party knows a spread code. In addition, the spread code is notified to the reception side through wire communication in the electronic apparatus. Thus, it is very difficult for a third party to steal the spread code. Therefore, a system has extremely high security. If a long spread code is used or a spread code is changed frequently, security is further improved.

According to the embodiment described above, it is possible to remove a wiring requiring high-speed data transmission and solve various problems involved in an increase in speed of an operation of the electronic apparatus collectively without spoiling security by spread-coding data in the electronic apparatus and transmitting the data by radio.

### (Twenty-eighth embodiment)

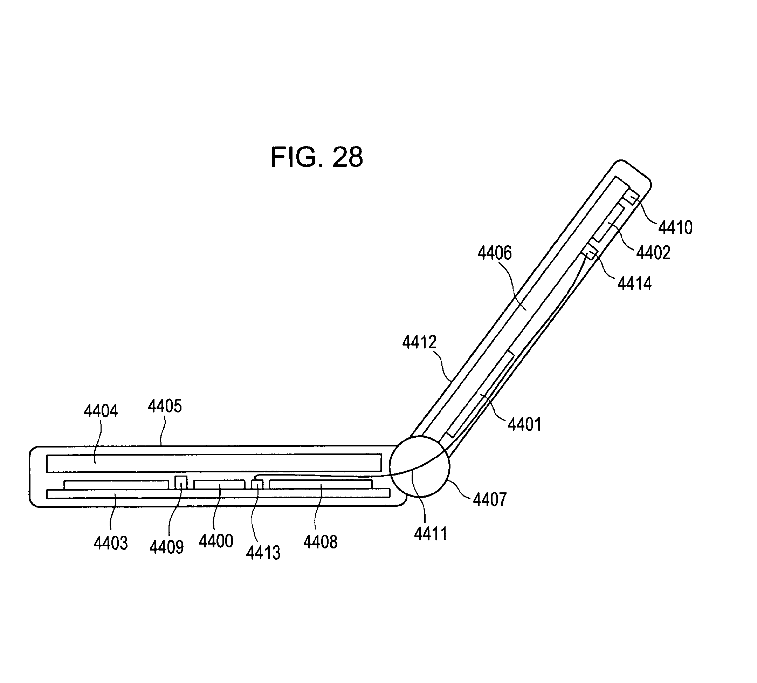

Fig. 28 is a diagram showing still another embodiment of the electronic apparatus according to the invention.

In Fig. 28, the electronic apparatus is divided into a body unit 4405 and a display unit 4412, which are integrated via a hinge 4407. Display data generated by a liquid crystal controller 4408 is added with a random number generated by a random number generator 4413, sent to a modulator 4400 and modulated, converted into an electromagnetic wave (a radio wave), and propagated in a space from a transmission antenna 4409. An electromagnetic signal transmitted from the transmission antenna 4409 is received by a reception antenna 4410 and demodulated by a demodulator 4402. Then, the random number added at the time of transmission is subtracted by a subtracter 4414. The electromagnetic signal is restored to display data. The display data is sent to a liquid crystal driver 4401 and displayed on a liquid crystal display 4406.

The random number generated by the random number generator 4413 is transmitted to the subtracter 4414 through a wire path 4411. Since a rate, which is low compared with a transmission data rate, is sufficient for this signal and the number of necessary data line is small, it is easy to lay wiring through the hinge 4407. Moreover, a degree of freedom of wiring and component arrangement increases. It is also possible to arrange the modulator 4400 and the transmission antenna 4409 serving as transmission units for a signal and the demodulator 4402 and the reception antenna 4410 serving as reception units of the signal in positions distant from the hinge 4407 as shown in the figure. Limitations on arrangement of components are reduced and a degree of freedom of design in improving design and convenience of use of an apparatus is increased remarkably.

As speed of data intended to be transmitted increases, it becomes difficult to transmit the data in a transmission line. However, transmission by an electromagnetic wave in the space becomes easier. On the other hand, concerning the problem of security such as wiretapping due to leak of an electromagnetic signal, when a random number is added to change the electromagnetic signal to a radio signal, it is impossible to decrypt the radio signal unless the added random number is revealed. Since the added random number is sent to the reception side through the wire path 4411 in the electronic apparatus, it is impossible for a third party to know the random number. Thus, security is high.

### (Twenty-ninth embodiment)

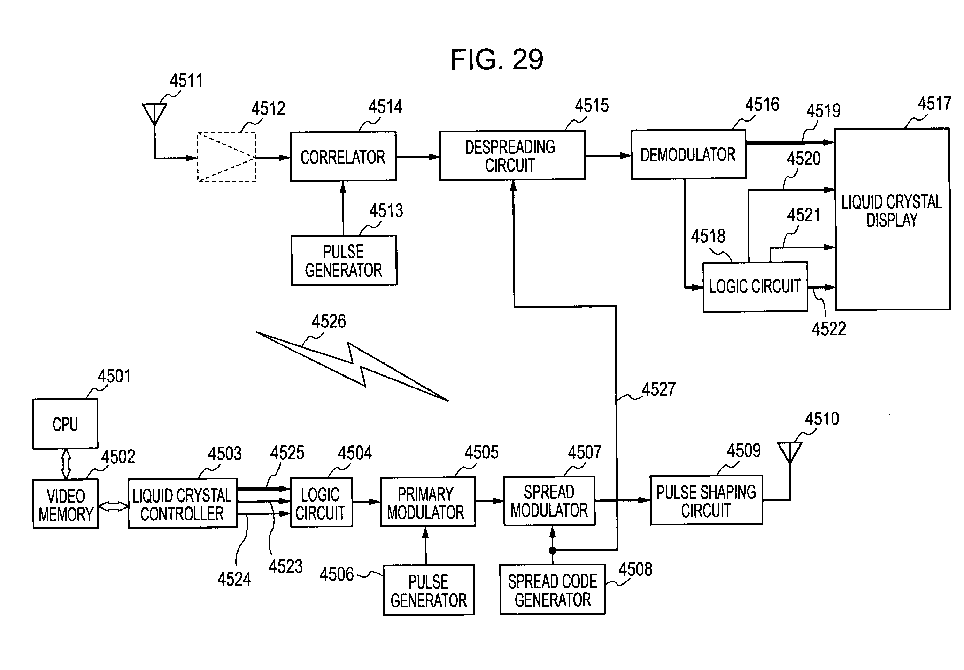

Fig. 29 is a block diagram of a main part of an embodiment of the data transmission and the electronic apparatus according to the invention.

In Fig. 29, a CPU 4501 controls the entire electronic apparatus, generates image data to be displayed on a display using expansion of compressed image data in MPEG, JPEG, or the like or image data imaged by an imaging device, and writes the image data in a video memory 4502. A liquid crystal controller 4503 reads out display data 4525 from the video memory 4502 according to a driving order of a liquid crystal display 4517 and outputs the display data 4525 to a logic circuit 4504 together with a horizontal synchronizing signal 4523 and a vertical synchronizing signal 4524 of the liquid crystal display 4517. The logic circuit 4504 performs rearrangement of data such as parallel-serial conversion, grant of a preamble, and the like of the display data 4525 and establishes a communication packet. A primary modulator 4505 modulates a pulse train generated by a pulse generator 4506 to this signal. As primary modulation, it is possible to use pulse position modulation, biphase pulse modulation, and the like for a pulse train. A signal subjected to the primary modulation is subjected to spread modulation by a spread modulator 4507 with a spread code generated by a spread code generator 4508.

The pulse train subjected to spread modulation is subjected to waveform shaping for pulses of extremely short time to be shaped into wide band pulses with a low spectrum density by a pulse shaping circuit 4509. Then, the pulse train is radiated as an electromagnetic wave by a transmission antenna 4510. An electromagnetic field to be radiated is not an electromagnetic field with a modulated sine wave but is a very narrow pulse train.

The radiated electromagnetic wave is received by a reception antenna 4511 through a radio propagation path 4526 and amplified by a preamplifier 4512 as required. Then, correlation with a pulse template generated by a pulse generator 4513 is calculated by a correlator 4514. An output of the correlator 4514 is subjected to inverse spread by an inverse spread circuit 4515 with a spread code sent from the spread code generator 4508 through a wire path 4527 and, then, demodulated by a demodulator 4517 and converted into the signal before the primary modulation (communication packet established by the logic circuit 4504). A logic circuit 4518 generates a display data signal 4519 for driving a liquid crystal driver, a horizontal synchronizing signal 4520, a vertical synchronizing signal 4521, and an X clock signal 4522 for an X driver from a communication packet restored by the demodulator 4517 and sends the signals to a liquid crystal display to perform display. On the reception side, since a spread code necessary for inverse spread is sent from the transmission side through the wire path 4527, it is unnecessary to have the spread code. In addition, acquisition for inverse spread is unnecessary. Thus, a circuit on the reception side is extremely simplified.

In UWB communication, a leaking electromagnetic wave itself has an extremely weak spectrum density. Thus, it is essentially difficult for a third party to intercept the electromagnetic wave so as not to be noticed. In this embodiment, since a spread code is transmitted to the reception side through a wire path 4527 in a closed space inside the electronic apparatus, a third party cannot learn the spread code. Moreover, since it is possible to change the spread code any time, security is further improved. Therefore, it is possible to avoid the conventional various problems involved in an increase in speed of data transmission to the liquid crystal display 4517 while keeping high security without increasing cost much.

### (Thirtieth embodiment)

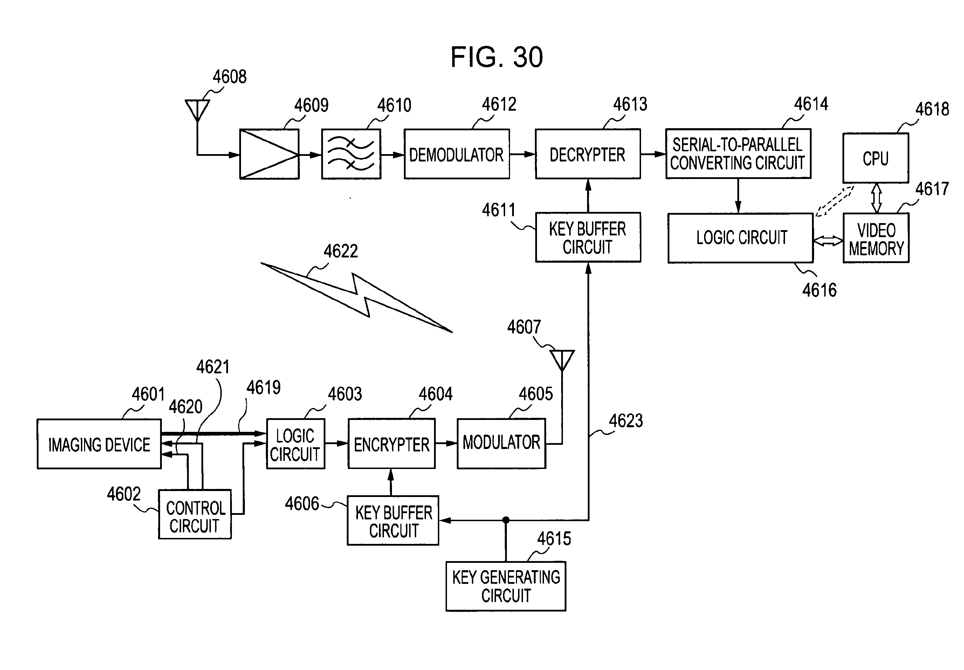

Fig. 30 is a block diagram of a main part of an embodiment of the electronic apparatus according to the invention. Fig. 30 shows an example in which the information transmission system according to the invention is applied to an electronic apparatus using an imaging device.

In Fig. 30, an imaging device 4601 is started by a horizontal synchronizing signal 4620 and a vertical synchronizing signal 4621 generated from a control circuit 4602 and outputs image data 4619 imaged by the imaging device 4601. A logic circuit 4603 receives these signals and establishes a packet for radio transmission. The packet is encrypted by an encrypter 4604, modulated by a modulator 4605, and radiated from a transmission antenna 4607 as an electromagnetic wave.

A key used for cryptography is generated by a key generating circuit 4615 and delivered to a key buffer circuit 4606 on the transmission side and a key buffer circuit 4611 on the reception side simultaneously. The key buffer circuit 4606 and the key buffer circuit 4611 output an encryption key to the encrypter 4604 and a decrypter 4613, respectively, in synchronization with each other on both transmission and reception, and function such that the decrypter 4613 can perform decryption correctly. The key is delivered to the key buffer circuit 4611 on the reception side from the key generating circuit 4615 through a wire path 4623.

An electromagnetic signal transmitted from the transmission antenna 4607 is propagated through a radio propagation path (a space) 4622, received by a reception antenna 4608, and amplified by a preamplifier 4609. An unnecessary out-band signal is removed from the electromagnetic signal by a band-pass filter 4610. The electromagnetic signal is demodulated by a demodulator 4612. The demodulated signal is decrypted by the decrypter 4613 and sent to a serial-parallel converting circuit 4614. The serial-parallel converting circuit 4614 extracts image data part from a demodulated reception packet and performs serial-parallel conversion for each pixel to generate pixel data.

A logic circuit 4516 generates a memory address for writing modulated pixel data in a video memory 4617 according to the pixel data and writes image data in the address of the video memory 4617 directly or via a CPU 4618. The CPU 4618 accesses the video memory 4617 and uses the image data for various applications.

Even if a signal propagated through the radio communication path 4622 leaks and a third party wiretaps the signal, since the signal is encrypted, it is extremely difficult for the third party to learn a content of transmission data unless the third party obtains an encryption key. Since the encryption key is transmitted by wire through a wire communication path within a very short distance like the inside of an identical apparatus, it is difficult for a third party to learn the encryption key. Thus, security is extremely high. Since the key generating circuit 4615 and the key buffer circuits 4606 and 4611 are always connected through the wire path 4623, it is possible to change the encryption key at any time. If the encryption key is changed frequently, security is further improved.

In this embodiment, the key generating circuit 4615 is placed on the transmission side of data. However, the same effect is obtained when the reception side of data sends an encryption key to the key buffer circuit 4606 on the transmission side through the communication path 4623.

According to the constitution described above, that is, by encrypting data transmission from the imaging device 4601 and transmitting data by radio, it is possible to eliminate various problems caused by wire transmission such as an increase in power consumption, limitations on wiring positions, problems of EMI, and deterioration in reliability that have become obvious in accordance with an increase in size of the imaging device 4601.

### (Thirty-first embodiment)

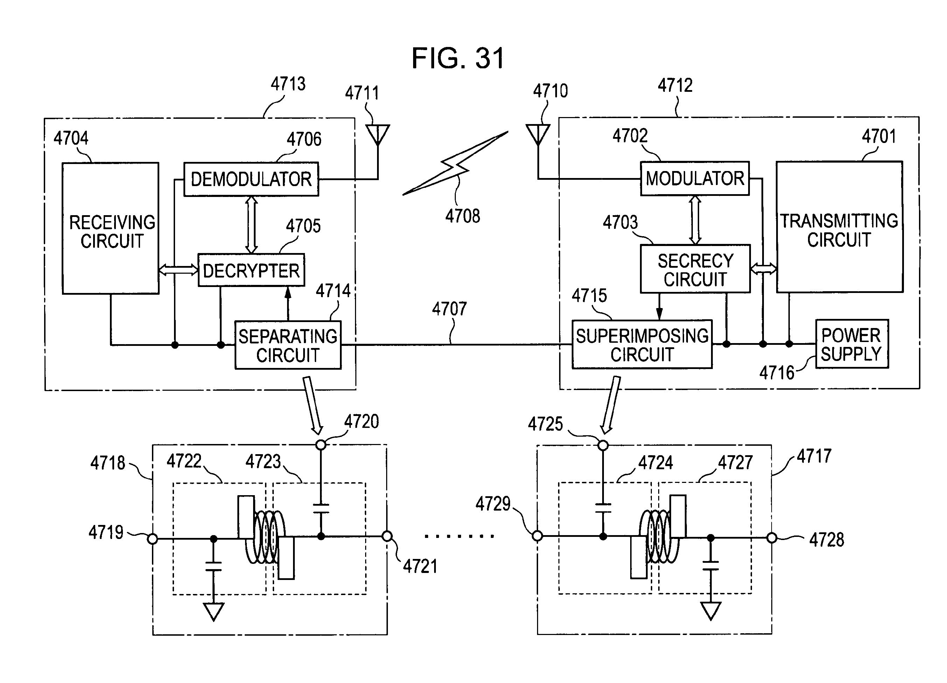

Fig. 31 is a conceptual diagram showing a main part of still another embodiment of the electronic apparatus according to the invention.

In Fig. 31, a transmission unit block 4712 includes a transmission circuit 4701 that has information, which should be transmitted, and a reception unit block 4713 includes a reception circuit 4704 that receives the transmission information. It is assumed that data is transmitted from the transmission unit block 4712 to the reception unit block 4713.

Transmission data outputted by the circuit 4701 is subjected to secrecy processing by a secrecy circuit 4703, modulated by a modulator 4702, and transmitted as an electromagnetic wave from a transmission antenna 4710. The secrecy circuit 4703 generates a secrecy code, superimposes the secrecy code on a power supply line 4707 with a superimposing circuit 4715, and transmits the secrecy code to the reception unit block 4713 by radio together with a power supply voltage. In the secrecy processing, it is possible to apply addition and subtraction of a random number, encryption, spread modulation, and the like explained in the embodiments described above. The secrecy code is equivalent to a random number, an encryption key, or a spread code.

An electromagnetic signal carrying transmission data outputted from the transmission antenna 4710 and propagated in a space (a radio propagation path 4708) is received by a reception antenna 4711, demodulated by a demodulator 4706, and outputted to a decrypter 4705. The decrypter 4705 cancels secrecy processing applied to reception data using the secrecy code superimposed on the power supply line 4707, transmitted by wire, and separated by a separating circuit 4714, decrypts the reception data, and communicates the reception data to the reception circuit 4704. The secrecy code may be transmitted from the reception unit block 4713 of data to the transmission unit block 4712 of the data. In that case, the secrecy code is generated on the side of the reception unit block 4713, the separating circuit 4714 is replaced with a superimposing circuit, and the superimposing circuit 4715 is replaced with a separating circuit.

The secrecy code is superimposed on the power supply line 4707 together with a power supply voltage and transmitted and received between the transmission unit block 4712 and the reception unit block 4713. A power supply 4716 supplies the power supply voltage to all the circuits in the transmission unit block 4712. The secrecy code outputted by the secrecy circuit 4703 is superimposed on the power supply line 4707 by the superimposing circuit 4715. Details of the inside of the superimposing circuit 4715 are shown in a part surrounded by an alternate long and short dash line 4717. A terminal 4728 is connected to the power supply 4716 and a terminal 4729 is connected to the power supply line 4707. The secrecy code outputted from the secrecy circuit 7403 is superimposed on the power supply line 4707 from a terminal 4725 through a high-pass filter 4724.

A signal of the superimposed secrecy code is prevented from leaking to the terminal 4728 side by a low-pass filter 4727. Therefore, all the circuits of the transmission unit bock 4712 operate correctly. The secrecy superimposed on the power supply line 4707 is separated by the separating circuit 4714 and transmitted to the decrypter 4705. The inside of the separating circuit 4714 is shown in detail in a part surrounded by an alternate long and short dash line 4718. A terminal 4721 is connected to the power supply line 4707.

A signal of the secrecy code inputted to the terminal 4721 is separated by a high-pass filter 4723 and transmitted to the decrypter 4705 from a terminal 4720. Since a low-pass filter 4722 prevents a leak of information of the superimposed secrecy code, only energy supplied from the power supply 4712 is transmitted from a terminal 4719. A power supply voltage is supplied to all the circuits in the reception unit block 4713 correctly through the terminal 4719. When the secrecy code is sent from the side of the reception unit block 4713 to the side of the transmission unit bock 4712, the functions of the superimposing circuit 4715 and the separating circuit 4714 are reversed. However, as shown in Fig. 25, respective circuit constitutions may be identical.

By adopting such a constitution, a secrecy code used for keeping security of a signal transmitted by wire is superimposed on a power supply line and transmitted. This makes it possible to exchange signals in the electronic apparatus with a minimum number of wirings. Thus, it is possible to realize an electronic apparatus having high reliability and security with a simple method.

In particular, when such a constitution is used for data transmission between semiconductor chips, a signal between the chips is subjected to secrecy processing and sent by radio and a secrecy code for the secrecy processing is superimposed on a power supply line and transmitted. Thus, a necessary wiring is only a power supply. It is possible to make packaging of the semiconductor chips extremely easy without spoiling security.

### (Thirty-second embodiment)

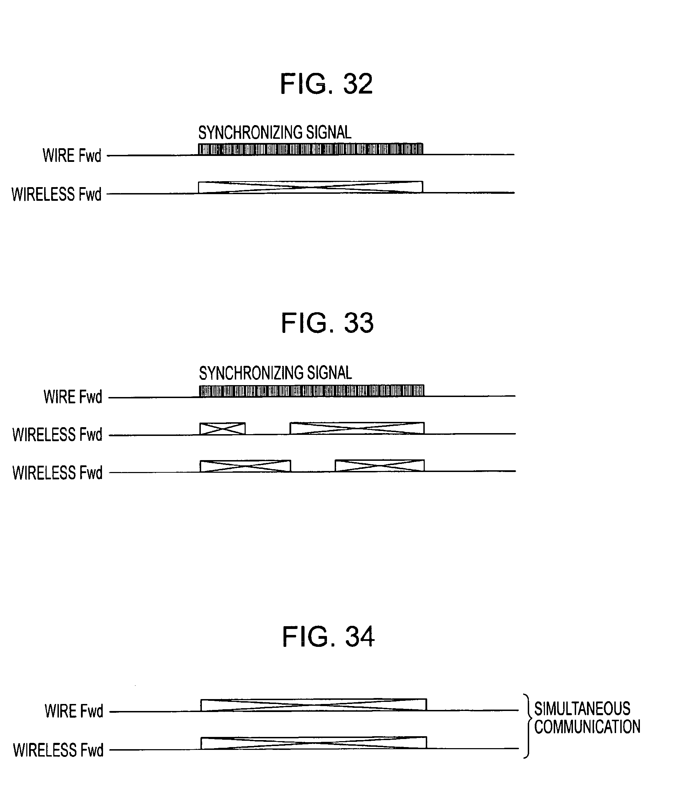

Figs. 32 to 39 are diagrams showing embodiments of timing for wire communication and radio communication.

In Fig. 32, data is transmitted by radio between circuit blocks and a synchronization signal is transmitted by wire simultaneously between the circuit blocks.

In Fig. 33, when bidirectional communication is performed between circuit blocks, a synchronization signal may be transmitted in both directions by wire. However, while being synchronized with a synchronization signal transmitted in one direction, the other radio communication may be performed.

In Fig. 34, transmission of data may be performed between circuit blocks using both wire and radio.

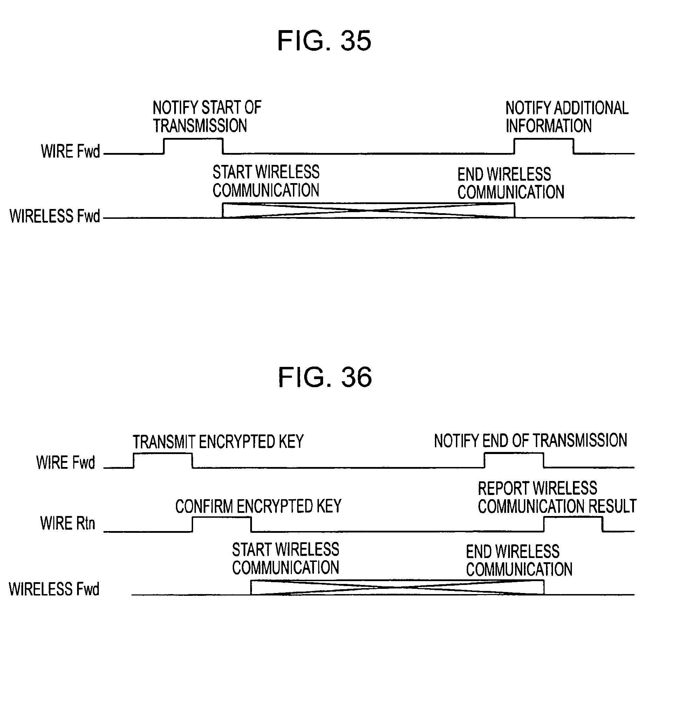

In Fig. 35, when data transmission is performed by radio between circuit blocks, control information for radio communication may be sent by wire. For example, it is also possible that a transmission start notice and an encryption key are transmitted by wire and radio communication is started in response to the transmission start notice and the encryption key. When the radio communication ends, an additional information notice may be sent by wire.

In Fig. 36, it is also possible that, when control information for radio communication is sent by wire, an encryption key is transmitted by wire and, after confirming the encryption key by wire, the radio communication is started. Instead of confirmation of the encryption key, confirmation of control may be performed.

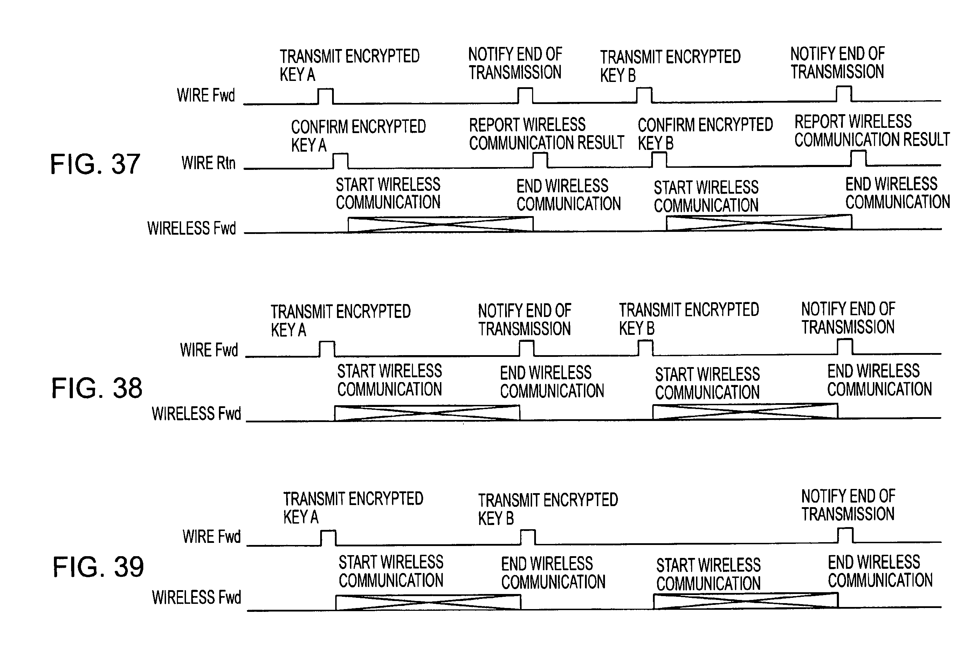

In Figs. 37 to 39, an encryption key may be changed for each radio communication frame. Confirmation of the encryption key may be performed by wire for each radio communication frame or a transmission end notice may be sent by wire. Note that the radio communication frame refers to a period from the start of one radio communication until the end of the radio communication.

### Industrial Applicability

The invention is not limited to the embodiments described above. It is possible to apply the invention to a wide range of applications, for example, connection of a storage such as a hard disk drive and a CPU incorporated in an electronic apparatus.

According to the constitutions of the invention described above, it is possible to use radio data transmission by an electromagnetic wave for a very short distance like the inside of an identical apparatus or an identical system of an electronic apparatus. It is possible to eliminate various problems involved in the conventional high-speed data transmission and the problem of packaging and realize an electronic apparatus with high reliability and low power consumption at low cost.
FIG. 4
   - 104:: CIRCUIT ELEMENT
   - 105:: INTERFACE CIRCUIT
   - 106:: DEMODULATOR
   - 101:: CIRCUIT ELEMENT
   - 102:: MODULATOR
   - 103:: INTERFACE CIRCUIT
FIG. 6
   - 314:: DEMODULATOR
   - 316:: SYNCHRONIZING CIRCUIT
   - 317:: SERIAL-PARALLEL CONVERTING CIRCUIT
   - 318:: LOGIC CIRCUIT
   - 327:: EVALUATING CIRCUIT
   - 322:: DISPLAY DATA
   - 323:: HORIZONTAL SYNCHRONIZING SIGNAL
   - 324:: VERTICAL SYNCHRONIZING SIGNAL
   - 325:: X CLOCK
   - 302:: VIDEO MEMORY
   - 303:: LIQUID CRYSTAL CONTROLLER
   - 304:: PARALLEL-SERIAL CONVERTING CIRCUIT
   - 307:: LOGIC CIRCUIT
   - 308:: MODULATOR
   - 309:: CARRIER WAVE OSCILLATOR
   - 326:: DIVIDER

   - 328:: LAST STAGE CIRCUIT
FIG. 7
   - 314:: DEMODULATOR
   - 317:: SERIAL-PARALLEL CONVERTING CIRCUIT
   - 318:: LOGIC CIRCUIT
   - 327:: EVALUATING CIRCUIT
   - 322:: DISPLAY DATA
   - 323:: HORIZONTAL SYNCHRONIZING SIGNAL
   - 324:: VERTICAL SYNCHRONIZING SIGNAL
   - 325:: X CLOCK
   - 302:: VIDEO MEMORY
   - 303:: LIQUID CRYSTAL CONTROLLER
   - 304:: PARALLEL-SERIAL CONVERTING CIRCUIT
   - 308:: MODULATOR
   - 309:: CARRIER WAVE OSCILLATOR
   - 326:: DIVIDER
   - 328:: LAST STAGE CIRCUIT
FIG. 8
   - 503:: INPUT DATA
   - 501:: MULTIPLIER
   - 502:: CARRIER WAVE OSCILLATOR
   - 500:: DIVIDER
   - 504:: TRANSMISSION SIGNAL

   - 507:: RECEPTION SIGNAL
   - 505:: MULTIPLIER
   - 509:: DEMODULATED SIGNAL
   - BIT 1:
   - BIT 2:
   - 512:: ENCODER
   - 515:: MULTIPLIER
   - 514:: PHASE SHIFTER
   - 513:: CARRIER WAVE OSCILLATOR
   - 517:: DIVIDER
   - 516:: TRANSMISSION SIGNAL
   - 518:: RECEPTION SIGNAL
   - 519:: MULTIPLIER
   - 521:: MULTIPLIER
   - 522:: PHASE SHIFTER
   - 525:: DISCRIMINATING CIRCUIT DEMODULATED SIGNAL
FIG. 9
   CLOCK
   DATA
   TRANSMISSION SIGNAL
   RECEPTION SIGNAL
   REPRODUCTION CLOCK
   DEMODULATED SIGNAL
   CARRIER WAVE
   BIT 1
   BIT 2
   TRANSMISSION SIGNAL
   RECEPTION SIGNAL
   REPRODUCTION CLOCK
   OUTPUT OF MULTIPLIER 519
   OUTPUT OF LPF 523
   PHASE SHIFTER
   OUTPUT OF MULTIPLIER 521
   OUTPUT OF LPF 524
FIG. 10
   - 712:: DEMODULATOR
   - 714:: INVERSE SPREAD CIRCUIT
   - 716:: SPREAD CODE GENERATOR
   - 717:: LOGIC CIRCUIT
   - 718:: DISPLAY DATA
   - 719:: HORIZONTAL SYNCHRONIZING SIGNAL
   - 720:: VERTICAL SYNCHRONIZING SIGNAL
   - 721:: X CLOCK
   - 702:: VIDEO MEMORY
   - 703:: LIQUID CRYSTAL CONTROLLER
   - 704:: CODE MULTIPLEXING CIRCUIT
   - 705:: SPREAD CODE GENERATOR
   - 706:: CARRIER WAVE OSCILLATOR
   - 707:: MODULATOR
   - 713:: DIVIDER
FIG. 11
   - 814:: CORRELATOR
   - 813:: PULSE GENERATOR
   - 815:: INVERSE SPREAD CIRCUIT
   - 816:: SPREAD CODE GENERATOR
   - 817:: DEMODULATOR
   - 818:: LOGIC CIRCUIT
   - 819:: DISPLAY DATA
   - 820:: HORIZONTAL SYNCHRONIZING SIGNAL
   - 821:: VERTICAL SYNCHRONIZING SIGNAL
   - 822:: X CLOCK
   - 802:: VIDEO MEMORY
   - 803:: LIQUID CRYSTAL CONTROLLER
   - 804:: LOGIC CIRCUIT
   - 805:: PRIMARY MODULATOR
   - 806:: PULSE GENERATOR
   - 807:: SPREAD MODULATOR
   - 808:: SPREAD CODE GENERATOR
   - 809:: PULSE SHAPING CIRCUIT
FIG. 12
   - 912:: DEMODULATOR
   - 914:: SERIAL-PARALLEL CONVERTING CIRCUIT
   - 916:: LOGIC CIRCUIT
   - 917:: VIDEO MEMORY
   - 901:: IMAGING DEVICE
   - 902:: CONTROL CIRCUIT
   - 903:: LOGIC
   - 905:: MODULATOR
   - 906:: CARRIER WAVE OSCILLATOR
   - 904:: DIVIDER
FIG. 13
   - 1005:: CIRCUIT ELEMENT
   - 1007:: DEMULTIPLEXING CIRCUIT
   - 1006:: CONTROL CIRCUIT
   - 1008:: DEMODULATOR
   - 1013:: SEMICONDUCTOR CHIP
   - 1001:: CIRCUIT ELEMENT
   - 1002:: MULTIPLEXING CIRCUIT
   - 1003:: CONTROL CIRCUIT
   - 1004:: MODULATOR
   - 1012:: SEMICONDUCTOR CHIP
FIG. 14
   - 1305:: IMAGE DISPLAY UNIT
   - 1310:: DISPLAY STORAGE CIRCUIT
   - 1308:: INVERSE SPREAD CIRCUIT
   - 1307:: DEMODULATOR
   - 1323:: CONTROL CIRCUIT
   - 1322:: SPREAD CODE GENERATOR
   - 1306:: CARRIER WAVE OSCILLATOR
   - 1301:: TUNER DECODER UNIT
   - 1309:: MODULATOR
   - 1303:: MULTIPLEXING CIRCUIT
   - 1302:: REPRODUCTION UNIT
   - 1304:: CARRIER WAVE OSCILLATOR
   - 1321:: SPREAD CODE GENERATOR
   - 1320:: CONTROL CIRCUIT
   - 1324:: SPEAKER UNIT
   - 1311 TO 1315 :: SPEAKER
FIG. 15
   - 2104:: RECEPTION CIRCUIT
   - 2106:: DEMODULATOR
   - 2105:: INTERFACE CIRCUIT
   - 2114:: SEPARATING CIRCUIT
   - 2101:: TRANSMISSION CIRCUIT
   - 2102:: MODULATOR
   - 2103:: INTERFACE CIRCUIT
   - 2115:: SUPERIMPOSING CIRCUIT
   - 2116:: POWER SUPPLY
FIG. 17
   - 2314:: DEMODULATOR
   - 2316:: LOGIC CIRCUIT
   - 2317:: SERIAL-PARALLEL CONVERTING CIRCUIT
   - 2318:: LIQUID CRYSTAL DISPLAY
   - 2327:: SEPARATING CIRCUIT
   - 2302:: VIDEO MEMORY
   - 2303:: LIQUID CRYSTAL CONTROLLER
   - 2304:: PARALLEL-SERIAL CONVERTING CIRCUIT
   - 2307:: LOGIC CIRCUIT
   - 2308:: MODULATOR
   - 2326:: SUPERIMPOSING CIRCUIT
FIG. 18
   - 2403:: INPUT DATA
   - 2401:: MULTIPLIER
   - 2404:: TRANSMISSION SIGNAL
   - 2407:: CONTROL CIRCUIT
   - 2407:: RECEPTION SIGNAL
   - 2405:: MULTIPLIER
   - 2409:: DEMODULATED SIGNAL
   - BIT 1:
   - BIT 2:
   - 2412:: ENCODER
   - 2415:: MULTIPLIER
   - 2414:: PHASE SHIFTER
   - 2417:: CONTROL CIRCUIT
   - 2416:: TRANSMISSION SIGNAL
   - 2418:: RECEPTION SIGNAL
   - 2419:: MULTIPLIER
   - 2421:: MULTIPLIER
   - 2422:: PHASE SHIFTER
   - 2425:: DISCRIMINATING CIRCUIT
   - 2425:: DEMODULATED SIGNAL
FIG. 19
   - 2612:: DEMODULATOR
   - 2614:: INVERSE SPREAD CIRCUIT
   - 2616:: SPREAD CODE GENERATOR
   - 2617:: LOGIC
   - 2618:: DISPLAY DATA
   - 2619:: HORIZONTAL SYNCHRONIZING SIGNAL
   - 2620:: VERTICAL SYNCHRONIZING SIGNAL
   - 2621:: X CLOCK
   - 2622:: SEPARATING CIRCUIT
   - 2602:: VIDEO MEMORY
   - 2603:: LIQUID CRYSTAL CONTROLLER
   - 2604:: CODE MULTIPLEXING CIRCUIT

   - 2605:: SPREAD CODE GENERATOR
   - 2607:: MODULATOR
   - 2613:: SUPERIMPOSING CIRCUIT
FIG. 20
   - 2712:: DEMODULATOR
   - 2714:: SERIAL-PARALLEL CONVERTING CIRCUIT
   - 2716:: LOGIC CIRCUIT
   - 2717:: VIDEO MEMORY
   - 2711:: SEPARATING CIRCUIT
   - 2701:: IMAGING DEVICE
   - 2702:: CONTROL CIRCUIT
   - 2703:: LOGIC CIRCUIT
   - 2705:: MODULATOR
   - 2704:: SUPERIMPOSING CIRCUIT
FIG. 21
   - 2814:: CORRELATOR
   - 2813:: PULSE GENERATOR
   - 2815:: INVERSE SPREAD CIRCUIT
   - 2816:: SPREAD CODE GENERATOR
   - 2817:: DEMODULATOR
   - 2818:: LOGIC CIRCUIT
   - 2819:: DISPLAY DATA
   - 2820:: HORIZONTAL SYNCHRONIZING SIGNAL

   - 2821:: VERTICAL SYNCHRONIZING SIGNAL
   - 2822:: X CLOCK
   - 2829:: SEPARATING CIRCUIT
   - 2802:: VIDEO MEMORY
   - 2803:: LIQUID CRYSTAL CONTROLLER
   - 2804:: LOGIC CIRCUIT
   - 2805:: PRIMARY MODULATOR
   - 2806:: PULSE GENERATOR
   - 2807:: SPREAD MODULATOR
   - 2808:: SPREAD CODE GENERATOR
   - 2809:: PULSE SHAPING CIRCUIT
   - 2828:: SUPERIMPOSING CIRCUIT
FIG. 22
   - 2903:: MODULATOR
   - 2902:: CARRIER WAVE OSCILLATOR
   - 2904:: SUPERIMPOSING CIRCUIT
   - 2906:: SEPARATING CIRCUIT
   - 2907:: DEMODULATOR
   - 2908:: CARRIER WAVE OSCILLATOR
   - 2909:: CORRECTING CIRCUIT
FIG. 23
   - 3005:: RECEPTION CIRCUIT
   - 3007:: DEMULTIPLEXING CIRCUIT

   - 3006:: CONTROL CIRCUIT
   - 3008:: DEMODULATOR
   - 3016:: SEPARATING CIRCUIT
   - 3012:: TRANSMISSION CIRCUIT
   - 3003:: CONTROL CIRCUIT
   - 3002:: MULTIPLEXING CIRCUIT
   - 3017:: SUPERIMPOSING CIRCUIT
   - 3004:: MODULATOR
FIG. 24
   - 3110:: DISPLAY STORAGE CIRCUIT
   - 3108:: INVERSE SPREAD CIRCUIT
   - 3107:: DEMODULATOR
   - 3123:: CONTROL CIRCUIT
   - 3122:: SPREAD CODE GENERATOR
   - 3106:: CARRIER WAVE OSCILLATOR
   - 3126:: SEPARATING CIRCUIT
   - 3109:: MODULATOR
   - 3103:: MULTIPLEXING CIRCUIT
   - 3102:: REPRODUCTION UNIT
   - 3104:: CARRIER WAVE OSCILLATOR
   - 3121:: SPREAD CODE GENERATOR
   - 3120:: CONTROL CIRCUIT
   - 3125:: SUPERIMPOSING CIRCUIT
   - 3124:: SPEAKER UNIT
   - 3111 TO 3115:: SPEAKER
FIG. 25
   - 4104:: RECEPTION CIRCUIT
   - 4115:: DECRYPTER
   - 4105:: KEY BUFFER CIRCUIT
   - 4106:: DEMODULATOR
   - 4101:: TRANSMISSION CIRCUIT
   - 4103:: KEY BUFFER CIRCUIT
   - 4114:: ENCRYPTER
   - 4116:: KEY GENERATING CIRCUIT
   - 4102:: MODULATOR
FIG. 26
   - 4204:: RECEPTION CIRCUIT
   - 4215:: SUBTRACTER
   - 4206:: DEMODULATOR
   - 4201:: TRANSMISSION CIRCUIT
   - 4205:: RANDOM NUMBER GENERATOR
   - 4214:: ADDER
   - 4202:: MODULATOR
FIG. 27
   - 4304:: RECEPTION CIRCUIT
   - 4306:: DEMODULATOR
   - 4315:: SPREAD CODE BUFFER CIRCUIT
   - 4301:: TRANSMISSION CIRCUIT
   - 4303:: SPREAD CODE GENERATOR
   - 4314:: SPREAD CODE BUFFER CIRCUIT
   - 4302:: SPREAD MODULATOR
FIG. 29
   - 4514:: CORRELATOR
   - 4513:: PULSE GENERATOR
   - 4515:: INVERSE SPREAD CIRCUIT
   - 4517:: DEMODULATOR
   - 4518:: LOGIC CIRCUIT
   - 4517:: LIQUID CRYSTAL DISPLAY
   - 4502:: VIDEO MEMORY
   - 4503:: LIQUID CRYSTAL CONTROLLER
   - 4504:: LOGIC CIRCUIT
   - 4505:: PRIMARY MODULATOR
   - 4506:: PULSE GENERATOR
   - 4507:: SPREAD MODULATOR
   - 4508:: SPREAD CODE GENERATOR
   - 4509:: PULSE SHAPING CIRCUIT
FIG. 30
   - 4612:: DEMODULATOR
   - 4613:: DECRYPTER
   - 4611:: KEY BUFFER CIRCUIT
   - 4614:: SERIAL-PARALLEL CONVERTING CIRCUIT
   - 4616:: LOGIC CIRCUIT
   - 4617:: VIDEO MEMORY
   - 4601:: IMAGING DEVICE
   - 4602:: CONTROL CIRCUIT
   - 4603:: LOGIC CIRCUIT
   - 4604:: ENCRYPTER
   - 4606:: KEY BUFFER CIRCUIT
   - 4605:: MODULATOR
   - 4615:: KEY GENERATING CIRCUIT
FIG. 31
   - 4704:: RECEPTION CIRCUIT
   - 4706:: DEMODULATOR
   - 4705:: DECRYPTER
   - 4714:: SEPARATING CIRCUIT
   - 4702:: MODULATOR
   - 4703:: SECRECY CIRCUIT
   - 4715:: SUPERIMPOSING CIRCUIT
   - 4701:: TRANSMISSION CIRCUIT
   - 4716:: POWER SUPPLY
FIG. 32
   WIRE FWD
   RADIO FWD
   SYNCHRONIZATION SIGNAL
FIG. 33
   WIRE FWD
   RADIO FWD
   SYNCHRONIZATION SIGNAL
FIG. 34
   WIRE FWD
   RADIO FWD
   SIMULTANEOUS COMMUNICATION
FIG. 35
   WIRE FWD
   RADIO FWD
   TRANSMISSION START NOTICE
   ADDITIONAL INFORMATION NOTICE
   RADIO COMMUNICATION START
   RADIO COMMUNICATION END
FIG. 36
   WIRE FWD
   RADIO FWD
   ENCRYPTION KEY TRANSMISSION
   TRANSMISSION END NOTICE
   ENCRYPTION KEY CONFIRMATION
   RADIO COMMUNICATION RESULT REPORT
   RADIO COMMUNICATION START
   RADIO COMMUNICATION END
FIG. 37
   WIRE FWD
   RADIO FWD
   ENCRYPTION KEY A TRANSMISSION
   TRANSMISSION END NOTICE
   ENCRYPTION KEY B TRANSMISSION
   TRANSMISSION END NOTICE
   ENCRYPTION KEY A CONFIRMATION
   RADIO COMMUNICATION RESULT REPORT
   ENCRYPTION KEY B CONFIRMATION
   RADIO COMMUNICATION RESULT REPORT
   RADIO COMMUNICATION START
   RADIO COMMUNICATION END
   RADIO COMMUNICATION START
   RADIO COMMUNICATION END
FIG. 38
   WIRE FWD
   RADIO FWD
   ENCRYPTION KEY A TRANSMISSION
   TRANSMISSION END NOTICE
   ENCRYPTION KEY B TRANSMISSION
   TRANSMISSION END NOTICE
   RADIO COMMUNICATION START
   RADIO COMMUNICATION END
   RADIO COMMUNICATION START
   RADIO COMMUNICATION END
FIG. 39
   WIRE FWD
   RADIO FWD
   ENCRYPTION KEY A TRANSMISSION
   ENCRYPTION KEY B TRANSMISSION
   TRANSMISSION END NOTICE
   RADIO COMMUNICATION START
   RADIO COMMUNICATION END
   RADIO COMMUNICATION START
   RADIO COMMUNICATION END
FIG. 40
   - 5702:: VIDEO MEMORY
   - 5703:: LIQUID CRYSTAL CONTROLLER
   - 7504:: X SHIFT REGISTER
   - 5705:: LATCH
   - 5706:: DA CONVERTER
   - 5707:: Y DRIVER
FIG. 41
   HORIZONTAL SYNCHRONIZING SIGNAL
   X CLOCK SIGNAL
   X1 LATCH
   X2 LATCH
   X3 LATCH
   XM LATCH
   VERTICAL SYNCHRONIZING SIGNAL
   HORIZONTAL SYNCHRONIZING SIGNAL

## Claims

1. An information transmission system **characterized by** comprising: radio communication means that transmits first category information; and wire communication means that transmits second category information, and in that radio communication for the first category information and wire communication for the second category information are performed in one communication link.

2. An electronic apparatus **characterized by** comprising: a radio communication unit that communicates first category information by radio; and a wire communication unit that communicates second category information by wire, and in that radio communication for the first category information and wire communication for the second category information are performed in one communication link.

3. An electronic apparatus **characterized by** comprising:
a radio communication unit that communicates first category information by radio; and
a wire communication unit that communicates second category information, which is used for control or processing of the first category information, by wire.

4. An electronic apparatus **characterized by** comprising:
an information originating unit that originates first category information;
an encrypting unit that encrypts the first category information originated by the information originating unit;
a radio transmission unit that transmits the first category information, which is encrypted by the encrypting unit, with an electromagnetic signal;
a radio reception unit that receives the electromagnetic signal transmitted by the radio transmission unit;
a decrypting unit that decrypts the signal received by the radio reception unit;
a key generating unit that generates an encryption key as second category information; and
a wire communication unit that delivers the encryption key generated by the key generating unit to the encryption unit and the decryption unit through wire communication.

5. An electronic apparatus **characterized by** comprising:
an information originating unit that originates first category information;
a random number generating unit that generates a random number as second category information;
a wire communication unit that delivers the random number, which is generated by the random number generating unit, through wire communication;
an adding unit that adds the random number to the first category information originated by the information originating unit;
a radio transmission unit that transmits the information, which is added with the random number by the adding unit, with an electromagnetic signal;
a radio reception unit that receives the electromagnetic signal transmitted by the radio transmission unit; and
a subtracting unit that subtracts the random number from the information received by the radio communication unit and decrypts the information.

6. An electronic apparatus **characterized by** comprising:
an information originating unit that originates first category information;
a spread code generating unit that generates a spread code as second category information;
a wire communication unit that delivers the spread code, which is generated by the spread code generating unit, through wire communication;
a modulating unit that subjects the first category information, which is originated by the information originating unit, to spread modulation with the spread code;
a radio transmission unit that transmits the information, which is modulated by the modulating unit, with an electromagnetic wave;
a radio reception unit that receives the electromagnetic signal; and
a demodulating unit that inversely spreads the information, which is received by the radio reception unit, with the spread code.

7. An electronic apparatus according any one of claims 2 to 6, **characterized in that** the wire communication unit superimposes a signal on a power supply line and performs communication.

8. An electronic apparatus according to any one of claims 2 to 7, **characterized by** comprising: an electromagnetic wave converting unit that converts the first category information into an electromagnetic signal; and an electromagnetic wave restoring unit that receives the electromagnetic signal and restores the electromagnetic signal to the first category information.

9. An electronic apparatus according to claim 8, **characterized in that** the electromagnetic wave converting unit and the electromagnetic wave restoring unit are driven by a carrier wave generated by an identical carrier wave oscillator.

10. An electronic apparatus according to claim 8, **characterized in that** the electromagnetic wave converting unit performs spectrum spread modulation, the electromagnetic wave restoring unit performs spectrum inverse spread, and synchronization information of the electromagnetic wave converting unit and the electromagnetic wave restoring unit is transmitted by wire.

11. An electronic apparatus according to claim 8, **characterized in that** the electromagnetic wave converting unit performs modulation into a UWB signal, the electromagnetic wave restoring unit performs demodulation from the UWB signal, and synchronization information of the electromagnetic wave converting unit and the electromagnetic wave restoring unit is transmitted by wire.

12. An electronic apparatus **characterized by** comprising: a radio transmission unit that modulates first category information and transmits the first category information as an electromagnetic signal; a radio reception unit that receives and demodulates the electromagnetic signal; a wire transmission unit that superimposes second category information on a power supply line and transmits the second category information; and a wire reception unit that separates the signal superimposed on the power supply line, and in that
the first category information and the second category information are transmitted into one communication link by the radio transmission unit and the wire transmission unit, and power is supplied to the radio transmission unit and the radio reception unit by the power supply line common to the radio transmission unit and the radio reception unit.

13. An electronic apparatus according to claim 12, **characterized in that** the radio transmission unit includes: a control unit that generates a reference signal; and a modulating unit that modulates the first category information into an electromagnetic signal in synchronization with the reference signal,
the second category information transmitted and received by the wire transmission unit and the wire reception unit is the reference signal, and
the radio reception unit includes a demodulating unit that demodulates the first category information in synchronization with the reference signal received by the wire reception unit.

14. An electronic apparatus according to claim 12, **characterized in that** the radio transmission unit includes: a control unit that oscillates a reference signal; a first carrier wave oscillating unit that oscillates a carrier wave synchronizing with the reference signal; and a modulating unit that modulates the carrier wave, which is oscillated by the carrier wave oscillating unit, with the first category information and converts the carrier wave into an electromagnetic signal,
the second category information transmitted and received by the wire transmission unit and the wire reception unit is the reference signal, and
the radio reception unit includes: a second carrier wave oscillating unit that oscillates a carrier wave synchronizing with the reference signal received by the wire reception unit; and a demodulating unit that demodulates the first category information using the carrier wave oscillated by the second carrier wave oscillating unit.

15. An electronic apparatus according to claim 12, **characterized in that** the radio transmission unit includes a control unit that oscillates a reference signal; a first carrier wave oscillating unit that oscillates a carrier wave synchronizing with the reference signal; and a modulating unit that modulates the carrier wave, which is oscillated by the carrier wave oscillating unit, with the first category information in synchronization with the reference signal and converts the carrier wave into an electromagnetic signal,
the second category information transmitted and received by the wire transmission unit and the wire reception unit is the reference signal, and
the radio reception unit includes: a second carrier wave oscillating unit that oscillates a carrier wave synchronizing with the reference signal received by the wire reception unit; and a demodulating unit that demodulates the first category information using the carrier wave oscillated by the second carrier wave oscillating unit in synchronization with the reference signal received by the wire reception unit.

16. An electronic apparatus according to claim 12, **characterized in that** the radio transmission unit modulates the first category information according to phase modulation and generates carrier wave information for modulation and demodulation from the reference signal transmitted by wire as the second category information, and a transmission packet transmitted by the radio transmission unit is synchronized with the reference signal transmitted by wire as the second category information.

17. An electronic apparatus according to claim 12, **characterized in that** the radio transmission unit modulates the first category information according to spectrum spread modulation and the radio reception unit subjects the first category information to spectrum inverse spread, demodulates the first category information, generates synchronization information of a spread code and carrier wave information for modulation and demodulation from the reference signal transmitted by wire as the second category information, and synchronizes the synchronization information and the carrier wave information.

18. An electronic apparatus according to claim 12, **characterized in that** the radio transmission unit modulates the first category information according to UWB modulation, and synchronization information of a pulse template for demodulation is generated from the reference signal transmitted by wire as the second category information and synchronized.

19. An electronic apparatus according to any one of claims 2 to 18, **characterized in that** the second category information includes synchronization information or carrier wave information concerning radio communication of the first category information.

20. An electronic apparatus according to any one of claims 2 to 19, **characterized in that** the second category information includes information indicating a reception state of the first category information and is transmitted from the reception side to the transmission side of the first category information.

21. An electronic apparatus according to any one of claims 2 to 20, **characterized in that** the first category information includes at least one of image data, text data, and sound data.

22. An electronic apparatus according to any one of claims 2 to 21, **characterized by** comprising:
a storing unit that stores the first category information;
a display that displays the first category information;
a display control unit that reads out the first category information from the storing unit according to a driving order of the display and outputs the first category information; and
a display driving unit that drives the display on the basis of the first category information read out by the display control unit.

23. An electronic apparatus according to any one of claims 2 to 22, **characterized by** comprising:
an imaging device; and
imaging control means that reads out an image signal photographed by the imaging device as the first category information and outputs the image signal.

24. An electronic apparatus according to any one of claims 2 to 23, **characterized in that** the electronic apparatus transmits information transmitted between an electronic circuit on an integrated circuit and the outside of the integrated circuit as the first category information by radio.

25. An electronic apparatus according to any one of claims 2 to 23, **characterized by** comprising:
a display unit;
a speaker unit, and
a data source unit that generates image data to be displayed on the display unit and acoustic data for driving the speaker unit, and in that
the electronic apparatus transmits the image data and the acoustic data, which are transmitted between the display unit or the speaker unit and the data source unit, as the first category information by radio.

26. A radio communication terminal **characterized by** comprising:
a first housing unit;
a second housing unit coupled to the first housing unit;
a coupling unit that couples the first housing unit and the second housing unit such that a positional relation between the first housing unit and the second housing unit can be changed;
an antenna for external radio communication mounted on the first housing unit or the second housing unit;
an external radio communication control unit that is mounted on the first housing unit and mainly manages control of external radio communication performed via the antenna for external radio communication;
a display unit mounted on the second housing unit;
a first antenna for internal radio communication mounted on the first housing unit;
a second antenna for internal radio communication mounted on the second housing unit;
a first internal radio communication control unit that is mounted on the first housing unit and manages control of internal radio communication performed via the first antenna for internal radio communication;
a second internal radio communication control unit that is mounted on the second housing unit and manages control of internal radio communication performed via the second antenna for internal radio communication; and
a wire communication unit that is mounted on the first housing unit or the second housing unit and exchanges a part of information, which is transmitted through the internal radio communication, by wire.
